# EUROPÄISCHE PATENTSCHRIFT

(11) **EP 4 080 376 B1**
(45) Veröffentlichungstag und Bekanntmachung des Hinweises auf die Patenterteilung: **17.06.2026**
(21) Anmeldenummer: 21170144.6
(22) Anmeldetag: 23.04.2021
(51) Int. Cl.: G06F 16/21

(54) **LISTENBASIERTE DATENSUCHE MIT APPEND-ONLY-DATENSTRUKTUR**
LIST-BASED DATA SEARCH WITH APPEND-ONLY DATA STRUCTURE
RECHERCHE DE DONNÉES BASÉE SUR UNE LISTE À STRUCTURE DE DONNÉES APPEND-ONLY

(43) Veröffentlichungstag der Anmeldung: 26.10.2022
(73) Patentinhaber: Cortex Innovations GmbH, 99707 Kyffhäuserland OT Bendeleben (DE)
(72) Erfinder: Palm, Peter, 30916 Isernhagen (DE)
(74) Vertreter: Richardt Patentanwälte PartG mbB

(56) Entgegenhaltungen:
- US-B2- 9 189 506
- YINGJUN WU ET AL: "An empirical evaluation of in-memory multi-version concurrency control", PROCEEDINGS OF THE VLDB ENDOWMENT; [ACM DIGITAL LIBRARY], ASSOC. OF COMPUTING MACHINERY, NEW YORK, NY, vol. 10, no. 7, March 2017 (2017-03-01), pages 781 - 792, XP058327797, ISSN: 2150-8097, DOI: 10.14778/3067421.3067427
- BARSKY MARINA ET AL: "Online update of B-trees", CIKM'10, PROCEEDINGS OF THE 19TH INTERNATIONAL CONFERENCE ON INFORMATION & KNOWLEDGE MANAGEMENT AND CO-LOCATED WORKSHOPS : OCTOBER 26 - 30, 2010, TORONTO, ONTARIO, CANADA, ACM, NEW YORK, NY, 26 October 2010 (2010-10-26), pages 149 - 158, XP058598359, ISBN: 978-1-4503-0099-5, DOI: 10.1145/1871437.1871460
- GOETZ GRAEFE: "B-tree indexes for high update rates", SIGMOD RECORD., vol. 35, no. 1, March 2006 (2006-03-01), US, pages 39 - 44, XP055249332, ISSN: 0163-5808, DOI: 10.1145/1121995.1122002
- ARNOLDREINHOLD ET AL: "Append-only", WIKIPEDIA, 13 April 2021 (2021-04-13), pages 1 - 3, XP055885099, Retrieved from the Internet <URL:https://en.wikipedia.org/w/index.php?title=Append-only&oldid=1017496004> [retrieved on 20220128]
- AVDLCZ ET AL: "Blockchain", WIKIPEDIA, 22 April 2021 (2021-04-22), pages 1 - 27, XP055885103, Retrieved from the Internet <URL:https://en.wikipedia.org/w/index.php?title=Blockchain&oldid=1019311207> [retrieved on 20220128]

## Beschreibung

### Gebiet

Die Erfindung betrifft ein Verfahren und System zur Speicherung von Daten und zur Durchführung effizienter Suchen in den Daten.

### Stand der Technik

Im Stand der Technik sind verschiedene Datenbankmanagementsysteme (DBMS) zur Speicherung, Verwaltung und Verarbeitung von Daten bekannt. Die wesentliche Aufgabe von DBMSs ist es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Grundlage für die Strukturierung der Daten und ihrer Beziehungen zueinander in einer von einem herkömmlichen DBMS verwalteten Datenbank ist das Datenbankmodell, das durch den DBMS-Hersteller festgelegt wird. Je nach Datenbankmodell muss das Datenbankschema an bestimmte Strukturierungsmöglichkeiten angepasst werden. Zu den bekannten heute verwendeten Datenbankmodellen gehören hierarchische Modelle, netzwerkartige Modelle, relationale (in Tabellen organisierte) Modelle, objektorientierte Modelle, dokumentorientierte Modelle sowie Mischformen dieser Modelle. Außerdem wird klassischerweise unterschieden zwischen DBMSs, die optimiert sind für die effiziente Beantwortung vieler kleine Abfragen (OLTP) oder lang andauernder Auswertungen (OLAP).

Das wesentliche Problem beim Umgang mit Big Data ist ein Ressourcenproblem. Denn je größer das Datenvolumen ist, desto mehr Ressourcen werden in Form von Speicher, Prozessoren und Festplatten benötigt.

Bei der Erstellung einer Datenbank und der Definition der auf dieser durchzuführenden Abfragen und Analysen besteht oft ein Zielkonflikt zwischen der Komplexität der unterstützten Datenbanksuchabfragen und der Geschwindigkeit der Suche. Zwar gibt es DBMSs, die komplexe Suchanfragen unter Berücksichtigung zeitlicher, inhaltlicher und/oder struktureller Suchkriterien erlauben. Oftmals verfügen diese DBMSs über Module ("query planner"), die die zeitliche Ausführung komplexer, verschachtelter Anfragen auf mehreren Tabellen und die Aggregation der aus mehreren Tabellen gewonnenen Teilergebnisse automatisch planen und orchestrieren. Diese Module gelangen bei sehr komplexen Anfragen und/oder bei einer großen Anzahl an Tabellen jedoch schnell an ihre Grenzen. Die Menge der zu verarbeitenden und in den Arbeitsspeicher zu ladenden Daten kann bei vielen Anwendungen im Bereich "Big Data" immens sein und in der Praxis eine Auswertung großer, komplex strukturierter Datensätze unmöglich machen. Zumindest sind oft nicht alle Formen von Datenanalysen möglich, die für die jeweilige Aufgabenstellung wünschenswert wären. Zu den Bereichen, die besonders von den Beschränkungen aktueller DBMSs betroffen sind, gehören z.B. der Bereich Internet-of-Things (IOT), Genomanalysen, Analysen von Spektraldaten im Bereich der Astronomie, Bewegungsdaten von Taxi- Bus- und Bahnunternehmen, Fluggesellschaften und Mobilfunkunternehmen aber auch viele andere Bereiche.

Durch Beschränkung der unterstützten Suchanfragen auf Anfragen geringerer Komplexität sowohl was die Suchkriterien als auch die auszugebenden Ergebnisse angeht kann die Geschwindigkeit herkömmlicher Datenbanksysteme oftmals in begrenztem Umfang erhöht werden. Doch dies bewirkt zum einen, dass wichtige Analysen auf großen Datensätzen nicht durchgeführt werden können und kann in vielen Fällen sogar zu einem irreversiblen Datenverlust führen, da die Rohdaten auf eine Tabellenstruktur reduzierter Komplexität abgebildet werden, wobei komplexe Interrelationen und Metadaten, die in diesen Tabellenstrukturen nicht abbildbar sind, verloren gehen.

Somit sind bestehende DBMS oftmals durch strukturelle Inflexibilität, schlechte Erweiterbarkeit und/oder schlechte Performance insbesondere bei der Verarbeitung von komplexen Anfragen bezüglich einer großen Menge an Datenobjekten mit sehr vielen verschiedenen Attributen (keys) und entsprechenden Werten gekennzeichnet. Falls nachträglich weitere und anders strukturierte Daten in der Datenbank gespeichert werden müssen, ist oftmals eine inhaltlich sinnvolle, performante und ressourcenschonende gemeinsame Abfrage und Analyse von bestehenden und neu hinzugefügten Daten nicht möglich.

Die Herausforderung von Big Data an die Unterstützung komplexer Analysen und Datenabfragen gilt nach wie vor als ungelöst, ein Problem, das angesichts des in den kommenden Jahren weiter wachsenden Datenvolumens absehbar größer wird. YINGJUN WU ET AL: "An empirical evaluation of in-memory multiversion concurrency control", PROCEEDINGS OF THE VLDB ENDOWMENT; [ACM DIGITAL LIBRARY], ASSOC. OF COMPUTING MACHINERY, NEW YORK, NY, Bd. 10, Nr. 7,1. März 2017 (2017-03-01), Seiten 781-792, XP058327797, ISSN: 2150-8097, 001: 10.14778/3067421.3067427 beschreiben eine Studie zu Multiversion concurrency control (MVCC), einem in modernen Datanbankmanagementsystemen populären Transaktionsmanagementschema. Um die Funktionsweise von MVCC bei der Transaktionsverarbeitung zu untersuchen, wurde eine ausführliche Studie zu vier wesentlichen Designentscheidungen von MVCC durchgeführt. Diese wurden in einem In-Memory Datenbankmanagementsystem implementiert und auf Basis von OLTP Workloads bewertet.

US Patent US 9 189 506 B2 (GAO YING MING [CN]; HUO JIA [CN] ET AL.), 17. November 2015 beschreibt die verzögerte Aktualisierung von Datenbankindexen. Neue Indexdaten werden in einem separaten "Service Index" gespeichert und werden zum Zeitpunkt der Bearbeitung einer Abfrage mit den Daten des Hauptindex zusammengeführt.

### Zusammenfassung

Der Erfindung liegt die Aufgabe zugrunde, ein verbessertes Verfahren und System zur Speicherung von Daten und zur Durchführung von Datenbankabfragen bereitzustellen in einer Weise, dass diese die oben genannten Probleme nicht oder in einem geringeren Maße aufweisen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein computerimplementiertes Verfahren zur Durchführung einer Datenbankabfrage in einer Datenbank. Die Datenbank beinhaltet zu einem ersten Zeitpunkt, der als "jüngster Konsolidierungszeitpunkt" bezeichnet wird, mehrere logische Datensätze. Jeder logische Datensatz beinhaltet eine Datensatz-ID sowie ein oder mehrere Feldbezeichner-Datenwert-Paare. Die Datensätze sind physisch in Form von feldspezifischen Datenwertlisten gespeichert. Das Verfahren umfasst nach dem jüngsten Konsolidierungszeitpunkt:
- Empfang von Anweisungen zur Änderung von Datenwerten von Feldern mehrerer der Datensätze;
- Speichern der Anweisungen in einer Append-Only-Datenstruktur ohne die Änderungen an den feldspezifischen Datenwertlisten durchzuführen, wobei jeder Eintrag in der Append-Only-Datenstruktur - hier als AOD-Eintrag bezeichnet, zumindest diejenigen der Feldbezeichner-Datenwertpaare eines der Datensätze beinhaltet, die gemäß einer der Änderungsanweisungen geändert werden sollen;

- für jeden der Datensätze, für welchen die Datenbank nach dem jüngsten Konsolidierungszeitpunkt ein oder mehrere Anweisungen zur Änderung von Datenwerten empfängt, Speichern der Adresse des jüngsten der gespeicherten AOD Einträge, die eine Änderung dieses Datensatzes spezifizieren, verknüpft mit der Datensatz-ID dieses Datensatzes, in einer Adresszuweisungstabelle, wobei die Verknüpfungen in der Adresszuweisungstabelle automatisch aktualisiert wird; und
- Durchführung einer Datenbankabfrage, wobei die Datenbankabfrage umfasst:
   i. Durchsuchen der feldspezifischen Datenwertlisten, um IDs von Datensätzen, deren Inhalt ganz oder teilweise aufgrund einer Passung mit ein oder mehreren feldspezifischen Suchwerten zurückgegeben werden soll, zu identifizieren;
   ii. Zugriff auf die Adresszuweisungstabelle, um Adressen von AOD Einträgen zu identifizieren, die einer der in i) identifizierten Datensatz-IDs zugewiesen sind,
   iii. Zugriff auf die identifizierten Adressen der AOD Einträge; und
   iv. Verwendung der in diesen identifizierten AOD Einträgen enthaltenen Änderungsangaben, um die in Schritt i) ermittelten Datensatz-IDs um Feldbezeichner-Datenwertpaare zu ergänzen und auszugeben.

Dies kann aus mehreren Gründen vorteilhaft sein:
Die Datenbankabfrage wird auf zwei unterschiedlichen Datenstrukturen ausgeführt in einer Weise, dass auch komplexeste Analyseanfragen mit hoher Geschwindigkeit durchgeführt und komplette Ergebnisdatensätze schnell ausgegeben werden können. Zunächst wird nämlich die Datenbankabfrage in Schritt i) auf den feldspezifischen Listen durchgeführt. Dieser Schritt dient zunächst nur dazu, um IDs von Datensätzen, deren Inhalt ganz oder teilweise aufgrund einer Passung mit ein oder mehreren feldspezifischen Suchwerten zurückgegeben werden soll, zu identifizieren. In der Regel benötigt die Software oder der Nutzer, der die Datenbankabfrage angestoßen hat, nicht nur die Identifikatoren, sondern auch die Attribute (feldbezogene Datenwerte), die einen Datensatz erst inhaltlich charakterisieren. Im Stand der Technik wird in der Regel die Datenbankabfrage bereits so formuliert, dass diese die zurückzugebenden Datensätze einschließlich deren Attribute in einem Arbeitsschritt ermittelt und zurückgibt. Entsprechend komplex sind auch die Datenbankabfragen, die sich oft über mehrere Tabellen erstrecken und verschiedene JOIN Operationen enthalten. Aufgrund der Komplexität konventioneller Datenbankabfragen müssen oftmals mehrere Tabellen geladen und ausgewertet werden und die Datenbankabfragen sind wenig Performanz bzw. ab einer gewissen Komplexität unmöglich. Gemäß Ausführungsformen der Erfindung dient die Analyse der physischen Träger der Attribute der Datensätze, hier der feldspezifischen Datenwertlisten, jedoch lediglich der Ermittlung von Datensatz-IDs, die zurückgegeben werden sollen. Sie dient nicht der Ermittlung von Attributen dieser Ergebnisdatensätze. Erfindungsgemäß werden nämlich die feldbezogenen Datenwerte der zurückzugebenden Datensätze nicht durch Analyse der feldspezifischen Datenwertlisten ermittelt, sondern durch Verwendung zweier spezieller Datenstrukturen, nämlich der Append-Only-Datenstruktur sowie der Adresszuweisungstabelle.

Bei der Append-Only-Datenstruktur handelt es sich eine Datenstruktur, die aus mehreren Einträgen besteht, die sequenziell fortgeschrieben werden. Eine nachträgliche Löschung oder Änderung oder Umgruppierung der einzelnen AOD-Einträge ist nicht möglich. Jeder AOD-Eintrag spezifiziert eine Änderung von ein oder mehreren Datenwerten von ein oder mehreren Feldern der logischen Datensätze.

Diese Append-Only-Datenstruktur ist funktional eng gekoppelt an die Adresszuweisungstabelle: die Adresszuweisungstabelle enthält nämlich für jeden der logischen Datensätze eine Zeile mit der ID dieses Datensatzes. Die ID dieses Datensatzes ist in der Adresszuweisungstabelle mit genau eine Adresse verknüpft gespeichert, wobei diese eine Adresse die Adresse des jüngsten AOD-Eintrags ist, der eine Änderung dieses Datensatzes spezifiziert.

Um die in Schritt i) ermittelten Datensätze nun mit aktuellen Datenwerten zu versehen und auszugeben, greift ein die Datenbank verwaltendes software-und/oder hardwarebasiertes Datenverwaltungs- und Suchsystem (DVS-System) zunächst auf die Adresszuweisungstabelle zu.

Die Adresszuweisungstabelle enthält für jeden der logischen Datensätze genau einen Eintrag (entspricht z.B. genau einer Zeile der Tabelle) mit der ID dieses Datensatzes. Die ID jedes logischen Datensatzes ist in der Adresszuweisungstabelle mit genau einer Adresse eines AOD-Eintrags verknüpft gespeichert, wobei diese eine Adresse die Adresse des jüngsten AOD-Eintrags ist, der eine Änderung dieses Datensatzes spezifiziert.

Gemäß manchen Ausführungsformen der Erfindung ist der Zugriff auf die Adresszuweisungstabelle zur Ermittlung desjenigen Eintrags in der Adresszuweisungstabelle, der sich auf die ID eines bestimmten logischen Datensatzes bezieht (also z.B. auf die ID des Datensatzes, der zurückgegeben werden soll) wie folgt implementiert: Das DVS-System ist dazu konfiguriert, die IDs der logischen Datensätze, die von dem DVS-System verwaltet und in den Listen verteilt gespeichert sind, so zu erzeugen, dass jede Datensatz-ID den Offset, den der eine diesem Datensatz zugehörige Eintrag ("Zeile") in der Adresszuweisungstabelle hat, explizit oder implizit spezifiziert. Die Datensatz-IDs können insbesondere numerische Werte sein. Eine explizite Spezifikation des Offsets eines Eintrags in der Adresszuweisungstabelle kann z.B. die Spezifikation der Speicheradresse des Eintrags in der Adresszuweisungstabelle relativ zu einer Basisadresse der Adresszuweisungstabelle sein. Eine implizite Spezifikation kann z.B. die Spezifikation der Nummer dieses Eintrags ("Zeilennummer") in der Adresszuweisungstabelle sein, wobei eine Multiplikation dieser Eintragsnummer mit der vordefinierten Speichergröße jedes Eintrags der Adresszuweisungstabelle den Gesamtoffset dieses Eintrags relativ zur Basisadresse der Adresszuweisungstabelle ergibt.

Das DVS-System ist z.B. dazu konfiguriert, die Adresszuweisungstabelle so zu erzeugen, dass die Position der Einträge (Zeilen) innerhalb der Adresszuweisungstabelle unveränderlich sind und der Offset dieser Einträge identisch ist zu der ID des diesem Eintrag zugehörigen logischen Datensatzes. Das DVS-System kann entsprechend dazu konfiguriert sein, beim Zugriff auf die Adresszuweisungstabelle zur Ermittlung des einen Eintrags für einen bestimmten logischen Datensatz die Position dieses Eintrags auf Basis der logischen Datensatz-ID zu berechnen, z.B. indem die Datensatz-ID als Offset des Eintrags mit einer festgelegten Speicherplatzgröße jedes Eintrags in der Adresszuweisungstabelle multipliziert wird. Das so erhaltene Produkt gibt die Position des Eintrags in der Adresszuweisungstabelle dieses einen Datensatzes ausgehend von einer Basisadresse der Adresszuweisungstabelle an.

Beispielsweise ist das DVS-System dazu ausgebildet, bei der Erzeugung eines neuen logischen Datensatzes die ID so zu erzeugen und auch einen neuen Eintrag/eine neue Zeile in der Adresszuweisungstabelle so zu erzeugen, dass der Offset dieses neuen Eintrags in der Adresszuweisungstabelle identisch ist mit der ID des neuen logischen Datensatzes. Beispielsweise kann eine logische ID ein numerischer Datenwert sein, oder eine Speicheradresse.

Beispielsweise könnte die Basisadresse der Adresszuweisungstabelle die Speicheradresse #23862382844 haben. Jede Zeile könnte einen vordefinierten Speicherplatz von z.B. 16 Byte benötigen. Dann könnte das DVS System die Speicheradresse des Eintrags für den logischen Datensatz mit z.B. der ID 1008 wie folgt berechnen: Basisadresse + (Speichergröße eines Adresszuweisungstabelleneintrags x ID des logischen Datensatzes) = #23862382844 + 16Byte x 1008. Die errechnete Speicheradresse wird hier fiktiv als #23862992849 bezeichnet.

Gemäß einer anderen, expliziten Implementierungsvariante wäre die logische ID des Datensatzes identisch zu der Speicheradresse des entsprechenden Eintrags in der Adresszuweisungstabelle, also z.B. #23862992849 anstatt "1008" im oben genannten Beispiel.

Gemäß Ausführungsformen der Erfindung ist also die Verwaltung der logischen Datensätze und der Einträge in der Adresszuweisungstabelle durch das DVS-System eng aneinander gekoppelt, sodass die logischen Datensätze immer so erzeugt und mit der Adresszuweisungstabelle synchronisiert werden, dass die ID jedes logischen Datensatzes explizit oder implizit die Speicheradresse des einen Eintrags in der Adresszuweisungstabelle spezifiziert, in welchem der ID dieses logischen Datensatzes der Adresse des AOD-Eintrags mit den jüngsten Änderungen dieses Datensatzes zugewiesen ist. Gemäß Ausführungsformen wird bei der Bearbeitung von Datenbankabfragen die logische ID der zurückzugebenden Datensätze verwendet, um die Adresse des einen diesem Datensatz zugehörigen Eintrags in der Adresszuweisungstabelle zu ermitteln und direkt auf diese Adresse zuzugreifen.

Diese Art der Ermittlung der Zeile in der Adresszuweisungstabelle, welche die ID des auszugebenden Datensatzes enthält, benötigt wenig Arbeitsspeicher und wenig CPU-Leistung, denn das DVS System kann sofort und unmittelbar oder ggf. nach einer einfachen und sehr schnell ausführbaren Multiplikation auf den entsprechenden Eintrag in der Adresszuweisungstabelle zugreifen. Ein Durchsuchen der Adresszuweisungstabelle ist nicht erforderlich. Ausgehend von diesem Eintrag in der Adresszuweisungstabelle kann das DVS-System direkt auf den relevanten Eintrag in der AOD-Datenstruktur zugreifen, weil die Adresse dieses AOD-Eintrags mit den jüngsten Änderungen ja in dem zuvor ermittelten Eintrag der Adresszuweisungstabelle spezifiziert ist. Falls es weitere AOD-Einträge gibt, die weitere, länger zurückliegende Änderungen dieses Datensatzes spezifizieren, so können diese ebenfalls sehr schnell durch direkten Speicherzugriff ermittelt und gelesen werden, weil vorzugsweise jeder AOD-Eintrag auf die Adresse des jeweils jüngsten zurückliegenden AOD-Eintrags beinhaltet (zumindest dann, wenn es sich bei dem AOD Eintrag um einen Eintrag handelt, der nicht "ladungsvollständig" ist, der also nicht sämtliche aktuellen Feldwerte des jeweiligen Datensatzes enthält.

Das DVS-System springt also zur Ausgabe von Datensätzen als Ergebnis von jeglicher Art von Datenbankabfrage immer nur von Adresse zu Adresse und muss keine komplexen JOINS oder SELECTS über mehrere Tabellen durchführen. Somit kann eine immense Beschleunigung auch komplexester Datenbankabfragen bewirkt werden, denn wenn die IDs der Datensätze erst einmal ermittelt sind - was auf Basis von redundanzfreien Listen sehr schnell erfolgen kann - läuft die Ausgabe der kompletten Datensätze im Wesentlichen oder ausschließlich auf Basis von Sprungadressen, also ohne sequenzielle Suchen in Datenstrukturen und/oder komplexen JOIN Operationen von Tabellen.

Beispielsweise kann dieser AOD Eintrag sämtliche aktuellen Datenwerte aller Felder des besagten Datensatzes beinhalten, sodass mit dem Zugriff auf dieses eine AOD Element bereits sämtliche aktuellen Datenwerte dieses Datensatzes ermittelt und zurückgegeben werden können.

Es ist auch möglich, dass der AOD Eintrag nur aktuelle Datenwerte von einem oder mehreren, jedoch nicht allen Datenwerten aller Felder dieses Datensatzes enthält (hier auch als "unvollständiger AOD Eintrag" bezeichnet). Erfindungsgemäß beinhalten "unvollständige" AOD Einträge jedoch eine Adresse, die auf den nächst-älteren AOD Eintrag verweist, der sich auf den gleichen Datensatz bezieht. Diese Adresse, auch Sprungadresse genannt, erlaubt es dem DVS-System, direkt über die jeweils in den AOD Einträgen spezifizierten Adressen von AOD-Eintrag zu AOD Eintrag in der AOD-Datei zu "springen", um dadurch sämtliche Änderungen zu rekonstruieren, die diesen bestimmten Datensatz betreffen. Dies kann so lange durchgeführt werden, bis für sämtliche Felder des Datensatzes ein aktueller Datenwert ermittelt wurde.

Somit kann ausgehend von den in Schritt i) ermittelten Datensatz-IDs die Feldwerte dieser Datensätze auf höchst effiziente und schnelle Weise ermittelt werden, wobei nur ein Bruchteil der CPU und/oder Arbeitsspeicher-Ressourcen benötigt werden, die von herkömmlichen DBMS zur Ermittlung und Ausgabe komplexer Ergebnisdatensätze benötigt wird, weil ausgehend von den Datensatz-IDs aus Schritt i) nur noch ID-basierte Treffer in der Adresszuweisungstabelle ermittelt und davon ausgehend ein oder mehrere Speicheradressen von ein oder mehreren AOD Einträgen gezielt ausgelesen werden müssen. Dies ist sehr effizient, weil z.B. kein linearer Scan der Append-Only-Datenstruktur erforderlich ist, sondern direkt ein Lesezugriff, auf den durch die Adresse bezeichneten AOD-Eintrag erfolgen kann.

Gemäß einer Ausführungsform kann die Adresse eines AOD-Eintrags beispielsweise bestehen aus einer physikalischen Adresse des ersten AOD-Eintrags der Append-Only-Datenstruktur in Kombination mit einem Offset, wobei der Offset die Adresse des AOD-Eintrags relativ zu dem ersten AOD-Eintrag der Append-Only-Datenstruktur ist.

In herkömmlichen DBMS wurde nicht unterschieden zwischen der Ermittlung der Datensatz-IDs der zurückzugebenden Menge and Datensätzen und den ebenfalls zurückzugebenden Attributen dieser Datensätze. Vielmehr wurde in einer einzigen komplexen, in der Regel SQL basierten Anfrage, spezifiziert, welche Tabellen analysiert werden und welche Spalten dieser Tabellen dabei ausgewertet und/oder zurückgegeben werden sollten. Ausführungsformen der Erfindung erlauben es jedoch, die Datenbankabfragen zweistufig zu gestalten, wobei nur die Ermittlung der IDs der zurückzugebenden Datensätze auf den physischen Trägerstrukturen der Daten, hier also den feldwertspezifischen Listen, durchgeführt wird. Die Anreicherung der zurückzugebenden Datensätze mit deren Attributen basiert auf zwei speziellen Datenstrukturen, nämlich auf der beschriebenen Adresszuweisungstabelle und den Einträgen der Append-Only-Datenstruktur, auf deren Adresse die Einträge der Adresszuweisungstabelle verweist.

In einem weiteren vorteilhaften Aspekt kann die Datenbank auch sehr effizient genutzt und konsolidiert werden. Dadurch, dass zwischen dem ersten und einem späteren ("zweiten") Zeitpunkt die angefragten Änderungen nicht sofort in den feldspezifischen Listen gespeichert werden, sondern zunächst nur in der Append-Only-Datenstruktur in Form von AOD Einträgen (und zudem in sog. Positivlisten und Negativlisten) gespeichert werden, können Leseanfragen weiterhin ohne irgendwelche "Locks" auf den feldspezifischen Listen ausgeführt werden. Die feldspezifischen Listen repräsentieren also einen statischen, d.h., während des erste und des zweiten Zeitpunkts unveränderlichen Zustand. Leseanfragen können sehr effizient auf diesen feldspezifischen Listen ausgeführt werden, da die Listen nicht vor manchen Lesezugriffen zeitweise gesperrt werden müssen, um die Konsistenz der Abfragen zu gewährleisten.

Beispielsweise kann das DVS-System dazu konfiguriert sein, nur einen schreibenden Prozess und eine Vielzahl von parallel arbeitenden lesenden Prozessen auf der AOD-Datenstruktur zuzulassen. Es ist also möglich, ohne aus Datenkonsistenzgründen Locks einzuführen, den Inhalt der laufend ergänzten AOD-Datenstruktur von vielen lesenden Prozessen auszuwerten, um verschiedene Datenbankabfragen zu komplettieren. Logische Konflikte gibt es hier nicht, da es in der Natur der Append-Only Struktur liegt, dass der eine zur Ergänzung der Datenstruktur erforderliche schreibende Prozess und mehrere lesende Prozesse sich nicht gegenseitig behindern und es insbesondere nicht geschehen kann, dass zwei schreibende Prozesse gleichzeitig auf den gleichen Speicher zugreifen. Das Verfahren umfasst ferner eine Konsolidierung der seit dem jüngsten Konsolidierungszeitpunkt angewiesenen Änderungen durch Konsolidierung der feldspezifischen Datenwertlisten unabhängig von und/oder parallel zu der Durchführung von Datenbankabfragen auf den feldspezifischen Datenwertlisten. Die Konsolidierung erfolgt an einem zweiten Zeitpunkt, der als neuer Konsolidierungszeitpunkt bezeichnet wird.

Dies kann vorteilhaft sein, da die Speicherung der feldspezifischen Datenwerte der Datensätze in feldspezifischen Datenwertlisten sicherstellt, dass nur wenige Listenelemente während der Konsolidierung vor Zugriff temporär gesperrt werden müssen, um inkonsistente Abfrageergebnisse zu vermeiden. Wird beispielsweise ein völlig neuer Datenwert bezüglich eines Feldes ergänzt, also z.B. ein bisher unbekannter Vorname "Torben" in die für das Feld "Vorname" spezifische Datenwertliste verknüpft mit der ID des diesen Wert enthaltenden Datensatzes gespeichert, so enthält die Liste nur einen neuen Eintrag und die bisherigen Einträge müssen nicht gesperrt werden. Wird ein bestehender Datenwert eines Datensatzes geändert, also z.B. der tippfehlerbehaftete Vorname "Micchael" in einem bestimmten Datensatz zu "Michael" korrigiert, ändert sich an dem Eintrag des Datenwerts "Michael" nicht der Datenwert selbst, sondern es werden nur diesem Datenwert zugewiesenen Datensatz-IDs um die ID des nun korrigierten Datensatzes ergänzt. Die Datenwerte der Vornamens-Liste können also während dieser Konsolidierung weiterhin analysiert und verarbeitet werden.

Bei konventionellen DBMS, soweit diese eine Konsolidierung einer Datenbank mit zwischengespeicherten Änderungen überhaupt unterstützten, ist es aufgrund der komplexen Tabellenstruktur mit vielfältigen Abhängigkeiten und logischen Constraints oft notwendig, mehrere Spalten oder gar Tabellen während der Konsolidierung komplett zu sperren, um die logische Konsistenz der Abfrageergebnisse sicherzustellen. Dies ist gemäß Ausführungsformen der Erfindung nicht erforderlich, da zum einen die feldspezifische Listenstruktur in Kombination mit der Adresszuweisungstabelle und der Append-Only-Datenstruktur komplexe Tabellenstrukturen und Constraints beim Datenbankdesign unnötig machen, und weil zum anderen bei vielen inhaltlichen Änderungen nicht die Datenwerte betroffen sind, sondern nur die Art und Anzahl der Datensatz-IDs, die diesen Datenwerten in den jeweiligen feldspezifischen Datenwertlisten zugewiesen sind. Bei den Constraints kann es sich z.B. um Bedingungen handeln, die zwingend vom Wert einer Variablen erfüllt werden müssen, damit der Wert in die Tabelle übernommen werden kann.

Alternativ dazu umfasst das Verfahren ferner eine Konsolidierung der seit dem jüngsten Konsolidierungszeitpunkt angewiesenen Änderungen durch Erzeugung konsolidierter Kopien der feldspezifischen Datenwertlisten unabhängig von und/oder parallel zu der Durchführung von Datenbankabfragen auf den feldspezifischen Datenwertlisten. Die Konsolidierung erfolgt an einem zweiten Zeitpunkt, der als neuer Konsolidierungszeitpunkt bezeichnet wird.

Die Vorteile dieser Ausführungsform entsprechen den Vorteilen der Ausführungsform, bei welcher die Konsolidierung direkt auf den bereits für die Datenbankabfrage analysierten Datenwertlisten ausgeführt wird, wobei die Vorteile sogar noch weitergehen, da eine Sperrung von Datenwerten oder Datensatz-ID-Zuweisungen komplett vermieden werden kann, da die Konsolidierung auf Kopien der feldspezifischen Datenwertlisten ausgeführt wird und nicht auf den für aktuelle Suchanfragen verwendeten feldspezifischen Datenwertlisten.

Nach Ausführungsformen der Erfindung umfasst das Verfahren eine Bereitstellung der feldspezifischen Datenwertlisten. Die Bereitstellung umfasst:
- Parsen von Rohdaten, um ursprüngliche Datensätze zu erzeugen, wobei jeder ursprüngliche Datensatz neben einer Datensatz-ID ein oder mehrere Paare von Feldbezeichnern und diesen zugewiesenen ursprüngliche Datenwerte umfasst;
- Speicherung von redundanzfreien, feldspezifischen ursprünglichen Datenwertlisten in der Datenbank, wobei jedem der ursprünglichen Datenwertlisten in einer der redundanzfreien ursprünglichen Datenwertlisten alle Datensatz-IDs derjenigen Datensätze zugewiesen sind, die diesen ursprünglichen Datenwert in dem einem Feld beinhalten, das von der ursprünglichen Datenwertliste repräsentiert wird;

- Erzeugen einer Mapping-Tabelle, die jedem der ursprünglichen Datenwerte der redundanzfreien ursprünglichen Datenwertlisten mindestens eine Mapping-ID zuweist, die keinem anderen der ursprünglichen Datenwerte zugewiesen ist;
- Transformation der ursprünglichen Datensätze in die mehreren logischen Datensätze und Transformation der redundanzfreien ursprünglichen Datenwertlisten in redundanzfreie feldspezifischen Datenwertlisten, wobei die Transformation das Ersetzen von ursprünglichen Datenwerten durch Mapping-IDs gemäß der Mappingtabelle umfasst, wobei die den Feldbezeichnern der Datensätze zugewiesenen Datenwerte die Mapping-IDs sind.

Beispielsweise kann es sich bei dem ursprünglichen Datenwert um einen String, z.B. um den Vornamen "Michael" handeln und bei der diesem ursprünglichen Datenwert zugewiesenen Mapping-ID um einen numerischen Wert wie z.B. "3493487879".

Gemäß anderen Ausführungsformen können die ursprünglichen Datenwerte direkt als die logischen Datenwerte verwendet werden und die feldspezifischen Listen sind in diesem Fall die feldspezifischen ursprünglichen Datenwertlisten.

Die Verwendung von Mapping-IDs anstelle von ursprünglichen Datenwerten bei der Erzeugung und Speicherung der feldspezifischen Liste, bei der Durchführung der Suche und der Auswertung von Suchwerten gegen feldspezifische Datenwerte hat den Vorteil, dass das Verfahren erheblich beschleunigt und der Ressourcenverbrauch minimiert wird: während die Länge der ursprünglichen Datenwerte, die z.B. in einem Parsing- und/oder Tokenisierungsschritt gewonnen werden, unvorhersehbar ist und die Speicherung der ursprünglichen Datenwerte, die z.B. als String bzw. Varchar Datentyp vorliegt viel Speicherplatz erfordert, kann die Länge der Mapping-IDs auf einen einheitlichen Wert festgelegt sein. Außerdem kann die Mapping-ID als numerischer Wert gespeichert sein, sodass Speicherverbrauch reduziert und die Verarbeitungsgeschwindigkeit im Vergleich zu Unicode-Strings erheblich erhöht werden kann.

Außerdem wird die Datenbank dadurch sicherer, denn die Datenwertlisten bestehen nur noch aus numerischen Mapping-IDs, die ohne Kenntnis der Mapping-Tabelle keine Rekonstruktion der ursprünglichen Datenwerte zulassen.

Im Folgenden werden zur Erläuterung der feldspezifischen Datenwerte der logischen Datenwerte in der Regel Beispiele verwendet, bei denen die Datenwerte ursprüngliche Datenwerte sind, also z.B. Unicode-Strings. Vorzugsweise sind die Datenwerte jedoch numerische Datenwerte, insbesondere Mapping-IDs, die einem ursprünglichen Datenwert in einer Mappingtabelle eindeutig zugewiesen sind. Je nach Ausführungsform kann die Mapping-Tabelle mehrere feldspezifische Mappingtabellen umfassen oder aus einer globalen Mapping-Tabelle bestehen, die sämtlichen in einem beliebigen Feld vorhandenen Datenwerten eine Mapping-ID zuweist.

Nach Ausführungsformen der Erfindung sind die Mapping-IDs Werte, deren Länge und/oder Art vorzugsweise in Abhängigkeit von der Prozessorarchitektur des zur Datenbanksuche verwendeten Computersystems ausgewählt sind. Insbesondere können die Mapping-IDs numerische Werte sein.

Beispielsweise können alle Mapping-IDs eine bestimmte Bitlänge (z.B. 32 Bit oder 64 Bit) haben, die der Registerlänge der verwendeten Prozessorarchitektur entspricht. Hierdurch kann die Geschwindigkeit der Datenverarbeitung weiter erhöht und der Ressourcenverbrauch reduziert werden.

Nach Ausführungsformen der Erfindung umfasst die Erzeugung der Mappingtabelle eine Analyse der Vorkommenshäufigkeiten der ursprünglichen Datenwerte in den ursprünglichen Datensätzen. Falls die Vorkommenshäufigkeit eines ursprünglichen Datenwerts in den ursprünglichen Datensätzen einen Grenzwert überschreitet, umfasst das Verfahren ein Zuweisen von mehreren unterschiedlichen Mapping-IDs zu diesem einen ursprünglichen Datenwert in der Mappingtabelle. Das Ersetzen der ursprünglichen Datenwerte bei der Transformation erfolgt so, dass der eine ursprüngliche Datenwert durch mehrere Mapping-IDs ersetzt und die ursprüngliche Auftretenshäufigkeit des einen ursprünglichen Datenwerts dadurch verschleiert wird.

Dies kann den Vorteil haben, dass ein Rückschluss von den Mapping-IDs auf die ursprünglichen Datenwerte auf Basis der Vorkommenshäufigkeit ausgeschlossen werden kann. Je nach Sprache bzw. Datensatz kommen bestimmte ursprüngliche Datenwerte, z.B. bestimmte Wörter, sehr häufig vor (im Deutschen z.B. Wörter wie "und", "ein", "eine" oder "das"), andere dagegen selten (z.B. "Schiffschraube"). Daher besteht, insbesondere wenn der Inhalt der Datenbank in etwa bekannt ist, eine gewisse Gefahr, dass von den feldspezifischen Listen auf die ursprünglichen Datensätze geschlossen werden kann auch dann, wenn diese Listen nur Mapping-IDs enthalten und die Mapping-Tabelle nicht bekannt ist, da die Vorkommenshäufigkeit der Datenwerte bzw. Mapping-IDs Hinweise auf die ursprünglichen Datenwerte gibt. Gemäß Ausführungsformen der Erfindung kann dies dadurch vermieden werden, dass unter Umständen auch mehrere verschiedene Mapping-IDs dem gleichen Datenwert zugewiesen werden, sodass die Auftretenshäufigkeit des Datenwerts in den ursprünglichen Datensätzen verschleiert wird. Beispielsweise könnte der ursprüngliche Datenwert "Michael" zunächst die Mapping-ID "9237923" zugewiesen haben. Wenn die Anzahl der ursprünglichen Datensätze, die einen bestimmten Datenwert (z.B. "Michael") in einem bestimmten Feld enthalten, einen Schwellenwert überschreitet (z.B. 1000 oder 10.000 etc. je nach Anwendung), wird das Auftreten dieses Datenwerts in jedem weiteren Datensatz so in den Datenwertlisten und der Mappingtabelle gespeichert, dass ab dem nächsten (z.B. 1001ten oder 10.001ten) Auftreten dieses Datenwerts in den Datensätzen eine neue Mapping-ID "23747283472 dem Datenwert "Michael" zugewiesen wird, und auch die feldspezifische Datenwertliste um diesen neuen Datenwert samt zugewiesenen Datensatz-IDs erweitert wird.

Erfindungsgemäß ist zumindest eine der Änderungsanweisungen eine Anweisung zum Ändern oder Löschen eines veralteten Datenwertes eines Feldes in zumindest einem der logischen Datensätze. Das Verfahren umfasst eine Speicherung der Datensatz-ID des zumindest einen Datensatzes in einer als Negativliste bezeichneten Liste von Datensatz-IDs. Die Negativliste ist verknüpft mit dem Feldbezeichner des einen Feldes und verknüpft mit dem gemäß der Änderungsanfrage zu ändernden oder löschenden Datenwerts in einer Datenstruktur gespeichert.

Die Durchführung der Datenbankabfrage umfasst für jeden der feldspezifischen Suchwerte:
- Prüfen, ob die Datenstruktur eine Negativliste enthält, die mit einem Datenwert und einem Feldbezeichner verknüpft gespeichert ist, die identisch zu dem feldspezifischen Suchwert und dem Feldbezeichner des Suchwerts sind;
- Falls dies der Fall ist, Berechnen einer Differenzmenge aller in Schritt i) für diesen feldspezifischen Suchwert ermittelten Datensatz-IDs und den Datensatz-IDs in der Negativliste; und
- Verwenden der Differenzmenge an Datensatz-IDs für die Schritte ii-iv.

Dies kann vorteilhaft sein, da hierdurch sichergestellt ist, dass Datensätze, die aufgrund von Änderungen von ein oder mehreren Datenwerten seit dem jüngsten Konsolidierungszeitpunkt eigentlich nicht mehr in der Datenbankanfrage gefunden werden sollten, aber zunächst in Schritt i) doch noch gefunden werden, da die Datenwertlisten die Änderungen noch nicht reflektieren, nicht zurückgegeben werden. Beispielsweise kann für jede der feldspezifischen Datenwertlisten eine Datenstruktur in der Datenbank erzeugt werden, die für jeden in dieser Datenwertliste enthaltenen Datenwert eine Liste derjenigen Datensatz-IDs in einer datenwertspezifischen "Negativliste" enthält, bei welchen dieser Wert in dem die Datenwertliste repräsentierenden Feld gelöscht wurde, sei dies durch Überschreibung des Datenwerts oder durch Löschen des Datenwerts oder durch Löschung des ganzen Datensatzes. Somit wird sichergestellt, dass die Datenbankabfrage auch noch nicht konsolidierte Löschungen von Datenwerten spezifischer Felder berücksichtigt.

Erfindungsgemäß ist zumindest eine der Änderungsanweisungen eine Anweisung zum Zuweisen eines neuen Datenwertes an ein Feld in zumindest einem der Datensätze. Das Verfahren umfasst ferner:
- Speicherung der Datensatz-ID des zumindest einen Datensatzes in einer als Positivliste bezeichneten Liste von Datensatz-IDs, wobei die Positivliste verknüpft mit dem Feldbezeichner des einen Feldes und verknüpft mit dem neuen Datenwert in einer Datenstruktur gespeichert ist;
- Falls der neue Datenwert einen veralteten Datenwert ersetzt, Speicherung der Datensatz-ID des zumindest einen Datensatzes in einer als Negativliste bezeichneten Liste von Datensatz-IDs, wobei die Negativliste verknüpft mit dem Feldbezeichner des einen Feldes und verknüpft dem veralteten Datenwert gespeichert ist.

Die Durchführung der Datenbankabfrage umfasst für jeden der feldspezifischen Suchwerte:
- Prüfen, ob die Datenstruktur eine Positivliste enthält, die mit einem Datenwert und einem Feldbezeichner verknüpft gespeichert ist, die identisch zu dem feldspezifischen Suchwert und dem Feldbezeichner des Suchwerts sind;
- Falls dies der Fall ist, Berechnen einer Vereinigungsmenge aller in Schritt i) für diesen feldspezifischen Suchwert ermittelten Datensatz-IDs und den Datensatz-IDs in der Positivliste, wobei falls der neue Datenwert einen veralteten Datenwert ersetzt, die Datensatz-IDs der Vereinigungsmenge um die Datensatz-IDs in der diesem Suchwert und dessen Feld zugewiesenen Negativliste reduziert werden, und
- Verwenden der Vereinigungsmenge an Datensatz-IDs für die Schritte ii-iv.

Dies kann vorteilhaft sein, da hierdurch sichergestellt ist, dass Datensätze, die aufgrund von Änderungen von ein oder mehreren Datenwerten seit dem jüngsten Konsolidierungszeitpunkt eigentlich zusätzlich in der Datenbankanfrage gefunden werden sollten, aber zunächst in Schritt i) noch nicht gefunden werden, da die Datenwertlisten die Änderungen noch nicht reflektieren, zurückgegeben werden. Beispielsweise kann für jede der feldspezifischen Datenwertlisten eine Datenstruktur in der Datenbank erzeugt werden, die für jeden in dieser Datenwertliste enthaltenen Datenwert eine Liste derjenigen Datensatz-IDs in einer datenwertspezifischen "Positivliste" enthält, bei welchen dieser Wert in dem die Datenwertliste repräsentierenden Feld gespeichert wurde, sei dies durch Überschreibung eines anderen, veralteten Datenwerts oder durch erstmaliges Speichern des Datenwerts in dem Feld dieses Datensatzes oder durch erstmalige Speicherung des ganzen Datensatzes. Somit wird sichergestellt, dass die Datenbankabfrage auch noch nicht konsolidierte Änderungen und Ergänzungen von Datenwerten spezifischer Felder bzw. neu geschriebene Datensätze berücksichtigt.

Nach Ausführungsformen der Erfindung enthält die Datenstruktur eine durchsuchbare, sortierte Anordnung von Elementen. Die Anordnung ist eine Liste von Listenelementen oder ein Suchbaum aus Knoten. Der Suchbaum kann insbesondere ein B-Baum sein. Die Anordnung repräsentiert jeweils eines der Felder. Die Elemente der Anordnung repräsentieren jeweils einem Datenwert aus einer nicht-redundanten Liste von Datenwerten, die in den Datensätzen enthalten sind und dem von der Anordnung repräsentierten Feld zugewiesen sind. Jedes der Elemente der Anordnung ist verknüpft mit einer leeren oder nicht-leeren Positivliste und/oder einer leeren oder nicht-leeren Negativliste gespeichert.

Die Implementierung der Positivlisten und/oder Negativlisten in sortierter, durchsuchbarer Form kann vorteilhaft sein, da hierdurch auch dynamisch geänderte und noch nicht konsolidierte Daten sehr schnell in der Datenbankabfrage berücksichtigt werden können.

Konventionelle Datenbanken ließen es bisher nicht zu, auch dynamische, nicht konsolidierte Daten, die noch nicht in die eigentlich zur Speicherung vorgesehene (Tabellen)Form überführt wurden, effizient abzufragen, da sich hier gleich mehrere Probleme ergaben: noch nicht konsolidierte, z.B. in einem Cache vorgehaltene neue Daten, werden durch die auf den eigentlichen zur Datenspeicherung verwendeten (Tabellen)strukturen arbeitenden Abfragen nicht erfasst. Außerdem liegen sie in einer Struktur im Cache vor, auf welchen diese Abfragen ohnehin nicht arbeiten könnten. Demgegenüber hat die Verwendung der Positiv- und Negativlisten in Kombination mit den übrigen beschriebenen Datenstrukturen, insbesondere den feldspezifischen Datenwertlisten, der Append-Only-Datenstruktur und der Adresszuweisungstabelle den Vorteil, dass Mengenoperationen auf Datensatz-IDs völlig ausreichend sind um die letztendlich in Antwort auf die Datenbankabfrage auszugebene Menge an Datensätzen zu erkennen: sowohl Schritt i) als auch die Suche in den Negativlisten und/oder Positivlisten liefert letztlich Datensatz-IDs zurück, die auf höchst effiziente Weite durch Mengenoperationen auf diesen Datensatz-IDs verarbeitet werden können.

Beispielsweise kann eine Suchanfrage den Suchwert "Michael" in Bezug auf das Feld "Vorname" beinhalten. Eine Suche mit dem Suchwert in der nichtredundanten Datenwertliste für das Feld "Vorname" ergibt in Schritt i) eine erste Menge an Datensatz-IDs, die Datensätze betreffen, die zum jüngsten Konsolidierungszeitpunkt den Wert "Michael" im Feld "Vorname" hatten.

Eine Auswertung der Negativliste des Datenwerts "Michael" für das Feld "Vorname" ergibt eine zweite Menge an Datensatz-IDs die Datensätze betreffen, in welchem der Vorname "Michael" seit dem jüngsten Konsolidierungszeitpunkt gelöscht wurde, z.B. wegen Überschreibung oder weil der ganze Datensatz gelöscht wurde. Da die in i) ermittelte erste Menge aber keine Änderungen ab dem jüngsten Konsolidierungszeitpunkt enthält, müssen die IDs der zweiten Menge von den IDs der ersten Menge abgezogen werden, d.h., es muss eine Differenzmenge gebildet werden, um zu verhindern, dass Datensätze ausgegeben werden, die mittlerweile den Suchwert "Michael" nicht mehr im Vornamensfeld enthalten.

Eine Auswertung der Positivliste des Datenwerts "Michael" für das Feld "Vorname" ergibt eine dritte Menge an Datensatz-IDs die Datensätze betreffen, in welchem der Vorname "Michael" seit dem jüngsten Konsolidierungszeitpunkt ergänzt wurde, z.B. wegen Überschreibung eines veralteten Werts oder weil der ganze Datensatz neu erstellt wurde. Da die in i) ermittelte erste Menge aber keine Änderungen ab dem jüngsten Konsolidierungszeitpunkt enthält, müssen die IDs der dritten Menge den IDs der ersten Menge hinzugefügt werden, d.h., es muss eine Vereinigungsmenge aus den Mengen ein und drei gebildet werden, um sicherzustellen, dass auch Datensätze ausgegeben werden, die den Suchwert "Michael" erst nach dem jüngsten Konsolidierungszeitpunkt im Vornamensfeld enthalten.

Somit ermöglicht es die Verwendung von Positivlisten und/oder Negativlisten, sehr schnell zweite und/oder dritte Mengen von Datensatz-IDs zu bestimmen, die per Mengenoperation mit der in Schritt i) ermittelten Menge an Datensatz-IDs aggregiert werden können, um die letztlich zurückzugebende Menge von Datensätzen zu ermitteln. Auch hier erfolgt die Anreicherung der auszugebenden Datensätzen mit Attributen (Datenwerten) über die Adresszuweisungstabelle und der Append-Only-Datenstruktur. Da bei der Ergänzung der auszugebenden Datensatz-IDs Sprungadressen zu AOD-Einträgen verwendet werden können, sind keine komplexen, tabellenübergreifenden JOINs oder ähnliche komplexe Operationen erforderlich, sodass die Ausgabe sehr effizient erfolgt.

Gemäß Ausführungsformen kann das DVS Datenbankabfragen nur auf den bereits konsolidierten Daten und/oder auf allen verfügbaren Daten einschließlich der dynamischen, d.h. noch nicht konsolidierten Daten, durchführen. In keinem Fall besteht die Gefahr von inkonsistenten Daten oder Zeitverzögerungen durch Locks.

Das DVS-System kann die Datenbankabfrage ausschließlich auf dem zum jüngsten Konsolidierungszeitpunkt konsolidierten Daten ausführen, indem es z.B. nur die Datenwertlisten und nicht die Positivlisten oder Negativlisten zur Ermittlung der Datensatz-IDs in Schritt i) verwendet und indem es nur AOD-Einträge zur Vervollständigung der in i) ermittelten und zurückzugebenden Datensätze auswertet, die über die Adresszuweisungstabelle für diese Datensatz-IDs ermittelt wurden und die älter sind als der jüngste Konsolidierungszeitpunkt.

Zusätzlich oder alternativ dazu kann das DVS-System die Datenbankabfrage auf der Gesamtheit der verfügbaren Daten, also auf den konsolidierten und den nochnicht-konsolidierten, Daten durchführen, indem es z.B. die Datenwertlisten und zusätzlich die Positivlisten und Negativlisten zur Ermittlung der Datensatz-IDs in Schritt i) verwendet und indem es alle AOD-Einträge zur Vervollständigung der in i) ermittelten und zurückzugebenden Datensätze auswertet, die über die Adresszuweisungstabelle für diese Datensatz-IDs ermittelt wurden.

Falls es sich bei den Datenwerten um Mapping-IDs handelt, werden gemäß Ausführungsformen die Datenwerte vor der Ausgabe durch die ursprünglichen Datenwerte ersetzt, die den Mapping-IDs in der Mappingtabelle zugewiesen sind.

Nach Ausführungsformen der Erfindung repräsentieren die Elemente der Anordnung jeweils einen Datenwert, der ein numerischer Wert ist und als Mapping-ID bezeichnet wird. Die Mapping-ID ist genau einem aus Rohdaten gewonnenen ursprünglichen Datenwerte in einer Mappingtabelle zugewiesen. Die numerischen Werte der Mapping-IDs in der Mapping-Tabelle sind vorzugsweise so gewählt, dass die numerische Ordnung der Mapping-IDs identisch ist zu einer Ordnungsrelation der ursprünglichen Datenwerte. Die Ordnungsrelation der ursprünglichen Datenwerte ist insbesondere eine alphabetische, numerische oder anderweitig definierte Ordnung. Die Sortierung der Elemente in der durchsuchbaren Anordnung entspricht einer Suchordnung, die auf der numerischen Ordnung der Mapping-IDs beruht.

Dies kann vorteilhaft sein, da die Auswertung der Negativlisten und/oder Positivlisten sehr effizient erfolgen kann. Beispielsweise ist bei einem B-Baum kein sequenzielles Suchen in den Knoten des Baums erforderlich, da die Knoten in dem Baum gemäß einer Ordnungsrelation angeordnet sind. Die Verwendung von sortierten Listen kann insbesondere dann vorteilhaft sein, wenn sich angesichts der geringen Zahl an Elementen der Aufbau eines Suchbaums zu aufwändig wäre. Nach Ausführungsformen der Erfindung können auch Kombinationen von Suchbäumen und Suchlisten erzeugt werden, wobei die Frage, ob eine Anordnung als Suchbaum oder Suchliste erzeugt wird dynamisch in Abhängigkeit von der Anzahl der zu durchsuchenden Datenwerte erzeugt wird, wobei ein Suchbaum nur erzeugt wird, wenn die Anzahl der zu durchsuchenden Datenwerte eine Mindestanzahl übersteigt.

Nach Ausführungsformen sind die feldspezifischen Datenwertlisten jeweils nichtredundante Datenwertlisten selektiv derjenigen Datenwerte, die dem Feld, das diese feldspezifische Datenwertliste repräsentiert, in den logischen Datensätzen zugewiesen sind. Jeder Datenwert in der jeweiligen feldspezifischen Datenwertliste ist einzigartig (daher "nicht-redundante" Listen) und ist verknüpft mit den Datensatz-IDs aller logischen Datensätze verknüpft gespeichert, die diesen Datenwert in dem von der feldspezifischen Datenwertliste repräsentierten Feld enthalten.

Die Datenwerte sind vorzugsweise in sortierter Form in den feldspezifischen Datenwertlisten gespeichert. Dies kann die Suchgeschwindigkeit von Datenbankabfragen in diesen Listen enorm erhöhen.

Ausführungsformen der Erfindung können den Vorteil haben, dass Datensätze, die durch sehr viele Datenwerte bezüglich vieler verschiedener Felder (die bestimmte Eigenschaften bzw. semantische Konzepte repräsentieren) beschrieben sind (auch Tausende pro Objekt), mit sehr kurzen Abfragezeit nach einer beliebigen Kombination verschiedenster feldspezifischer Datenwerte abgefragt werden können, ohne dabei einer Vorgabe folgen zu müssen, die von der ursprünglichen Struktur der Datenobjekte abhängt (wie das z.B. bei Suchanfragen in relationalen, indexbasierten DBMS im Hinblick auf die Tabellen- und Indexstrukturen in der Datenbank der Fall ist). In indexbasierten Systemen müssten dazu Indices aller möglichen Kombinationen aller Keys vorliegen. Die Menge der Indices in herkömmlichen indexbasierten DBMS wächst also mit der Fakultät der Keys!. Gerade bei einer Vielzahl verschiedener Objekttypen mit einer Vielzahl unterschiedlicher semantischer Konzepte wächst die Anzahl der benötigten Indices, um jegliche denkbare Kombination von Key-bezogenen Suchkriterien mit der Fakultät der Keys! Gemäß Ausführungsformen der Erfindung ist dagegen eine Erzeugung und Verwendung eines Index (im Sinne eines zusätzlich zu den eigentlichen Datenwerten erzeugten, durchsuchbaren Datenstruktur), nicht erforderlich, insbesondere nicht im statischen Teil der Datenbank. Zu jedem Feld korrespondiert eine nicht-redundante Datenwertliste, in welcher jeder Datenwert dieses Feldes - im Unterschied z.B. zu den datensatzbasierten Tabellen eines relationalen DBMS - nur einmal vorkommt. Somit kann gemäß Ausführungsformen der Erfindung eine Suche und/oder Analyse durchgeführt werden, ohne dass hierfür für die zu erwartenden Suchanfragen passende Indexstrukturen erzeugt werden müssten. Vielmehr kann die Suche direkt in den redundanzfreien feldspezifischen Datenwertlisten durchgeführt werden. Nach Ausführungsformen der Erfindung umfasst die Konsolidierung ein Empfangen eines Kommandos zur Konsolidierung der seit dem jüngsten Konsolidierungszeitpunkt angewiesenen Änderungen. Das Kommando wird an einem zweiten Zeitpunkt empfangen. In Antwort auf den Empfang des Kommandos umfasst das Verfahren:
- Umsetzung der in den zwischen dem jüngsten Konsolidierungszeitpunkt und dem zweiten Zeitpunkt angewiesenen Änderungen in den feldspezifischen Datenwertlisten oder deren Kopien, um die konsolidierten feldspezifischen Datenwertlisten zu erzeugen, sodass jedem Datenwert in jeder der konsolidierten feldspezifischen Datenwertlisten nur die IDs derjenigen logischen Datensätze zugewiesen sind, die diesen Datenwert auch nach Berücksichtigung der zwischen dem ersten und dem zweiten Zeitpunkt angewiesenen Änderungen in diesem Feld enthalten;
- Verwenden der konsolidierten feldspezifischen Datenwertlisten anstelle der bisher verwendeten feldspezifischen Datenwertlisten zur Durchführung von Datenbanksuchen nach dem zweiten Zeitpunkt;
- Verwenden des zweiten Zeitpunkts als den neuen jüngsten Konsolidierungszeitpunkt.

Beispielsweise können die feldspezifischen Datenwertlisten dadurch konsolidiert werden, dass die Datensatz-IDs, die in den Negativlisten enthalten sind, aus den entsprechenden feldspezifischen Listen entfernt werden, wo diese noch mit dem entsprechenden Datenwert verknüpft sind. Analog dazu kann die Konsolidierung beinhalten, dass die Datensatz-IDs in den Positivlisten in die entsprechenden feldspezifischen Listen ergänzt werden, sodass die IDs dieser Datensätze nunmehr auch mit den entsprechenden Datenwerten verknüpft sind.

Nach Ausführungsformen umfasst das Verfahren, in Antwort auf den Empfang des Kommandos und nach der Erzeugung der konsolidierten feldspezifischen Datenwertlisten, eine erneute Erzeugung der zumindest einen Datenstruktur. Die Erzeugung erfolgt auf Basis der konsolidierten feldspezifischen Datenwertlisten, wobei die Neuerzeugung der Datenstruktur umfasst eine Leerung der Positivlisten und/oder Negativlisten.

Dies kann vorteilhaft sein, da im Zuge der Konsolidierung der Inhalt der Positiv- und Negativlisten in den feldspezifischen Datenbanklisten umgesetzt ist, sodass an dem zweiten Zeitpunkt ein neuer konsolidierter Zustand der Daten in der Datenbank entsteht. Für die Anweisungen zur Durchführung von Datenwertänderungen, die nach dem zweiten Zeitpunkt und damit nach der Konsolidierung empfangen werden, werden die geleerten Positivlisten und Negativlisten erneut befüllt, und dies so lange, bis erneut eine Konsolidierung durchgeführt wird. Dies verhindert, dass die Positiv- und Negativlisten zu lange werden, was deren Nutzung und Verwaltung (z.B. Erzeugen und Aktualisierung B-Baum) rechnerisch verteuern würde.

Nach Ausführungsformen der Erfindung umfasst die Umsetzung der in den zwischen dem jüngsten Konsolidierungszeitpunkt und dem zweiten Zeitpunkt angewiesenen Änderungen im Zuge der Konsolidierung eine Ermittlung der zwischen dem jüngsten Konsolidierungszeitpunkt und dem zweiten Zeitpunkt angewiesenen Änderungen durch Analyse der Positivlisten und Negativlisten aller Datenwerte in allen von Änderungen betroffenen feldspezifischen Datenwertlisten.

Nach Ausführungsformen der Erfindung beinhalten zumindest einige der logischen Datensätze ein oder mehrere "ist-untergeordnet-zu" Felder, wobei jedes "ist-untergeordnet-zu" Feld konfiguriert ist zur Speicherung einer Datensatz-ID eines Datensatzes, welches diesem Datensatz übergeordnet ist. Das bedeutet, dass das DVS-System dazu konfiguriert ist, nur Datensatz-IDs in "ist-untergeordnet-zu" Felder von Datensätzen zu speichern, die die besagte Relation auch tatsächlich erfüllen.

Die feldspezifischen Datenwertlisten umfassen eine Datenwertliste, die das Feld "ist-untergeordnet-zu" repräsentiert, wobei die in dieser Datenwertliste gespeicherten Datenwerte IDs von logischen Datensätzen sind, die mindestens einem anderen logischen Datensatz untergeordnet sind. Jedem der Datenwerte in der "ist-untergeordnet-zu" Datenwertliste sind ein oder mehrere IDs der anderen, übergeordneten Datensätze zugewiesen. Die Datenbankabfrage enthält einen Vollständigkeits-Suchparameter, welcher spezifiziert, ob ergänzend zu den in der Datenbankabfrage ermittelten Datensätzen auch die diesen Datensätzen übergeordneten Datensätze ausgegeben werden sollen.

Die Durchführung der Datenbankabfrage umfasst:
- Feststellen, dass auch die übergeordneten Datensätze ausgegeben werden sollen;
- Durchsuchen der "ist-untergeordnet-zu" Datenwertliste mit den in Schritt i) ermittelten Datensatz-IDs, um ein oder mehrere IDs von Datensätzen zu erhalten, welche den in Schritt i) ermittelten Datensätzen übergeordnet sind;
- Zugriff auf die Adresszuweisungstabelle, um Adressen von AOD Einträgen zu identifizieren, die einer ID eines der ermittelten übergeordneten Datensätze zugewiesen sind; und
- Zugriff auf diese identifizierten Adressen der AOD Einträge, um die in der Datenbankabfrage ermittelten Datensätzen um Datensätze zu ergänzen, die diesen übergeordnet sind.

Dies kann vorteilhaft sein, da auch hierarchische Objektbeziehungen ausgegeben werden können, wobei die Hierarchie ausgehend von den Treffern in Schritt i) für den Suchwert in der Datensatzhierarchie nach oben hin um ein oder auch mehrere Ebenen erweitert wird. Falls ein Datensatz, dessen ID in Schritt i) ermittelt wird, mehreren anderen Datensätzen untergeordnet ist, z.B. weil es ein Fahrzeug ist, das mehrere Besitzer hat, können die übergeordneten Datensätze und deren Datenwerte gleich mitausgegeben werden, ohne dass hierfür eine komplexe und ineffiziente Datenbankabfrage über mehrere Tabellen ausgeführt werden müsste.

Nach Ausführungsformen der Erfindung beinhalten zumindest einige der logischen Datensätze ein oder mehrere "ist-übergeordnet-zu" Felder, wobei jedes der "ist-übergeordnet-zu" Felder konfiguriert ist zur Speicherung einer Datensatz-ID eines Datensatzes, welches diesem Datensatz untergeordnet ist.

Die feldspezifischen Datenwertlisten umfassen eine Datenwertliste, die das Feld "ist- übergeordnet-zu" repräsentiert. Die in dieser Datenwertliste gespeicherten Datenwerte sind IDs von logischen Datensätzen, die mindestens einem anderen logischen Datensatz übergeordnet sind, wobei jedem der Datenwerte in der "ist-übergeordnet-zu" Datenwertliste ein oder mehrere IDs der anderen, untergeordneten Datensätze zugewiesen sind.

Die Datenbankabfrage enthält einen Vollständigkeits-Suchparameter, welcher spezifiziert, ob ergänzend zu den in der Datenbankabfrage ermittelten Datensätzen auch die diesen Datensätzen untergeordneten Datensätze ausgegeben werden sollen. Die Durchführung der Datenbankabfrage umfasst:
- Feststellen, dass auch die untergeordneten Datensätze ausgegeben werden sollen;
- Durchsuchen der "ist- übergeordnet-zu" Datenwertliste mit den in Schritt i) ermittelten Datensatz-IDs, um ein oder mehrere IDs von Datensätzen zu erhalten, welche den in Schritt i) ermittelten Datensätzen untergeordnet sind;
- Zugriff auf die Adresszuweisungstabelle, um Adressen von AOD Einträgen zu identifizieren, die einer ID eines der ermittelten untergeordneten Datensätze zugewiesen sind,
- Zugriff auf diese identifizierten Adressen der AOD Einträge, um die in der Datenbankabfrage ermittelten Datensätzen um Datensätze zu ergänzen, die diesen untergeordnet sind.

Dies kann vorteilhaft sein, da auch hierarchische Objektbeziehungen ausgegeben werden können, wobei die Hierarchie ausgehend von den Treffern in Schritt i) für den Suchwert in der Datensatzhierarchie nach unten hin um ein oder auch mehrere Ebenen erweitert wird. Falls ein Datensatz, dessen ID in Schritt i) ermittelt wird, mehreren anderen Datensätzen übergeordnet ist, z.B. weil es der Datensatz eine Person repräsentiert, der mehrere Fahrzeuge gehören, wobei die Fahrzeuge als der Person untergeordnete Datensätze repräsentiert sind, können die untergeordneten Datensätze und deren Datenwerte gleich mitausgegeben werden, ohne dass hierfür eine komplexe und ineffiziente Datenbankabfrage über mehrere Tabellen ausgeführt werden müsste.

Ausführungsformen haben somit den Vorteil, dass dynamisch die Ergebnisse einer Datenbankabfrage derart erweitert werden können, dass neben den Datensätzen, die unmittelbar als Ergebnisse der Datenbankabfrage ermittelt werden (in Schritt i)) auch weitere Datensätze ermittelt und ausgegeben werden können, die diesen initialen Ergebnisdatensätzen übergeordnet oder untergeordnet sind. Eine Anpassung der Datenbankabfrage ist dabei nicht erforderlich. Das bedeutet, dass eine Datenbankabfrage, die nur die (mit Datenwerten angereicherten) Datensätze zurückgibt, die in Schritt i) ermittelt wurden, und eine Datenbankabfrage, die zusätzlich auch zu den Ergebnisdatensätzen untergeordnete und/oder übergeordnete Datensätze (samt deren Datenwerten) enthält, mit nahezu gleicher Geschwindigkeit durchgeführt werden können. Es ist weder nötig, dass hierfür die Anfrage angepasst und komplizierter (und damit weniger performant) gemacht wird, noch dass für verschiedene Anfrageoptionen (ohne ergänzende Datensätze, nur ergänzt um übergeordnete Datensätze, nur ergänzt um untergeordnete Datensätze, ergänzt um untergeordnete und übergeordnete Datensätze) als eigene SQL SELECT Anfragen vordefiniert werden müssten. Da die Ermittlung der übergeordneten und untergeordneten Datensätze letztlich über Mengenoperationen auf Datensatz-IDs beruht und die Ergänzung dieser Datensatz-IDs mit Datenwerten (Attributen) höchst performant über die Adresszuweisungstabelle und ein oder mehrere AOD-Einträge erfolgt, ist die Datenbank gemäß Ausführungsformen hoch flexibel, hoch skalierbar und kann auch komplexeste Abfragen auf sehr großen Datensätzen mit minimalem CPU und Speicherbedarf ausführen.

Nach Ausführungsformen können die oben dargestellten Schritte zur Ergänzung der initial in Schritt i) ermittelten Ergebnisdatensätze um weitere untergeordnete und/oder übergeordnete Datensätze auch iterativ ausgeführt werden, sodass auch mehrere Ebenen von über- und untergeordneten Datensätzen ausgegeben werden können. Hierbei können Datenbankabfragen höchster Komplexität performant bearbeitet werden, die in konventionellen DBMS gar nicht ausführbar wären, zumindest nicht innerhalb einer akzeptablen Laufzeit.

Nach Ausführungsformen verfügt das DVS-System über eine Schnittstelle, die es einem Anfragesystem (z.B. eine Software, ein anderes Computersystem, eine digitale Repräsentanz eines Nutzers etc.) erlaubt, nicht nur eine Datenbankabfrage zu spezifizieren und durchführen zu lassen, sondern auch festzulegen, ob die Datenbankabfrage neben den eigentlichen Ergebnisdatensätzen auch Datensätze ermitteln und ausgeben soll, die den eigentlichen Ergebnisdatensätzen dieser Abfrage übergeordnet und/oder untergeordnet sind. Das Anfragesystem kann vorzugsweise für jede einzelne Anfrage individuell festlegen, ob die Anfrage als derart erweiterte Anfrage ausgeführt werden soll, und das DVS-System prüft automatisch, ob für einen in Schritt i) für die Anfrage ermittelten Datensatz übergeordnete oder untergeordnete Datensätze vorliegen, indem es eine Suche in den feldspezifischen Datenwertlisten "ist-übergeordnet-zu" und/oder "ist-untergeordnet-zu" durchführt.

Gemäß mancher Ausführungsformen enthält jeder AOD-Eintrag eine Kennung, auch als "Flag" bezeichnet, die angibt, ob für den Datensatz, auf den sich der AOD-Eintrag bezieht, ein übergeordneter oder untergeordneter Datensatz existiert. Falls diese Kennung angibt, dass kein übergeordneter oder untergeordneter Datensatz existiert, wird der Schritt der Durchsuchung der "ist-übergeordnet-zu" und/oder "ist-untergeordnet-zu" Datenwertlisten unterlassen auch dann, wenn die Anfrage eigentlich als erweiterte Anfrage durchgeführt werden soll, da in diesem Fall anhand der Kennung bereits erkennbar ist, dass zu diesem Datensatz keine übergeordneten bzw. untergeordneten Datensätze existieren. Dies kann die Geschwindigkeit des Verfahrens weiter erhöhen.

Nach Ausführungsformen der Erfindung umfassen die feldspezifischen Datenwertlisten mehrere feldspezifische Datenwertlisten, die als Zeitwertlisten bezeichnet werden. Jede der Zeitwertlisten besteht aus einer nicht-redundanten Liste aus Zeitpunkten, wobei die Zeitpunkte jeweils einen Zeitpunkt repräsentieren, an welchem die Gültigkeit eines Datenwerts des Feldes, auf das sich diese Zeitwertliste bezieht, in einem oder mehreren der logischen Datensätze beginnt oder endet. Jedem der Zeitpunkte in der Zeitwertliste sind die IDs der zu diesem Zeitpunkt gültige logischen Datensätze zugewiesen. Beispielsweise kann die feldspezifische Datenliste für das Feld "Vorname" eine nichtredundante Liste aller Vornamen aller Datensätze enthalten und die diesem Feld zugewiesene Zeitwertliste kann eine nichtredundante Liste aller Zeitpunkte beinhalten, an welchem ein Datenwert des Feldes Vorname in einem beliebigen der Datensätze gültig wurde (z.B. durch Erzeugen eines Datensatzes mit einem Vornamen oder durch Zuweisung eines aktuell gültigen Vornamens an das Vorname-Feld eines bestehenden Datensatzes.

Das Verfahren umfasst vorzugsweise ferner:
- In Antwort auf den Erhalt einer Änderungsanweisungen bezüglich eines der logischen Datensätze (also z.B. bezüglich der Zuweisung eines neuen, aktuelleren Datenwertes an eines der Felder des Datensates), Erzeugen einer neuen Version des zu ändernden Datensatzes, wobei die neue Version ein neuer logischer Datensatz ist, der zumindest ein Vorversions-Feld beinhaltet, wobei das Vorversions-Feld die ID des zu ändernden Datensatzes enthält, wobei die neue Version, jedoch nicht der zu ändernde Datensatz, die in der Änderungsanfrage spezifizierten Änderungen sowie den Änderungszeitpunkt enthält; und
- Speicherung der neuen Version des Datensatzes mit der neuen Datensatz-ID in den feldspezifischen Datenwertlisten und Speicherung des Beginns der Gültigkeit des neuen Datensatzes der Zeitwertliste, und die dem Feld auf das sich die besagte Änderungsanweisung bezieht, wobei in der Zeitwertliste die ID der neuen Version gespeichert ist.

Dies kann vorteilhaft sein, da auch der historische Verlauf der Gültigkeit eines Datensatzes und der Gültigkeit seiner einzelnen Datenwerte gespeichert wird, sodass auch die Historie der Datensätze über die Zeit gespeichert wird und rekonstruiert werden kann. Wenn sich ein Datenwert eines Datensatzes ändert, also der bisherige Datenwert ungültig wird, legt das DVS System einen neuen logischen Datensatz an, dessen Beginn seiner Gültigkeitsdauer mit dem Beginn der Gültigkeit bzw. Zuweisung des neuen Datenwerts beginnt, wobei die Gültigkeitsdauer des Datensatzes endet, wenn einer seiner Datenwerte ungültig wird, also sich ändert oder gelöscht wird.

Nach Ausführungsformen der Erfindung enthält die Datenbankabfrage eine Angabe einer feldspezifischen Validitätszeit. Die Validitätszeit spezifiziert den Zeitpunkt oder Zeitraum, an welchem die in der Datenbankabfrage zu ermittelnden Datensatzversionen den zumindest einen feldspezifischen Suchwert in dem entsprechenden Feld enthielten. Die Durchführung der Datenbankabfrage umfasst:
- Identifikation von derjenigen Zeitwertliste, die sich auf das Feld bezieht, auf die sich der Suchwert und die Validitätszeit beziehen;
- Durchsuchen der identifizierten Zeitwertliste mit der Validitätszeit, um ein oder mehrere Datensatz-IDs derjenigen Datensatzversionen zu ermitteln, die in der Zeitwertliste mit der Validitätszeit oder mit einem Zeitpunkt innerhalb des Validitätszeitraums verknüpft gespeichert sind;
- Identifikation von derjenigen feldspezifischen Datenwertliste, die sich auf das Feld bezieht, auf die sich der Suchwert und die Validitätszeit beziehen;
- Durchsuchen der identifizierten Datenwertliste mit dem Suchwert, um ein oder mehrere Datensatz-IDs zu ermitteln, die in der Datenwertliste mit dem Suchwert verknüpft gespeichert sind;
- Berechnen der Schnittmenge der auf Basis der identifizierten Zeitwertliste und der identifizierten Datenwertliste ermittelten IDs der Versionen der Datensätze;
- Zugriff auf die Adresszuweisungstabelle, um Adressen von AOD Einträgen zu identifizieren, die einer ID eines der im vorigen Schritt ermittelten Datensatzversion zugewiesen sind; und
- Zugriff auf im vorigen Schritt identifizierten Adressen der AOD Einträge, um die zum Validitätszeitpunkt oder währen des Validitätszeitraums validen Datensatzversionen um deren Feldwerte zu ergänzen und auszugeben.

Dies kann vorteilhaft sein, da für jeden Feldwert der Datensätze festgestellt werden kann, wann dieser geändert wurde bzw. während welcher Zeitspanne der Datenwert für ein bestimmtes Feld eines bestimmten Datensatzes gültig war. Da die Zeitwerte als Datenwerte in redundanzfreien Datenwertlisten gespeichert werden, ist auch eine effiziente Suche nach Änderungen, die an, nach oder vor einem bestimmten Zeitpunkt stattgefunden haben, möglich. Die Zeitangaben können z.B. aus einer Kombination aus Datums- und Zeitangaben bestehen und/oder als numerischer Wert, der ausgehend von einem vordefinierten globalen Startzeitpunkt im Verlauf der Zeit erhöht wird, gespeichert werden.

Nach Ausführungsformen der Erfindung ist die Anzahl und/oder der Typ der Feldbezeichner bei zumindest einigen der Datensätze unterschiedlich.

Dies kann vorteilhaft sein, da die Datenbank dadurch sehr flexibel einsetzbar ist. Es ist möglich, verschiedenste Daten in der Datenbank zu speichern ohne die Struktur der physischen Speicherstrukturen, hier der feldspezifischen Datenwertlisten, anzupassen. Es wird vermieden, dass bei der Speicherung von Rohdaten in der Datenbank Information verloren geht, weil Daten in ein enges, vorgegebenes Korsett von Tabellenstrukturen transformiert werden. Vielmehr können Datensätze mit verschiedenen Feldern gleichermaßen in der Datenbank gespeichert werden, da letztlich die Datenwerte jedes Feldes in einer redundanzfreien feldspezifischen Datenwertliste gespeichert werden.

Gemäß manchen Ausführungsformen kann ein logischer Datensatz auch mehrere Feldbezeichner-Datenwertpaare beinhalten, die sich auf das gleiche Feld beziehen. Dies kann insbesondere vorteilhaft sein für Felder, welche Relationen repräsentieren. Beispielsweise kann ein Feld "ist-übergeordnet-zu" mehrfach in einem Datensatz vorkommen, der eine Person charakterisiert, die mehrere Fahrzeuge besitzt. Eine Relation Person-besitzt-Fahrzeug kann dadurch in der Datenbank repräsentiert und gespeichert sein, dass in den mehreren "ist-übergeordnet-zu" Feldern dieser Person die Datensatz-IDs der Datensätze gespeichert sind, die Fahrzeuge repräsentieren, die dieser Person gehören. Dadurch, dass mehrere Feldbezeichner-Datenwertpaare für das gleiche Feld in einem Datensatz vorhanden sein können, ist es möglich, beliebige Relationen zwischen Objekten einschließlich 1:n und n:m Relationen so zu speichern, dass diese komplexen Relationen sehr schnell ermittelt und ausgegeben und/oder von Datenbankanfragen berücksichtigt werden können.

Nach Ausführungsformen der Erfindung sind die AOD-Einträge als Elemente einer Blockchain in der Append-Only-Datenstruktur gespeichert, die über einen kryptographischen Hashwert miteinander verkettet sind. Die Durchführung der Datenbanksuche umfasst eine Validitätsprüfung der Hashwerte derjenigen AOD-Einträge, die im Zuge der Datenbankabfrage verarbeitet werden.

Dies kann vorteilhaft sein, da eine nachträgliche Manipulation der Append-Only-Datenstruktur wirksam verhindert werden kann, bzw. es ist zumindest möglich, eine solche Manipulation sofort zu erkennen, indem das DVS-System vor der Nutzung der Append-Only-Datenstruktur die Hashwerte der Blockchain validiert.

In einem weiteren Aspekt betrifft die Erfindung ein flüchtiges oder nicht-flüchtiges Speichermedium, auf welchem computerlesbare Instruktionen gespeichert sind. Die Instruktionen sind dazu ausgebildet, einen Prozessor dazu zu veranlassen, ein Verfahren zur Durchführung einer Datenbankabfrage in einer Datenbank gemäß einer der hier beschriebenen Ausführungsformen und Beispiele auszuführen.

In einem weiteren Aspekt betrifft die Erfindung Datenstrukturen. Die Datenstrukturen umfassen:
- mehrere feldspezifische Datenwertlisten, in welchen logische Datensätze verteilt gespeichert sind, wobei jeder Datensatz eine Datensatz-ID sowie ein oder mehrere Feldbezeichner-Datenwert-Paare beinhaltet;
- eine Append-Only-Datenstruktur, die Anweisungen zur Änderung von Datenwerten der Felder der Datensätze beinhaltet, wobei jeder Eintrag in der Append-Only-Datenstruktur - hier als AOD-Eintrag bezeichnet, zumindest diejenigen der Feldbezeichner-Datenwertpaare eines der Datensätze beinhaltet, die gemäß einer der Änderungsanweisungen geändert werden sollen;
- eine Adresszuweisungstabelle, wobei die Adresszuweisungstabelle der ID eines jeden der Datensätze, für welchen in der Append-Only-Datenstruktur ein AOD Eintrag mit Änderungsanweisungen gespeichert ist, die Adresse des jüngsten AOD Eintrags zuweist, der eine Änderung dieses Datensatzes spezifiziert.

Jede der feldspezifischen Datenwertlisten, die Append-Only-Datenstruktur und die Adresszuweisungstabelle sind jeweils als eine Datenstruktur anzusehen.

Nach Ausführungsformen der Erfindung umfassen die Datenstrukturen zusätzlich oder alternativ dazu zumindest eine Datenstruktur, die eine durchsuchbare, sortierte Anordnung von Elementen enthält. Die Anordnung ist eine Liste von Listenelementen oder ein Suchbaum aus Knoten. Der Suchbaum kann insbesondere ein B-Baum sein. Die Anordnung repräsentiert jeweils eines der Felder der logischen Datensätze. Die Elemente der Anordnung repräsentieren jeweils einem Datenwert aus einer nicht-redundanten Liste von Datenwerten, die in den Datensätzen enthalten sind und dem von der Anordnung repräsentierten Feld zugewiesen sind. Jedes der Elemente der Anordnung ist verknüpft mit einer leeren oder nicht-leeren Positivliste und/oder einer leeren oder nicht-leeren Negativliste gespeichert.

Nach Ausführungsformen der Erfindung umfassen die Datenstrukturen zusätzlich oder alternativ dazu feldspezifische redundanzfreie Datenwertlisten. Die Datenwertlisten können als feldspezifische ursprüngliche Datenwertlisten, welche aus Rohdaten gewonnen werden, in welchen ursprüngliche Datensätze gespeichert wurden, ausgebildet sein oder als Listen von Werten (hier als "Mapping-IDs" bezeichnet), die diesen ursprünglichen Datenwerten in einer Mappingtabelle eindeutig zugewiesen sind und vorzugsweise numerische Werte sin.

Nach Ausführungsformen der Erfindung umfassen die Datenstrukturen zusätzlich oder alternativ dazu eine Mapping-Tabelle. Die Mapping-Tabelle weist jedem der ursprünglichen Datenwerte der ursprünglichen Datensätze mindestens eine Mapping-ID zu, die keinem anderen der ursprünglichen Datenwerte zugewiesen ist. Die Mapping-IDs werden als die Datenwerte der logischen Datensätze und der feldspezifischen Listen verwendet.

Nach Ausführungsformen der Erfindung umfassen die Datenstrukturen zusätzlich oder alternativ dazu ein oder mehrere feldspezifische Zeitwertlisten, wobei jede Zeitwertliste eine Liste ist, die aus einer redundanzfreien Liste von Validitätszeitpunkten besteht, wobei jeder Validitätszeitpunkt eine Zeit angibt, an welchem ein Datenwert des diese Zeitwertliste repräsentierenden Feldes in einem der logischen Datensätze geändert wurde, wobei jeder Validitätszeit in jeder feldspezifischen Zeitwertliste die Datensatz-IDs aller Versionen der logischen Datensätze zugewiesen ist, dessen dem Feld der Zeitwertliste entsprechendem Datenwert zu dieser Validitätszeit geändert wurde.

Nach Ausführungsformen der Erfindung umfassen die Datenstrukturen zusätzlich oder alternativ dazu ein oder mehrere "ist-übergeordnet-zu" Datenwertlisten, wobei die in dieser "ist-übergeordnet-zu" Datenwertliste gespeicherten Datenwerte IDs von logischen Datensätzen sind, die mindestens einem anderen logischen Datensatz übergeordnet sind, wobei jedem der Datenwerte in der "ist- übergeordnet-zu"; Datenwertliste ein oder mehrere IDs der anderen, untergeordneten Datensätze zugewiesen sind.

Nach Ausführungsformen der Erfindung umfassen die Datenstrukturen zusätzlich oder alternativ dazu ein oder mehrere "ist-untergeordnet-zu" Datenwertlisten, wobei die in dieser Datenwertliste gespeicherten Datenwerte IDs von logischen Datensätzen sind, die mindestens einem anderen logischen Datensatz untergeordnet sind, wobei jedem der Datenwerte in der "ist- untergeordnet-zu"; Datenwertliste ein oder mehrere IDs der anderen, übergeordneten Datensätze zugewiesen sind.

In einem weiteren Aspekt betrifft die Erfindung ein Computersystem umfassend zumindest ein Prozessor und einen Datenspeicher mit einer Datenbank.

Die Datenbank beinhaltet zu einem ersten Zeitpunkt, der als "jüngster Konsolidierungszeitpunkt" bezeichnet wird, mehrere logische Datensätze beinhaltet, wobei jeder Datensatz eine Datensatz-ID sowie ein oder mehrere Feldbezeichner-Datenwert-Paare. Jeder Datensatz beinhaltet eine Datensatz-ID sowie ein oder mehrere Feldbezeichner-Datenwert-Paare, wobei die Datensätze physisch in Form von feldspezifischen Datenwertlisten gespeichert sind.

Das Computersystem umfasst ferner ein Datenverarbeitungs- und Suchsystem - DVS-System. Das DVS-System ist dazu ausgebildet, die Datenbank zu verwalten, wobei die Verwaltung nach dem jüngsten Konsolidierungszeitpunkt umfasst:
- Empfang von Anweisungen zur Änderung von Datenwerten von Feldern mehrerer der Datensätze;
- Speichern der Anweisungen in einer Append-Only-Datenstruktur ohne die Änderungen an den feldspezifischen Datenwertlisten durchzuführen, wobei jeder Eintrag in der Append-Only-Datenstruktur - hier als AOD-Eintrag bezeichnet, zumindest diejenigen der Feldbezeichner-Datenwertpaare eines der Datensätze beinhaltet, die gemäß einer der Änderungsanweisungen geändert werden sollen;
- Für jeden der Datensätze, für welchen die Datenbank nach dem jüngsten Konsolidierungszeitpunkt ein oder mehrere Anweisungen zur Änderung von Datenwerten empfängt, Speichern der Adresse des jüngsten der gespeicherten AOD Einträge, die eine Änderung dieses Datensatzes spezifizieren, verknüpft mit der Datensatz-ID dieses Datensatzes, in einer Adresszuweisungstabelle, wobei die Verknüpfungen in der Adresszuweisungstabelle automatisch aktualisiert wird; und
- Durchführung einer Datenbankabfrage, wobei die Datenbankabfrage umfasst:
   i. Durchsuchen der feldspezifischen Datenwertlisten, um IDs von Datensätzen (214), deren Inhalt ganz oder teilweise aufgrund einer Passung mit ein oder mehreren feldspezifischen Suchwerten zurückgegeben werden soll, zu identifizieren;
   ii. Zugriff auf die Adresszuweisungstabelle, um Adressen von AOD Einträgen zu identifizieren, die einer der in i) identifizierten Datensatz-IDs zugewiesen sind,
   iii. Zugriff auf die identifizierten Adressen der AOD Einträge; und
   iv. Verwendung der in diesen identifizierten AOD Einträgen enthaltenen Änderungsangaben, um die in Schritt i) ermittelten Datensatz-IDs um Feldbezeichner-Datenwertpaare zu ergänzen und auszugeben.

Nach Ausführungsformen enthält der zumindest eine Prozessor eine ALU (Prozessor eine Arithmetisch-logische Einheit) oder einen FPGA (Field Programmable Gate Array). Die ALU oder des FPGA sind dazu ausgebildet, eine Mengenoperation auf Mengen der Datensatz-IDs auszuführen, wobei die Mengenoperation insbesondere eine Berechnung einer Schnittmenge, einer Vereinigungsmenge, einer Differenzmenge oder einer Symmetrischen Differenzmenge umfasst. Insbesondere können die Mengenoperationen durch die ALU bzw. den FPGA so ausgeführt werden, dass ein Vergleich zweier Datensatz-IDs innerhalb eines einzigen Arbeitstakts (Vergleichsoperation) der ALU bzw. des FPGA ausgeführt wird. Beispielsweise kann die Länge der Identifikatoren der Verarbeitungsbreite der Prozessorarchitektur entsprechen (z.B. 32 Bit bei 32 Bit Architekturen, 64 Bit bei 64 Bit Architekturen). Falls die Prozessorarchitektur numerische Werte besonders effizient verarbeiten kann, können die Identifikatoren aus numerischen Werten bestehen. Falls die Prozessorarchitektur andere Wertetypen (z.B. Symbole) besonders effizient verarbeiten kann, können die Identifikatoren aus Symbolen bestehen.

Dies kann vorteilhaft sein, da durch eine Implementierung in Form von Hardwarekomponenten, deren Bauart (z.B. Registergröße) daraufhin optimiert ist, Mengenoperationen auf Datensatz-IDs einer vordefinierten Länge durchzuführen, die Verarbeitung und Durchsuchung von Daten der Datenbank erheblich beschleunigen kann.

Unter einem "**Prozessor**" wird hier ein (meist sehr stark verkleinertes und meist frei) programmierbares Rechenwerk, also eine Maschine oder eine elektronische Schaltung, verstanden, die gemäß übergebenen Befehlen andere Maschinen oder elektrische Schaltungen steuert und dabei einen Algorithmus (Prozess) vorantreibt, was meist Datenverarbeitung beinhaltet. Der Prozessor kann z.B. als ein Hauptprozessor, eine Zentrale Recheneinheit oder (allgemeiner) Zentrale Verarbeitungseinheit (kurz ZVE, englisch central processing unit, kurz CPU) für Computer oder computerähnliche Geräte, in denen sie Befehle ausführen, ausgebildet sein. Der Prozessor kann auch als Mikrocontroller in eingebetteten Systemen (etwa in Haushaltsgeräten, Ticketautomaten, Smartphones usw.) ausgebildet sein.

Gemäß Ausführungsformen wird zumindest einer der Schritte des Verfahrens von einer Untereinheit eines Prozessors direkt ausgeführt.

Insbesondere können gemäß Ausführungsformen der Erfindung die Mengenoperationen auf den Datensatz-IDs direkt von der arithmetisch-logischen Einheit (englisch arithmetic logic unit, daher oft abgekürzt ALU) des zumindest einen Prozessors ausgeführt werden. Eine ALU kann zwei Binärwerte mit gleicher Stellenzahl (n) miteinander verknüpfen. Man spricht von n-Bit-ALUs. Typische Werte für n sind 8, 16, 32 und 64. Gemäß Ausführungsformen der Erfindung haben alle Datensatz-IDs eine festgelegte Länge, insbesondere eine identische Länge, die vorzugsweise so gewählt ist, dass jede Datensatz-ID vollständig in das Arbeitsregister der ALU passt, und können im Zuge der Mengenoperationen in der ALU miteinander verglichen werden. Insbesondere kann die ALU, um zwei Mengen von Datensatz-IDs miteinander zu vergleichen, z.B. um eine Schnittmenge, eine Vereinigungsmenge, eine Differenzmenge oder eine Symmetrische Differenzmenge zu berechnen, alle Datensatz-IDs der einen Menge mit allen Datensatz-IDs der anderen Menge auf Identität vergleichen.

Unter "**Rohdaten**" werden hier jegliche Daten verstanden, die in elektronischer Form vorliegen und noch nicht in einer von einem Parser des DVS-Systems geparsten Form vorliegen. Die Rohdaten umfassen insbesondere Daten, die bei einer Beobachtung, einer Messung oder einer Datenerhebung unmittelbar gewonnen werden und die noch unbearbeitet vorliegen.

Unter einem "**Datenverarbeitungs- und Suchsystem** - DVS-System" wird hier ein software- und/oder hardware-basiertes System zur Speicherung, Verwaltung und Verarbeitung elektronischer Daten verstanden. Gemäß Ausführungsformen der Erfindung ist das DVS-System darauf ausgelegt, große Datenmengen effizient, widerspruchsfrei und dauerhaft zu speichern. Gemäß Ausführungsformen kann das DVS-System mehrere Komponenten, die als Module ausgebildet sein können, umfassen: eine Importkomponente zum Empfangen und Parsen von Rohdaten und zum Speichern der geparsten Daten in nicht-redundanten Listen. Hierbei kann die Importkomponente vorhandene Listen nutzen und ggf. neue Listen automatisch erstellen. Das DVS-System kann zudem eine Such- und Analysekomponente umfassen, die zum Durchsuchen und/oder zur Analyse der Listen dient. Optional kann das DVS-System eine GUI beinhalten, die es Nutzern erlaubt, die Suche zu konfigurieren um z.B. zu spezifizieren, ob untergeordnete und/oder übergeordnete Datensätze oder die Historie bestimmter Datensätze ebenfalls ausgegeben werden sollen. Das DVS-System hat Lese- und Schreibzugriff auf einen von diesem verwalteten Datenspeicher. Nach Ausführungsformen umfasst das DVS-System den Datenspeicher und die in diesem gespeicherten Datenwertlisten. Optional kann das DVS-System ferner einen Dokumentenspeicher zur Speicherung zumindest einiger der Rohdaten umfassen.

Unter einem **"logischen Datensatz"** wird hier eine Gruppe von inhaltlich zusammenhängenden (zu einem Objekt gehörenden) Datenwerten, z. B. Artikelnummer und Artikelname und Herstellungsdatum verstanden. Datensätze entsprechen einer logischen Struktur von Datenwerten, die z.B. beim Parsen von Rohdaten oder beim Importieren von feldbasierten Rohdaten erkannt wird. Die logische Struktur der Datensätze spezifiziert, wie viele und welche Felder dieser Datensatz beinhaltet und welche Datenwerte diesen Feldern jeweils zugewiesen sind. Physisch kann der Datensatz jedoch anders, insbesondere verteilt gespeichert sein, z.B. können die Datenwerte eines Datensatzes jeweils als Elemente von redundanzfreien feldspezifischen Datenwertlisten gespeichert sein.

Die in den Rohdaten enthaltenen Datenobjekte können bereits Datensatz-IDs enthalten (z.B. Zeilennummern einer Exceltabelle mit zeilenweise orientierten Datensätzen), gemäß Ausführungsformen ist es aber auch möglich, dass die Datensatz-IDs dynamisch durch das DVS-System im Zuge des Parsens oder des Imports der Rohdaten erstellt werden. Insbesondere können die Datensatz-IDs so erzeugt werden, dass sie explizit oder implizit Speicheradressen einer Zeile in der Adresszuweisungstabelle, die diesem Datensatz zugewiesen ist, codiert.

Bei dem logischen Datensatz kann es sich um einen ursprünglichen Datensatz handeln, vorzugsweise ist es jedoch ein Datensatz, der in einem Transformationsschritt aus einem ursprünglichen Datensatz durch Ersetzen von ursprünglichen Datenwerten mit Mapping-IDs gebildet wird.

Unter einem **"ursprünglichen Datensatz"** wird hier eine Gruppe von inhaltlich zusammenhängenden (zu einem Objekt gehörenden) Datenwerten, hier als "ursprüngliche Datenwerte" bezeichnet, verstanden, welche aus Rohdaten gewonnen, automatisch importiert oder von einem Nutzer eingegeben wurden. Ein ursprünglicher Datensatz kann zumindest teilweise aus Datenwerten bestehen, die nicht numerisch sind (z.B. Wörter einer natürlichen Sprache).

Unter einer **"Append-Only-Datenstruktur"** wird hier eine Datenstruktur, insbesondere eine Datei, verstanden, bei welcher neue Daten an ein Ende der Datenstruktur angehängt werden können, die vorhandenen Daten jedoch unveränderlich sind. Die Zugriffskontrolllisten vieler Dateisysteme implementieren eine "append-only"-Erlaubnis. Beispielsweise unterstützt das Betriebssystem Linux mit chattr ein "append-only"-Flag auf Dateien und Verzeichnissen gesetzt werden. Einige Cloud-Storage-Anbieter bieten die Möglichkeit, den Zugriff als "append-only" zu beschränken. Diese Funktion wurde bisher insbesondere verwendet, um das Risiko eines Datenverlusts für Backup-Richtlinien zu mindern, aber nicht, um in Kombination mit einer Adresszuweisungstabellen Datenbankabfragen zu beschleunigen, da die Anreicherung von Ergebnis-Datensatz-IDs mit den feldbezogenen Datenwerten dieser Datensätze auf Basis dieser Datenstrukturen ausgeführt wird. Append-Only-Datenstrukturen wachsen mit der Zeit.

Unter einer **"Adresse"** wird hier ein eindeutiger Bezeichner eines logischen oder physischen Speicherbereichs verstanden. Vorzugsweise handelt es sich bei dem Speicherbereich um einen Bereich innerhalb eines flüchtigen oder nicht-flüchtigen Speichermediums (z.B. Hauptspeicher, Festplatte, etc.) auf welchen mit Hilfe der Adresse direkt zugegriffen werden kann. Die Adresse wird beim Speicherzugriff verwendet, um den genauen Ort zu benennen, auf den der Zugriff erfolgt. Die Spezifika der Adressierung hängen jeweils von der konkreten Hardware ab. Bei der Adresse eines AOD Eintrags kann es sich um eine zusammengesetzte Adresse handeln, deren erster Teil die Speicheradresse des ersten geschriebenen AOD Eintrags spezifiziert und deren zweiter Teil einen Offset relativ zu diesem ersten AOD Eintrag spezifiziert, unter welchem der durch die zusammengesetzte Adresse bezeichneter AOD Eintrag gefunden werden kann. Bei der Adresse kann es sich um eine logische oder physische Adresse handeln.

Als "**Adresse**" kann insbesondere eine Angabe bezeichnet werden, die es einem Datenverarbeitungssystem ermöglicht, auf Daten, die unter dieser Adresse verfügbar gemacht ist, zumindest lesend zuzugreifen. Eine Adresse kann z.B. eine URL auf einen über ein Netzwerk verfügbare Datei, eine lokale dateisystembasierte Adresse der Datei, oder ein Eintrag innerhalb einer bestimmten Datei sein oder dergleichen.

Unter einem "**Datenwert**" wird hier die kleinste auswertungsfähige Einheit eines Datensatzes verstanden. Ein Datenwert kann z.B. als String, als Bild, als Pixelmatrix, aus Unicode-Zeichen oder als numerischer Wert ausgebildet sein. Der Datenwert kann z.B. im Zuge eines Datenimports, eines Parsingschritts und/oder eines Tokenisierungsschritts gewonnen werden oder im Zuge eines auf diese Schritte folgenden Mapping-Schrittes, in welchem ursprünglichen Datenwerten numerische Mapping-IDs zugewiesen werden, die letztlich als Datenwerte verwendet, den Feldern zugewiesen und in feldspezifischen Datenwertlisten gespeichert werden.

Unter einer "**redundanzfreie Datenwertliste"** wird hier eine Liste von Datenwerten verstanden, die jeden Datenwert nur ein einziges Mal enthält. Vorzugsweise werden die Datenwerte in sortierter Ordnung in den Listen gespeichert, um Datenbankabfragen auf den Listen zu beschleunigen.

Unter einer **"feldspezifischen Datenwertliste"** wird hier eine Datenwertliste verstanden, die einem bestimmten Feld zugewiesen ist und dieses Feld repräsentiert und welche selektiv nur diejenigen Datenwerte enthält, die in den Datensätzen in genau diesem Feld enthalten sind. Die Datenwerte können auch Mapping-IDs sein, die anderen ("ursprünglichen") Datenwerten zugewiesen sind.

Unter einer **"Zeitwertliste"** wird hier eine redundanzfreie Datenwertliste verstanden, deren Datenwerte Zeitpunkte oder Mapping-IDs von Zeitpunkten sind. Eine Zeitwertliste ist dabei vorzugsweise einem der Felder der Datensätze zugewiesen. Jeder Zeitwert, der in der Zeitwertliste gespeichert ist, repräsentiert einen Zeitpunkt, an welchem ein Datenwert des Feldes, dem die Zeitwertliste zugeordnet ist, in einem oder mehreren Datensätzen geändert wurde. Die IDs der zu diesem Zeitpunkt von der Änderung betroffenen Datensätze werden verknüpft mit diesem Zeitwert in der Zeitwertliste gespeichert.

Da typischerweise auch die inhaltliche Änderung des Datenwertes in einer feldspezifischen Datenwertliste gespeichert wird (z.B. in Form einer Änderung der Datensatz-IDs, die dem bisherigen und dem neuen feldbezogenen Datenwert jeweils zugewiesen sind), geht aus der Kombination der Inhalte dieser feldspezifischen Datenwertliste und der feldspezifischen Zeitwertliste sowohl der Inhalt als auch die Zeit einer Datenwertänderung hervor.

Unter einem **Validitätszeitraum** wird hier ein Zeitraum verstanden, während welchem ein bestimmter Datenwert einem Feld eines Datensatzes zugewiesen (und damit für diesen Datensatz und dieses Feld "valide") ist. Der Zeitraum wird z.B. durch einen ersten Validitätszeitpunkt begrenzt, an welchem der besagte Datenwert dem Feld des Datensatzes zugewiesen wurde (z.B. durch erstmalige Erzeugung oder Import des Datensatzes oder durch Überschreiben eines veralteten Datenwerts), und durch einen Validitätszeitraumsende, an welchem dieser Datenwert überschrieben oder der Datensatz gelöscht oder als veraltete Version behandelt wurde.

Unter einem **"Validitätszeitpunkt"** wird hier ein Zeitpunkt verstanden, an welchem ein bestimmter Datenwert einem Feld eines Datensatzes zugewiesen (und damit für diesen Datensatz und dieses Feld "valide") ist.

Unter einem **"Datenspeicher"** ist ein Speichermedium oder ein Speicherbereich auf einem Speichermedium oder eine Kombination mehrerer Speichermedien oder Speicherbereiche, das bzw. die zur Speicherung von Daten verwendet wird. Falls der Datenspeicher mehrere Speichermedien oder Speichermedienbereiche umfasst, können diese miteinander zu einem logischen Datenspeicher verbunden sein. Hierbei können die Speichermedien oder Speichermedienbereiche z.B. über ein Netzwerk oder über einen Bus eins Computersystems operativ miteinander verbunden sein. Beispielsweise kann ein Datenspeicher, der von dem DVS-System verwaltet wird, ein Datenspeicher sein, auf dessen Daten ausschließlich das DVS-System Zugriff hat.

Unter einem "**Feld**" wird hier ein Parameter (oder "Attributbezeichner") verstanden, der einen bestimmten Bedeutungsinhalt repräsentiert und der in verschiedenen konkreten Verkörperungen realisiert sein kann. Beispielsweise kann ein Feld eine Eigenschaft von Objekten repräsentieren wie z.B. Farbe, Bautyp, Breite, Höhe, Alter, Dichte, etc. Je nach dem Inhalt der in den Datensätzen gespeicherten Daten können die Felder unterschiedlich sein. So haben Datensätze, die Maschinen repräsentieren in der Regel andere Felder als Datensätze, die Personen repräsentieren. Je nach Art der Rohdaten und/oder der verwendeten Parser können den geparsten und importierten ursprünglichen Datenwerten und/oder die diesen zugewiesenen Mapping-IDs eine Vielzahl unterschiedlicher Felder zugewiesen sein. Bei medizinischen Daten kann ein Feld z.B. das Konzept "Diagnose" repräsentieren, dem verschiedene konkrete Verkörperungen ("Datenwerte", bzw. "Feldwerte") wie z.B. "Diabetes", "Parkinson", oder "Hautkrebs" zugewiesen sein können. Ein anderes Feld könnte "Symptom" repräsentieren, welchem Verkörperungen bzw. Datenwerte wie "Fieber", "Schüttelfrost", "Zahnschmerzen" (oder deren jeweilige Mapping-IDs) zugewiesen sind. Es ist auch möglich, dass ein Datenwert verschiedenen Feldern zugewiesen ist. Beispielsweise kann der Datenwert "Silber" einem Feld bzw. Konzept "Metall" zugewiesen sein, aber auch dem Konzept "Farbe" oder "Nachname". Je nach Ausführungsform kann die Mapping-ID für Datenwerte, die mehreren verschiedenen Feldern zugewiesen sind, je nach Feld unterschiedlich sein oder aber auch identisch sein.

Unter einem **"Computersystem"** wird hier ein monolithisches oder verteiltes Datenverarbeitungssystem, insbesondere ein digitales Datenverarbeitungssystem verstanden. Das Datenverarbeitungssystem kann also z.B. aus einem StandaloneComputersystem oder einem Rechnernetzwerk, insbesondere einem Cloudsystem, bestehen. Das Computersystem kann z.B. auch als mobiles Datenverarbeitungssystem, z.B. als Notebook, Tablet-Computer oder portables Telekommunikationsgerät, z.B. ein Smartphone, ausgebildet sein.

Unter einem "**System**" ist hier eine Gesamtheit aus ein oder mehreren Elementen (z.B. Computersystemen) zu verstehen, die in der Lage ist, Daten zu verarbeiten. Hierfür tauschen die Systemkomponenten Daten und/oder Steuerbefehle aus. Beispielsweise kann ein System einen Computer mit einem DVS-System umfassen. Optional kann das System weitere Komponenten umfassen, z.B. ein oder mehrere Client-Computersysteme, die Suchanfragen und/oder Analyseanfragen an das DVS-System senden.

Unter einer **"Datenstruktur"** wird hier ein Objekt verstanden, welches zur Speicherung und Organisation von Daten dient. Es handelt sich insbesondere um eine Struktur, weil die Daten in einer bestimmten Art und Weise angeordnet und verknüpft werden, um den Zugriff auf sie und ihre Verwaltung effizient zu ermöglichen.

### Kurze Beschreibung der Zeichnung

Nachfolgend werden Ausführungsformen der Erfindung mit Bezug auf die Zeichnung beschrieben. In der Zeichnung zeigt
- Fig. 1: ein Blockdiagramm eines Systems mit einem DVS-System;
- Fig. 2: ein Blockdiagramm einer GUI zur Spezifikation einer Suchanfrage;
- Fig. 3: ein Blockdiagramm verschiedener Datenstrukturen einer Datenbank;
- Fig. 4: Beispiele verschiedener Typen von Rohdaten;
- Fig. 5: Beispiele für die Transformation von Rohdaten in feldspezifische Datenwertlisten;
- Fig. 6: ein Blockdiagramm eines verteilten Systems zur Nutzung konsolidierter und nicht-konsolidierter Versionen einer Datenbank;
- Fig. 7: ein Flussdiagramm eines Verfahrens zur Durchführung einer Datenbankabfrage;
- Fig. 8: ein Flussdiagramm eines Verfahrens zur Berücksichtigung noch-nicht-konsolidierter Datenwertänderungen in einer Datenbankabfrage;
- Fig. 9: ein Beispiel einer feldspezifischen Datenstruktur mit mehreren Positivlisten und Negativlisten;
- Fig. 10: ein Blockdiagramm von Datenstrukturen vor und nach einer Konsolidierung; und
- Fig. 11: Datenstrukturen zur effizienten Ausgabe kompletter Datensätze.

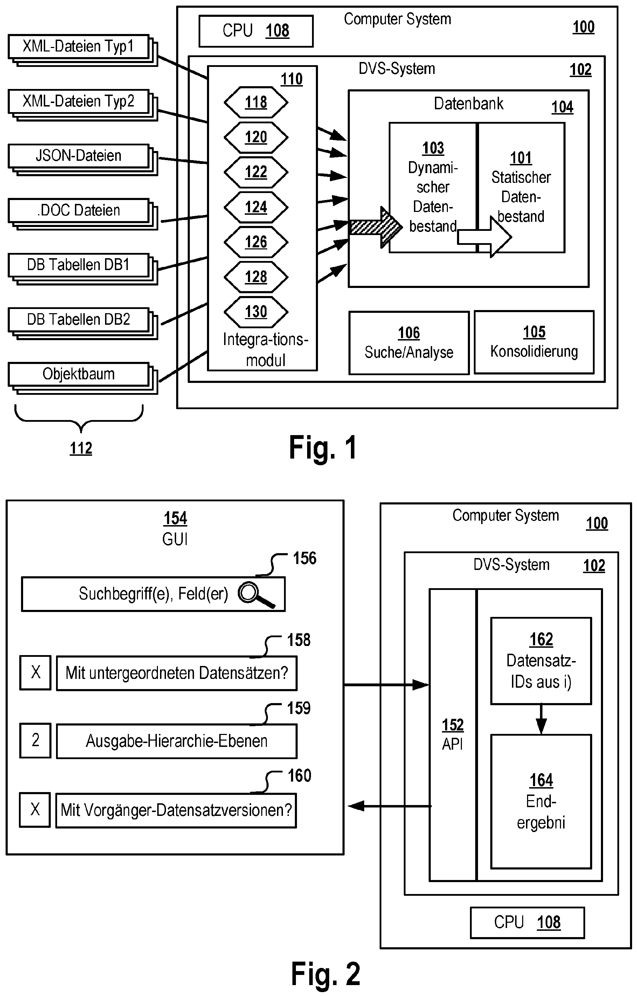

**Figur 1** zeigt ein Blockdiagramm eines Systems 100 mit einem DVS-System 102 zur Durchführung von Datenbankabfragen auf einer Datenbank 104. Bei dem System 100 kann es sich insbesondere um ein Computersystem mit eine oder mehreren Prozessoren handeln, z.B. um einen Datenbankserver.

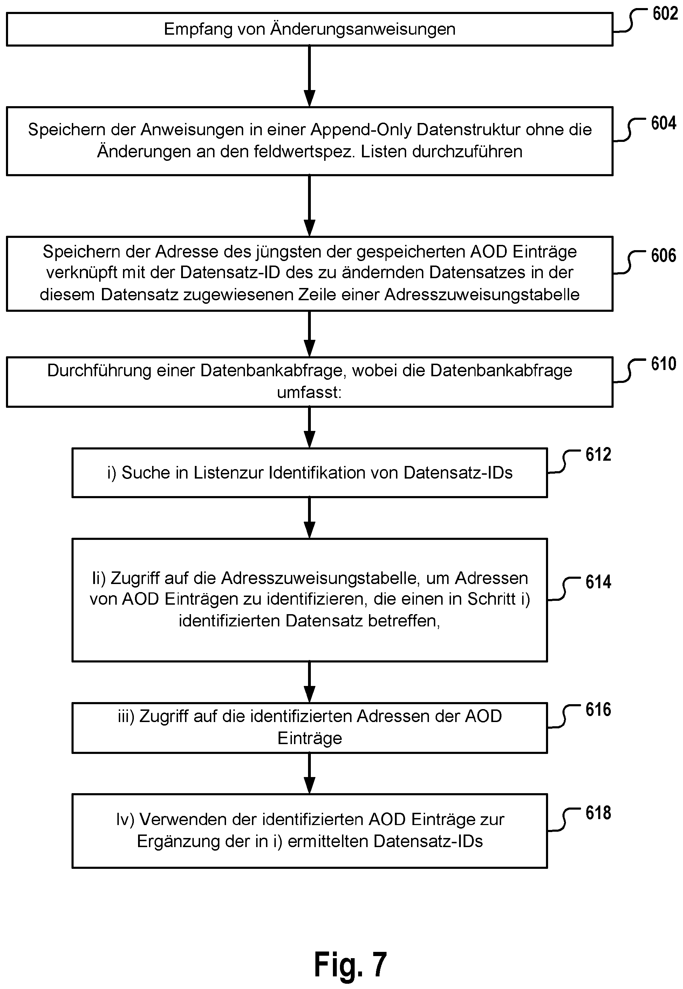

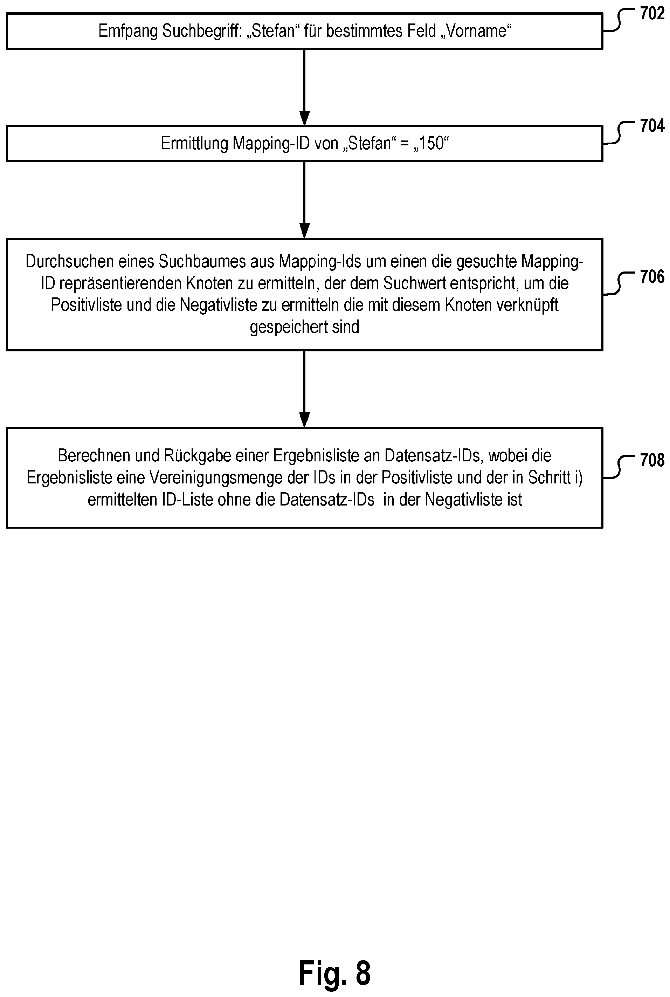

Beispielsweise kann das System zur Durchführung der in den Figuren 7 und 8 illustrierten Verfahren verwendet werden. Im Folgenden werden daher das System 100 und das Verfahren der **Figur 7** gemeinsam unter Bezugnahme auf die beiden jeweiligen Figuren beschrieben.

Beispielsweise kann das System und Verfahren dazu verwendet werden, eine große Menge an heterogen strukturierten Rohdaten 112 zu integrieren und auf effiziente und flexibel erweiterbare Weise durchsuchbar und analysierbar zu machen.

Beispielsweise können die Rohdaten XML-Dateien verschiedenen Inhalts und verschiedener Strukturierung, JSON Dateien, Textdateien in verschiedenen Formaten (zum Beispiel Microsoft Word, OpenOffice, Adobe Acrobat PDF-Dateien, TXT Dateien etc.), verschiedene Tabellen von ein oder mehreren unterschiedlichen relationalen Datenbanken, Mediendaten oder hierarchisch organisierte Daten, zum Beispiel Objektbäume, umfassen. In manchen Rohdaten können Datenobjekte, deren Datenwerte und optional auch deren semantische Bedeutung mehr oder weniger explizit ausgewiesen sein, zum Beispiel in Datenbanktabellen, Excel Dateien und sonstigen vergleichsweise stark strukturierten Daten mit entsprechenden Feldern und Feldbezeichnern. In anderen Rohdaten (zum Beispiel Bilddaten) können die Datenobjekte und deren Datenwerte nicht explizit, sondern implizit vorliegen. Das heißt, die Datenobjekte und ihre Datenwerte werden erst im Zuge eines Parsingvorganges als solche erkannt und extrahiert.

Um die verschiedenen Rohdaten zu parsen, können mehrere verschiedene syntaktische und/oder semantische Parser 118-130 verwendet werden. Die Parser sind während des Parsens vorzugsweise in Austausch mit dem DVS-System bzw. anderen Komponenten des DVS-Systems, z.B., um beim dynamischen Erstellen einer Datensatz-ID für ein Datenobjekt, das einem logischen Datensatz entspricht, feststellen zu können, ob diese ID wirklich eindeutig ist oder bereits durch eine Datensatz-ID belegt ist, die in einer der Datenwertlisten verwendet wird.

Bei den Datensatz-IDs kann es sich um Identifikatoren von logischen Datensätzen handeln, die bereits von den Rohdaten vorgegeben werden, und die vom DVS-System als Datensatz-IDs übernommen werden. Alternativ dazu können die Datensatz-IDs auch erst während des Imports oder der Erzeugung der Datensätze erzeugt werden.

Die Datenwerte der erzeugten, geparsten und/oder direkt importierten logischen Datensätze werden entsprechend des ihnen durch die Feldbezeichner der Rohdaten oder durch die Parser zugewiesenen semantischen Konzepts in entsprechenden feldspezifischen Datenwertlisten gespeichert.

Die Speicherung der logischen Datensätze in mehreren feldspezifischen Datenwertlisten löst die Objektstruktur, also die Frage, welche Datenwerte bzw. semantischen Konzepte in einen bestimmten Datenobjekt vorhanden sind, gewissermaßen auf bzw. die physische Organisation der Datenwerte auf dem Speicher orientiert sich nicht an deren logischer Zugehörigkeit zu den Datensätzen.

Nachdem die logischen Datensätze erfolgreich in der Datenbank 104 gespeichert wurden, ist die Datenbank an einem "ersten Zeitpunkt" zunächst in einem konsistenten Zustand. Der erste Zeitpunkt wird auch als "jüngster Konsolidierungszeitpunkt" bezeichnet. An diesem Zeitpunkt beinhaltet die Datenbank also die Gesamtheit der bisher in der Datenbank in Form der feldspezifischen Datenwertlisten gespeicherten logischen Datensätzen einschließlich einer Mappingtabelle. Die Gesamtheit der feldspezifischen Datenwertliste repräsentiert den statischen Teil 101 der Datenbank zum ersten Konsolidierungszeitpunkt.

Zu späteren Zeitpunkten empfängt 602 das DVS-System 102 verschiedenste Anweisungen zur Änderung von Datenwerten, z.B. Anweisungen zum Löschen oder Ändern einzelner Datenwerte oder zum Löschen oder Ergänzen ganzer logischer Datensätze. Die Anweisungen können z.B. von Anfragesystemen erhalten werden, die Softwareprogramme oder Hardwarekomponenten sind oder welche die digitale Repräsentanz einer natürlichen Person darstellen.

Diese empfangenen Änderungsanweisungen werden zunächst nicht auf den feldspezifischen Datenwertlisten ausgeführt. Vielmehr werden die Anweisungen in einer Append-Only Datenstruktur 202 gespeichert 604 ohne die Änderungen an den feldspezifischen Datenwertlisten 116 durchzuführen. Jeder Eintrag in der Append-Only-Datenstruktur - hier als AOD-Eintrag bezeichnet, beinhaltet zumindest diejenigen der Feldbezeichner-Datenwertpaare eines der Datensätze, die gemäß einer der Änderungsanweisungen geändert werden sollen. Optional kann das DVS-System dazu konfiguriert sein, die AOD-Einträge so zu erstellen und zu speichern, dass diese nicht nur die geänderten Datenwerte, sondern sämtliche aktuellen Datenwerte des Datensatzes, auf den sich der AOD-Eintrag bezieht, enthalten (sog. "vollständiger" oder "ladungsvollständiger" AOD-Eintrag"). Beispielsweise kann das DVS-System dazu konfiguriert sein, ab dem Empfang einer gewissen Mindestanzahl an Änderungsanfragen, die sich auf einen bestimmten Datensatz beziehen, den AOD Eintrag als vollständigen AOD Eintrag zu speichern. Ein anderes Kriterium für die Speicherung vollständiger AOD Einträge kann das Überschreiten einer Suchanfragedauer sein. Somit kann die Anzahl an AOD-Einträgen, die per Referenz

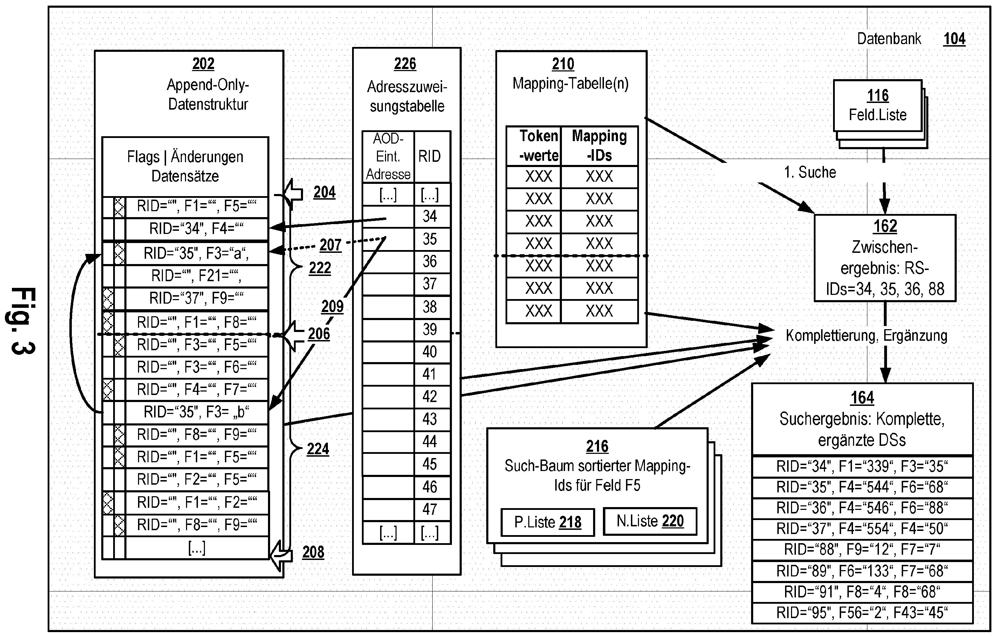

Für jeden der Datensätze, für welchen die Datenbank nach dem jüngsten Konsolidierungszeitpunkt ein oder mehrere Anweisungen zur Änderung von Datenwerten empfängt, speichert das DVS-System 102 die Adresse 206, 208 des jüngsten der gespeicherten AOD Einträge, die eine Änderung dieses Datensatzes spezifizieren, verknüpft mit der Datensatz-ID dieses Datensatzes, in einer Adresszuweisungstabelle 226. Einzelheiten dieses Schritts und die Beschaffenheit der AOD Einträge werden z.B. in Figur 3 näher illustriert. Die Verknüpfungen in der Adresszuweisungstabelle werden automatisch aktualisiert, sodass zu jedem der Datensätze immer die Adresse desjenigen der AOD Einträge gespeichert ist, der die jüngsten Änderungen dieses Datensatzes enthält. Die Append-Only-Struktur beinhaltet also auch Änderungen und Ergänzungen, die noch nicht mit dem statischen Teil 101 der Datenbank konsolidiert wurden. Die Append-Only-Datenstruktur, zumindest ihre Einträge ab dem jüngsten Konsolidierungszeitpunkt, sowie einige andere später beschriebene optionale Datenstrukturen wie die Negativlisten und Positivlisten gehören zum dynamischen Teil 103 der Datenbank 104.

Das DVS-System führt 610 sodann eine Datenbankabfrage durch. Beispielsweise kann die Datenbankabfrage im Zuge einer komplexen Datenanalyse oder in Antwort auf den Erhalt einer Suchanfrage eines Anfragesystems durchgeführt werden.

Die Datenbankabfrage beinhaltet ein oder mehrere Datenwerte, auch als Suchwerte bezeichnet, die sich jeweils auf eines der Felder der Datensätze beziehen.

Die Datenbankabfrage beinhaltet einen ersten Schritt i) 612, in welchem für jeden der Suchwerte die zu dem Feld dieses Suchwerts korrespondierende feldspezifische Datenwertliste mit dem Suchwert durchsucht wird, um IDs von Datensätzen 214, deren Inhalt ganz oder teilweise aufgrund einer Passung mit ein oder mehreren feldspezifischen Suchwerten zurückgegeben werden soll, zu identifizieren. Beispielsweise könnte die Suche die Suchwerte Vorname=Peter und Stadt=Berlin beinhalten. Vorzugsweise sind die Suchwerte Mapping-IDs und können z.B. dadurch ermittelt werden, dass ein primär vom Anfragesystem eingegebener Suchwert mit der Mapping-Tabelle abgeglichen wird um die diesem primären Suchwert zugewiesene Mapping-ID zu ermitteln. Beispielsweise könnte "Peter" die Mapping-ID 2392 haben und "Berlin" die Mapping-ID 68672. Die Suche die würde also z.B. die Suchwerte Vorname= 2392 und Stadt= 68672 enthalten. Die Suche nach 2392 in der Vornamens-Datenwertliste könnte eine Menge an "Vornamens-Treffer"-Datensatz-IDs ergeben, die Suche nach 68672 in der Stadt-Datenwertliste eine Menge an "Stadt-Treffer"-Datensatz-IDs und die Schnittmenge der Vornamens-Treffer-Datensatz-IDs und der Stadt-Treffer-Datensatz-IDs kann die Menge an Datensatz-IDs darstellen, die in Schritt i) ermittelt werden. Beispielsweise könnten in Schritt i) die beiden Datensatz-IDs 5578 und 5907 ermittelt werden, die beide eine Person repräsentieren mit dem Vornamen Michael und einer Wohnadresse in Berlin.

Im nächsten Schritt ii) 614 folgt der Zugriff auf die Adresszuweisungstabelle 226, um Adressen von AOD Einträgen zu identifizieren, die einer der in i) identifizierten Datensatz-IDs zugewiesen sind. Beispielsweise kann das DVS-System dazu konfiguriert sein, die IDs neuer logischer Datensätze so zu wählen, dass diese IDs die Speicheradresse der diesem logischen Datensatz eineindeutig zugehörige Zeile in der Adresszuweisungstabelle explizit (z.B. als Speicheradresse) oder implizit (z.B. als laufende Nummer von Zeilen in der Adresszuweisungstabelle, die durch Multiplikation mit einer Zeilenspeichergröße die Speicheradresse der Zeile relativ zu einer Basisadresse (z.B. Dateibeginn) der Adresszuweisungstabelle) codiert. Der Zugriff auf die Adresszuweisungstabelle kann so erfolgen, dass aus den in Schritt i) ermittelten Datensatz-IDs die Speicheradressen der diesen IDs eineindeutig zugewiesenen Zeilen in der Adresszuweisungstabelle ermittelt wird, und diese Speicheradressen für den direkten Zugriff ohne einen Suchvorgang verwendet wird.

Beispielsweise könnten die in d) ermittelten Datensatz-IDs eine ID eines Personendatensatzes umfassen, wobei die ID z.B. "5578" sein kann, wobei dieser Wert z.B. gleichzeitig auch die Speicheradresse der diesem Datensatz eindeutig zugewiesenen Zeile in der Adresszuweisungstabelle sein kann.

Um also nun den vollständigen Personendatensatz der Person 5578 auszugeben, ist es nicht erforderlich, die in Schritt i) verwendete Datenbankabfrage in irgendeiner Weise zu ändern. Es genügt, dass die in Schritt i) erhaltenen Datensatz-IDs der zurückzugebenden Datensätze als Schlüssel (und in manchen Implementierungsvarianten als Speicheradresse von Adresszuweisungstabellenzeilen) in der Adresszuweisungstabelle verwendet werden, um zunächst die den in i) ermittelten Datensätzen eineindeutig zugewiesenen Adresszuweisungstabellen-Zeilen zu identifizieren, und diese Zeilen auszuwerten. Die ermittelten Adresszuweisungstabellen-Zeilen enthalten jeweils die Adresse des AOD Eintrags, der die jüngste Änderung des Datensatzes enthält, dem diese Zeile eindeutig zugewiesen ist. Das DVS System muss nur diese AOD-Eintrags-Adresse direkt ansteuern, um zumindest die gemäß dieses AOD Eintrags geänderte Eigenschaft dieser Person (z.B. Telefonnummer) zu erfahren.

Im nächsten Schritt iii) erfolgt ein Zugriff 616 auf die identifizierten Adressen der AOD Einträge durch das DVS-System. Falls dieser AOD Eintrag ein kompletter (oder "vollständiger") AOD Eintrag ist, also alle aktuell gültigen Datenwerte der Person enthält, können die in dem kompletten AOD Eintrag spezifizierten Datenwerte verwendet werden um den Datensatz der Person 5578 einschließlich aller Personenattribute auszugeben. Falls der besagte AOD Eintrag nicht alle aktuellen Datenwerte enthält, so enthält er vorzugsweise zumindest eine Adresse auf den nächst-älteren AOD Eintrag, der sich auf die gleiche Person 5578 bezieht und andere Änderungen enthält, die sich z.B. auf die Anschrift, Telefonnummer, Arbeitsort etc. beziehen. Wenn dieser nächst-älteste AOD Eintrag ein vollständiger AOD Eintrag ist, kann die Durchsuchung der Append-Only-Datenstruktur für die Person 5578 beendet werden. Falls nicht, wird der in diesem AOD-Eintrag enthaltene Adresse auf den die nächst-nächst ältesten AOD Eintrag gefolgt und dieser Schritt ggf. so lange wiederholt, bis für alle Felder des logischen Personensatzes ein entsprechender Datenwert vorliegt.

In Schritt iv) 618 verwendet das DVS-System die in diesen identifizierten AOD Einträgen enthaltenen Änderungsangaben, um die in Schritt i) ermittelten Datensatz-IDs um Feldbezeichner-Datenwertpaare zu ergänzen und auszugeben.

Auf diese Art und Weise können die feldspezifischen Datenwerte sämtlicher Datensätze, deren ID in Schritt i) ermittelt wurde, und optional auch über- oder untergeordnete Datensätze und/oder historische Versionen dieser Datensätze ermittelt werden.

Eine Suchanfrage kann auf höchst effiziente Weise beliebige Datenwerte von Datensätzen und sogar von weiteren, durch Relationen mit diesen Datensätzen verbundenen Datensätzen ermitteln, wobei die Suche im Wesentlichen nur auf Datenwertlisten und die Komplettierung der auszugebenden Ergebnisdatensätze im Wesentlichen auf Sprungadressen aufbaut. Die Suche ist dadurch performant und ressourcenschonend. Die Datenwertlisten sind vorzugsweise sortierte, redundanzfreie Listen von numerischen Werten, insbesondere von Mapping-IDs, sodass sämtliche Schritte i-iv höchst performant durchgeführt werden können.

Gemäß mancher Beispiele kann das DVS-System dazu konfiguriert sein, den dynamischen Teil 103 der Datenbank in regelmäßigen oder unregelmäßigen Abständen mit dem statischen Teil zu konsolidieren. Da bedeutet, dass die in dem dynamischen Teil zwischengespeicherten Datensatzänderungen nun in die feldspezifischen Datenwertlisten gespeichert werden. Die Konsolidierung kann z.B. von einem Konsolidierungsmodul 105 durchgeführt werden, die Datenbankabfrage von einem weiteren Modul 106. Das Modul 106 kann zum Beispiel dazu konfiguriert sein, Suchanfragen über eine Netzwerkschnittstelle von ein oder mehreren Client-Computern zu empfangen oder über eine GUI direkt von einem lokal arbeitenden Nutzer. Zusätzlich oder alternativ dazu kann das Modul 106 auch eine Vielzahl von komplexen Analysefunktionen enthalten, die auf Mengenoperationen auf mehreren feldspezifischen Datenwertlisten und optional auch Negativlisten und/oder Positivlisten beruhen.

Somit repräsentiert der statische Teil die Datenbank an einem bestimmten Konsolidierungszeitpunkt und kann verwendet werden, um konsistente Auswertungen und Analysen auf den zu diesem Zeitpunkt vorliegenden Daten zu berechnen. Alle Änderungen ab diesem fixierten Zeitpunkt werden zunächst nur in dem dynamischen Teil 103 der Datenbank verwaltet, zu welchem insbesondere der noch nicht persistierte Teil einer Append-Only-Datenstruktur sowie Positivlisten und Negativlisten zählen. Die Append-Only-Datenstruktur besteht also aus einem statischen Teil, der die Änderungsanweisungen und AOD-Einträge umfasst, die bereits konsolidiert, also in den feldspezifischen Listen persistiert wurden, und einem dynamischen Teil. Der dynamische Teil umfasst die zum jüngsten Konsolidierungszeitpunkt noch nicht konsolidierten (in den Datenwertlisten persistierten) Änderungen. Bei jeder Konsolidierung verschiebt sich die Grenze bzw. Aufteilung der konsolidierten und nicht-konsolidierten AOD-Einträge, wobei jede Grenze einem Konsolidierungszeitpunkt entspricht.

Zu einem beliebigen Zeitpunkt kann diese dynamische Komponente der Datenbank konsolidiert, also in die statische Komponente 101 integriert werden und durch eine neue, leere dynamische Komponente ersetzt werden. Damit wird die bisherige dynamische Komponente statisch und kann im Hintergrund mit der bisherigen statischen zu einer neuen statischen Datenbankkomponente zusammengeführt werden. Ist diese fertig, kann die bisherige statische und dynamische gesichert und/oder gelöscht werden.

Die Konsolidierungsmodul 105 kann z.B. eine API bereitstellen, über welche Nutzer und externe Programme die Möglichkeit haben, bei Suchen z.B. nur die statische Komponente oder beide Komponenten oder ggf. auch nur die dynamische Komponente als Basis für die Suche zu verwenden.

Der große Vorteil von Implementierungsvarianten liegt in der Aktualisierbarkeit im laufenden Betrieb, da alle Komponenten eingefroren werden können um die Reorganisation im laufenden unterbrechungsfreien Betrieb inkl. der Optimierbarkeit zu gewährleisten. Ein Parallelbetrieb der statischen und der dynamischen Komponente der Datenbank ist möglich sowie auch die Aktualisierbarkeit der Datenbank.

**Figur 2** zeigt ein Blockdiagramm einer GUI 154 zur Spezifikation einer Suchanfrage. Beispielsweise kann die GUI mehrere Eingabefelder enthalten, z.B. ein oder mehrere Eingabefelder 156 zur Spezifikation von ein oder mehreren Suchwerten und den diesen zugewiesenen Feldern, sowie weitere Felder 158, 160, die dem Nutzer ermöglichen, festzulegen, ob neben den eigentlichen Ergebnis-Datensätzen auch weitere Datensätze zurückgegeben werden sollen, welche mit den Ergebnis-Datensätzen in einer logischen und/oder zeitlichen Beziehung stehen. Beispielsweise kann der Benutzer angeben, ob neben den Ergebnisdatensätzen, die auf Basis einer Passung mit den in Feld 156 eingegebenen Suchbegriffen in Schritt i) ermittelt werden, auch Datensätze ausgegeben werden sollen die diesen Ergebnisdatensätzen untergeordnet oder übergeordnet sind oder die Vorversionen der Ergebnisdatensätze darstellen. In anderen Beispielen kann die GUI zusätzlich oder alternativ zu diesen Feldern 158, 160 auch Felder zur Eingabe von Zeitpunkten oder Zeiträumen beinhalten, sodass der Nutzer die Suche auf bestimmte Validitätszeiten oder Zeiträume beschränken kann.

In manchen Beispielen kann die GUI Eingabefelder 159 enthalten, die es ermöglichen, die Anzahl der Iterationen (Datensatz-Hierarchien) anzugeben, bis zu welchen übergeordnete und/oder untergeordnete Datensätze ermittelt und ausgegeben werden sollen.

Zusätzlich oder alternativ zu einer GUI kann das DVS-System auch andere Schnittstellen, insbesondere eine API 152 bereitstellen, über welche andere Softwareprogramme Suchanfragen und die hier beschriebenen Zusatzparameter (Festlegung ob eine Ausgabe übergeordneter oder untergeordneter Datensätze erfolgen soll, ob Vorversionen ausgegeben werden sollen und/oder ob die Suche auf einen Validitätszeitraum beschränkt werden soll) eingeben können.

In einem ersten Schritt i) wird auf Basis der feldspezifischen Suchwerte und der feldspezifischen Datenwertlisten eine Menge an Datensatz-IDs ermittelt, die auch als Zwischenergebnis 162 betrachtet werden kann. In weiteren Schritten ii-iv) werden die aktuellen, diesen Datensatz-IDs zugewiesenen Feldwerte ermittelt und komplette, um die feldspezifischen Datenwerte ergänzte Datensätze 164 als Endergebnis ausgegeben. Bei den Datenwerten der ausgegebenen Datensätzen kann es sich insbesondere um Mapping-IDs handeln oder um die ursprünglichen Datenwerte der Rohdaten, die den Mapping-IDs in einer Mappingtabelle zugewiesen sind.

**Figur 3** zeigt ein Blockdiagramm verschiedener Datenstrukturen einer Datenbank 104.

Die Datenstrukturen umfassen eine Append-Only-Datenstruktur 202, z.B. eine Append-Only-Datei. In diese werden alle Änderungen von logischen Datensätzen in der Reihenfolge des Empfangs der Änderungsanforderungen durch das DVS-System geschrieben und sind nicht mehr änderbar. Beispielsweise können sich die Änderungen auf nur einzelne Datenwerte eines Datensatzes bestehen und z.B. eine Ergänzung des Datensatzes um ein neues oder zusätzliches Feld-Datenwertpaar beinhalten, aber auch eine Löschung eines Feld-Datenwertpaares oder ein Ersetzen eines Datenwerts durch einen anderen. Die Änderungen können sich auch auf ganze logische Datensätze beziehen und z.B. die Löschung oder erstmalige Speicherung ganzer Datensätze vorsehen.

Jeder Eintrag in der Append-Only-Datenstruktur ist als Zeile in dem Block 202 dargestellt. Beispielsweise kann jeder AOD-Eintrag ein oder mehrere Kennungen (Flags) beinhalten. Die Flags können z.B. als Bitwerte ausgebildet sein und z.B. beinhalten, ob zu einem Datensatz übergeordnete oder untergeordnete Werte existieren, ob der AOD-Eintrag ein vollständiger AOD Eintrag ist oder nicht, ob Vorgängerversionen des Datensatzes existieren etc.

Die gestrichelte Linie 206 markiert den ersten Zeitpunkt (jüngsten Konsolidierungszeitpunkt). Alle AOD-Einträge 222 oberhalb der Linie sind zum jüngsten Konsolidierungszeitpunkt bereits konsolidiert, alle AOD-Einträge 224 unter dieser Linie sind noch nicht konsolidiert. Der Pfeil 204 repräsentiert den ersten AOD-Eintrag der Datenstruktur. Beispielsweise kann dessen Adresse als Basisadresse dienen, und die Adresse aller anderen AOD-Einträge ist eine Kombination dieser Basisadresse mit einem Offset. Der Pfeil 208 zeigt das Ende der Datenstruktur 202, an welches weitere AOD-Einträge gemäß empfangener Änderungsanforderungen laufend angehängt werden.

Die Datenstrukturen können ferner eine Adresszuweisungstabelle 226 enthalten. Diese weist jedem logischen Datensatz in der Datenbank 104 eine Adresse eines AOD-Eintrags zu. Bei diesem AOD Eintrag handelt es sich um den jüngsten AOD Eintrag in der Append-Only-Struktur, der eine Änderung dieses einen Datensatzes spezifiziert. Beispielsweise ist in der Tabelle 226 dem Datensatz mit der Datensatz-ID ("RID")=35 aktuell ein AOD-Eintrag zugewiesen, der besagt, dass das Feld F3 den Datenwert "b" hat (siehe Pfeil 209). Zu einem früheren Zeitpunkt war dem Datensatz mit RID35 jedoch einen anderen Datenwert "a" zugewiesen worden. Diese frühere Änderung entspricht dem dritten AOD-Eintrag von oben. Zu diesem früheren Zeitpunkt war in der Adresszuweisungstabelle die RID 35 mit der Adresse des drittobersten AOD-Eintrags verknüpft, wie durch den gestrichelten Pfeil 207 dargestellt. Mittlerweile wurde diese Adresse jedoch durch die Adresse des AOD Eintrags, auf den Pfeil 209 verweist, ersetzt. Dieser AOD-Eintrag 209 beinhaltet jedoch die Adresse des jüngsten noch vor diesem AOD Eintrag geschriebenen AOD Eintrags 207, der sich auf den gleichen Datensatz RID=35 bezieht. Somit kann das DVS-System einfach den Adressen innerhalb der AOD-Einträge auf den jeweils nächst-jüngsten AOD-Eintrag des gleichen Datensatzes folgen, um für sämtliche Felder des Datensatzes 35 alle aktuellen Datenwerte zu erhalten.

In Figur 3 und anderen Figuren wurde zu Illustrationszwecken Datenwerte verwendet, die für einen Menschen leicht verstehbar sind. Vorzugsweise handelt es sich bei den feldspezifischen Datenwerten der logischen Datensätze jedoch um numerische Werte, die den aus den Rohdaten gewonnenen und/oder initial eingegebenen Datensätzen eindeutig in einer Mapping-Tabelle 210 zugewiesen sind. Diese numerischen Werte werden auch als Mapping-IDs bezeichnet und vorzugsweise als die Datensätze verwendet, die in den feldbasierten Listen gespeichert und bei der Suche mit dem Suchwert abgeglichen werden. Die Mapping-Tabelle 210 zeigt schematisch die Zuweisung von ursprünglichen Datenwerten (hier: Wörter) zu Mapping-IDs.

Die Mapping-Tabelle 210 dient z.B. dem Zweck, alle zu unterscheidenden Datenwerte durch eine MappingID (MID) zu repräsentieren. Jeder Datenwert wird gemäß mancher Implementierungsbeispiele nur noch über seine MID in den feldspezifischen Listen gespeichert, so dass zu jeder FID alle in dessen Kontext vorkommenden MIDs gespeichert sind. Dabei können die Datenwerte nach Feld klassifiziert werden oder nach Datentyp, z.B. Char, Text, Ganzzahlen, Float, Datum/Zeitstempel, UUID-Werte, Binärwerte, etc. Für jedes Feld oder für jeden Datentyp kann z.B. eine Sortierung der MIDs vorgenommen werden, sodass die MIDs in der Mapping-Tabelle 210 in der Reihenfolge gespeichert sind, als wären die zughörigen ursprünglichen Datenwerte sortiert. Damit besteht die Möglichkeit, die Inhalte einer feldspezifischen Datenwertliste mit ihren dort vorkommenden MIDs zu sortieren, ohne zuvor die Inhalte selbst laden zu müssen. Das bedeutet, der Vornamensliste Anton-Bertram-Christoph-Doris-Emil würden die MIDs so zugewiesen werden, dass der numerische Wert der MID von Anton in der Sortierreihenfolge der Mapping-Tabelle vor allen anderen Vornamen-MIDs kommt, der numerische Wert von Bertram käme an zweiter Stelle, u.s.w.

Die Datenstrukturen können außerdem feldspezifische Datenstrukturen 216 enthalten, die sortierte und durchsuchbare Datenwerte beinhalten, die jeweils mit einer Negativliste 220 und einer Positivliste 218verknüpft gespeichert sind. Diese können verwendet werden, um auch Änderungen, die noch nicht konsolidiert und in den Datenwertlisten 116 gespeichert sind, zu berücksichtigen.

Beispielsweise kann das DVS-System nach Erhalt einer Suchanfrage mit einem feldbezogenen Suchwert den Suchwert zunächst mittels der Mappingtabelle 210 in eine Mapping-ID übersetzen. Mit dieser Mapping-ID wird sodann diejenige der feldspezifischen Datenwertlisten 116 durchsucht, die das Feld repräsentiert dem der Suchwert zugewiesen ist. Optional kann in diesem Schritt i) auch eine sortierte Anordnung 216 von Datenwerten bzw. Mapping-IDs durchsucht werden, welche noch nicht konsolidierte Änderungen enthält, die in Form von Negativlisten und Positivlisten gespeichert sind, um die auf Basis der Datenwertlisten 116 erhaltenen Datensatz-IDs noch so zu erweitern und/oder zu reduzieren, dass die noch nicht konsolidierten Änderungen berücksichtigt werden. Die so in diesem ersten Suchschritt i) gewonnenen Datensatz-IDs werden als Zwischenergebnis 162 verwendet, das i nachfolgenden Schritten ii-iv) mit weiteren Daten angereichert wird. Die weiteren Daten können Datenwerte der in i) ermittelten Datensätze beinhalten und optional auch weitere Datensätze, die den in i) ermittelten Datensätzen über- oder untergeordnet sind. Die angereicherten Daten werden als Ergebnis 164 zurückgegeben.

Im Folgenden werden einige konkrete Beispiele einiger der Datenstrukturen der Figur 3 gemäß beispielhafter Implementierungsvarianten beschrieben.

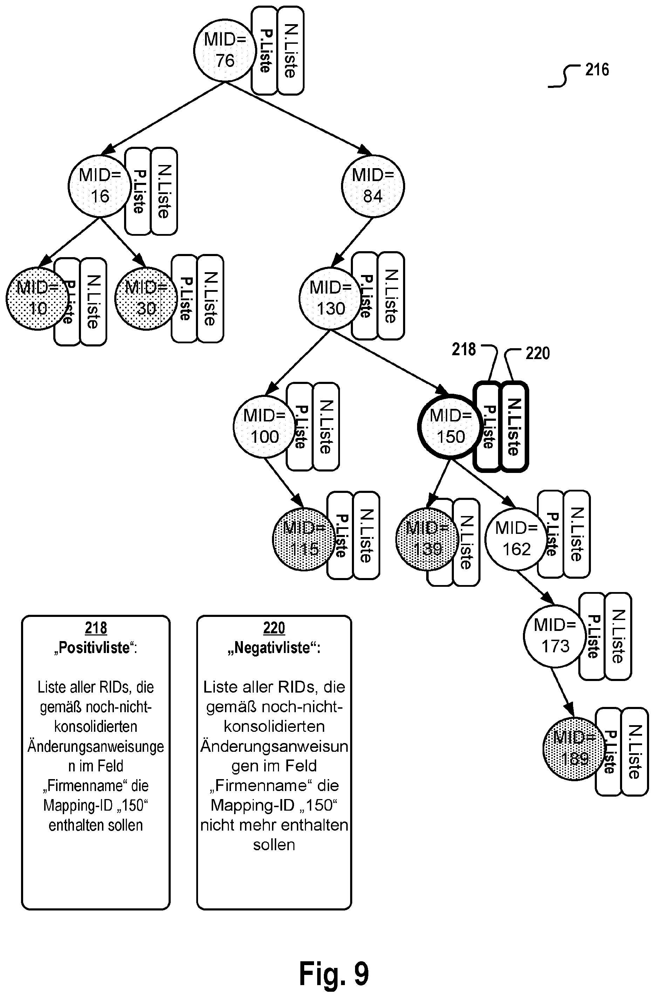

Die logischen Datensätze bestehen jeweils aus ein oder mehreren Feld-Datenwert-Paaren, wobei die Datenwerte Mapping-IDs sind. Ein logischer Datensatz kann aus beliebig vielen solcher Paare bestehen. Die Adresszuweisungstabelle 226 verweist auf den AOD-Eintrag innerhalb der Append-Only-Datenstruktur 202, in dem die Datenwerte der einzelnen Felder verschiedener logischer Datenfolge in der Reihenfolge des Empfangs entsprechender Änderungsanweisungen gespeichert sind. Neue AOD-Einträge werden grundsätzlich an das Ende der Datenstruktur 202 geschrieben, wobei das DVS im Zuge der Erzeugung eines neuen AOD-Eintrags die Unterschiede des neuen Datensatzes zum bisherigen Datensatz ermittelt und die Änderungen in dem neuen AOD-Eintrag spezifiziert und speichert. Der neue AOD Eintrag enthält eine Sprungadresse ("Pointer"), der auf den bisherigen Inhalt verweist. Der Pointer kann insbesondere einen Dateioffset spezifizieren, der berechnet wird ausgehend vom ersten AOD-Eintrag innerhalb der Datenstruktur 202. Einmal geschrieben werden die AOD-Einträge nie wieder verändert, sondern nur ergänzt. Da in jedem logischen Datensatz gemäß manchen Implementierungsvarianten das gleiche Feld in einem logischen Datensatz mehrfach vorkommen und mit unterschiedlichen Mapping-IDs belegt sein kann, wird vorzugsweise auch jedes ersetzte Feld-Datenwert-Paar in einer negativ-Liste gespeichert, währenddessen das nun aktuelle Feld-Datenwert-Paar in eine Positivliste geschrieben wird. Beim erstmaligen Hinzufügen eines Feld-DatenwertPaares zu einem Datensatz wird das neue Feld-Datenwert-Paar in die Positivliste aufgenommen. Im Fall einer Löschung wird das Feld-Datenwert-Paar in die Negativste übernommen. Die Positivlisten und Negativlisten sind z.B. im Hinblick auf Figur 9 näher beschrieben. Um bei vielen Bearbeitungen das System beim Laden zu optimieren, enthält gemäß Ausführungsformen des Verfahrens jeder AOD-Eintrag eine Kennung (ein Flag), die spezifiziert, ob der aktuelle AOD-Eintrag das Laden der Vorgänger erfordert ("unvollständiger AOD-Eintrag") oder nicht ("vollständiger" bzw. "ladungsvollständiger" AOD-Eintrag). Die Historie aller Änderungsanforderungen ist aber immer noch verfügbar und kann z.B. als Blockchain in einer manipulationssicheren Weise gespeichert werden.

Zusätzlich oder alternativ dazu können die AOD-Einträge auch weitere Kennungen beinhalten, z.B. Kennungen, die spezifizieren, ob der AOD-Eintrag sich auf einen Datensatz bezieht, zu welchem es übergeordnete und/oder untergeordnete Datensätze gibt (Kennung bzgl. sog. "Wiederholgruppen"). Vorzugsweise beinhalten zumindest einige der logischen Datensätze ein entsprechendes Verweisfeld, z.B. ein "ist-übergeordnet-zu" und/oder ein "ist-untergeordnet-zu" Feld. Dieses Feld enthält die IDs des Datensatzes, das dem betroffenen Datensatz mit dem Feld über- bzw. untergeordnet ist. Sollen zu einem Motor mehrere Bauteile eingetragen werden, so werden die Bauteile z.B. als logische Datensätze mit ihrer Artikelnummer und ihren technischen Eigenschaftengespeichert, wobei die Bauteil-Datensätze in dem Feld "ist-untergeordnet-zu" die Datensatz-ID des Motors beinhalten. Erfolgt ein Bauteil-Eintrag erst nachdem der Motor-Datensatz geschrieben wurde, so wird eine Änderung des logischen Datensatzes des Motors durch einen Ergänzungs-AOD-Eintrag geschrieben, der nur aus einer Kennung "ist-untergeordnet-zu" = WAHR besteht. Dies kann z.B. durch Speichern eines Bitwerts von 1 für diese Kennung erfolgen. Jetzt können beliebig viele neue Bauteil-Datensätze erzeugt und entsprechende AOD-Einträge geschrieben werden, deren Gemeinsamkeit das Feld-Datenwertpaar "ist-untergeordnet-zu"-"Motor MF-3000" ist. Bei der Datenausgabe kann, sofern eine erweiterte bzw. rekursive Ausgabe gewünscht ist, nicht nur ein bestimmtes Bauteil ausgegeben werden, sondern auch Angaben zum Motortyp, in welchem es verbaut ist bzw. verbaut werden kann. Dieser Vorgang ist rekursiv anwendbar, da zu jedem Motor ein Fahrzeug übergeordnet sein kann, welches diesen Motor enthält. Deshalb besteht die Möglichkeit, beliebig geschachtelte Inhalte zu schreiben und auszugeben, ohne zuvor die Struktur der Daten zu kennen.

In manchen Implementierungsbeispielen unterstützt die Append-Only-Datenstruktur auch die Speicherung und Rekonstruktion vollständiger zeitlicher Verläufe bezüglich der Änderung von logischen Datensätzen. Im untenstehenden Beispiel ist die Feld-ID (FID)=2 reserviert für die Verkettung von Verlaufsinformationen. Ändert sich z.B. die Adresse einer Person wegen Umzugs, so ist die bisherige Adresse nicht falsch, sondern ihre zeitliche Gültigkeit ("Validität") ist abgelaufen. Deshalb werden deren feldbezogene neuen Datenwerte (neue Str, HausNr, Plz, Ort) in einen neuen logischen Datensatz DSₙₑᵤ übertragen, in dem in FId=2 die ID des bisherigen Datensatzes (DSₐₗₜ also die ID des Datensatzes, der eine veraltete Version des neuen Datensatzes darstellt) eingetragen wird. Der alte Datensatz DSₐₗₜ wird mit zwei Zeitstempeln (von/bis) in Form eines AOD-Eintrags gespeichert. Dieser Validitätszeitraum eines logischen Datensatzes und des zu diesem korrespondierenden AOD-Eintrags ergibt sich aus dem Gültigkeitszeitraum, währenddessen seine Daten gültig waren. Das Ende dieses Zeitraums legt damit auch automatisch den Beginn der Gültigkeit des aktuellen (bzw. aktuelleren) Datensatzes und mindestens einem seiner Werte fest. Der Beginn der Gültigkeit des AOD-Eintrags zur Datensatzverlaufsgeschichte ("Verlaufseintrag") ergibt sich entweder aus einer vorherigen Gültigkeit oder kann manuell festgelegt werden. Das folgende Beispiel auf Basis von ursprünglichen Datenwerten zeigt AOD-Einträge mit Bezug auf Vorversions-Datensätze und hierarchisch-verknüpfte Datensätze.

Datensatz:
Firma="Cortex Innovations"
ist-Arbeitgeber-fuer=" Angestellter A, 1.2.1990 - Angestellter B, 7.12.1988 - Angestellter C, 1.5.2001
Geschäftsstellen="Isernhagen, Tischlerstr. 1a, 30916, Niedersachsen - Bendeleben bis Gebietsreform: Kalkuferstr. 7, 99707 Bendeleben - Bendeleben nach Gebietsreform: Kalkuferstr. 11, 99703 Kyffhäuserland
Damit ergitb sich folgende Repräsentation in der Append-Only-Datei, wobei das Feld mit FID=1 einen Rückbezug auf eine Datensatz-Vorgängerversion beinhaltet, wobei RID der Bezeichner einer Datensatz-ID ist, und wobei die Kennung has_nR ("has nested records") angibt, ob weitere Datensätze existieren, die in einer hierarchischen Beziehung zu dem Datensatz stehen, auf den sich der AOD-Eintrag bezieht:
   **RId:4711: Firma Cortex Innovations** Flag:has_nR
   RId=4712, **FId:1=4711** FId:12=Vorname-Angestellter-A FId:13= Nachname-Angestellter-A, FId:4:1.2.1990
   RId=4713, **FId:1=4711** FId:12= Vorname-Angestellter-B FId:13= Nachname-Angestellter-B, Fld:4:7.12.1988
   Rld:4714, **FId:1=4711,** Fld:12= Vorname-Angestellter-C, Fld:13= Nachname-Angestellter-C, 4:1.5.2001
   Rld:9876654, **FId:1=4711,** 2: Vorname-Angestellter-D, 3: Vorname-Nachname-D, 4:8.6.54
   RId:123456789 **FId:1=4711,** FId:47=Isernhagen, FId:46=30916, Fld:50=Tischlerstr. 1a, Fld:55=Niedersachsen
   RId:1234568 **FId:1=4711,** Fld:47=Kyffhäuserland, FId:46=99703, Fld:50=Kalkuferstr. 11, Fld:55=Thüringen
   **RId=999991234 FId:2=1234568,** Fld:47=Bendeleben, FId:46=99706, Fld:50=Kalkuferstr. 7, T1=1, T2=30.05.2017

Anhand des Beispiels ist ersichtlich, dass der AOD-Eintrag, der sich auf den Datensatz RId=999991234 bezieht, nicht nur eine ID dieses Datensatzes RId=999991234 beinhaltet, sondern im Feld mit der FID=2 auch die RID der Vorgängerversion des gleichen Datensatzes enthält, nämlich 1234568. Das DVS System kann, falls die komplette Historie oder nur die vormals gültige Version des Datensatzes zur Firma Cortex ausgegeben werden soll, die Adresszuweisungstabelle nach dem Inhalt des Vorversionsverweisfeldes (FID=2) durchsuchen, also nach dem Wert 999991234 Es wird dadurch an die Adresse des AOD-Eintrags erhalten, der die letzte Änderung dieser Vorversion enthält, sodass die in diesem AOD-Eintrag enthaltenen Daten sowie ggf. weitere historische Daten, die über Sprungadressen innerhalb dieses AOD-Eintrags erreichbar sind, ausgegeben werden können.

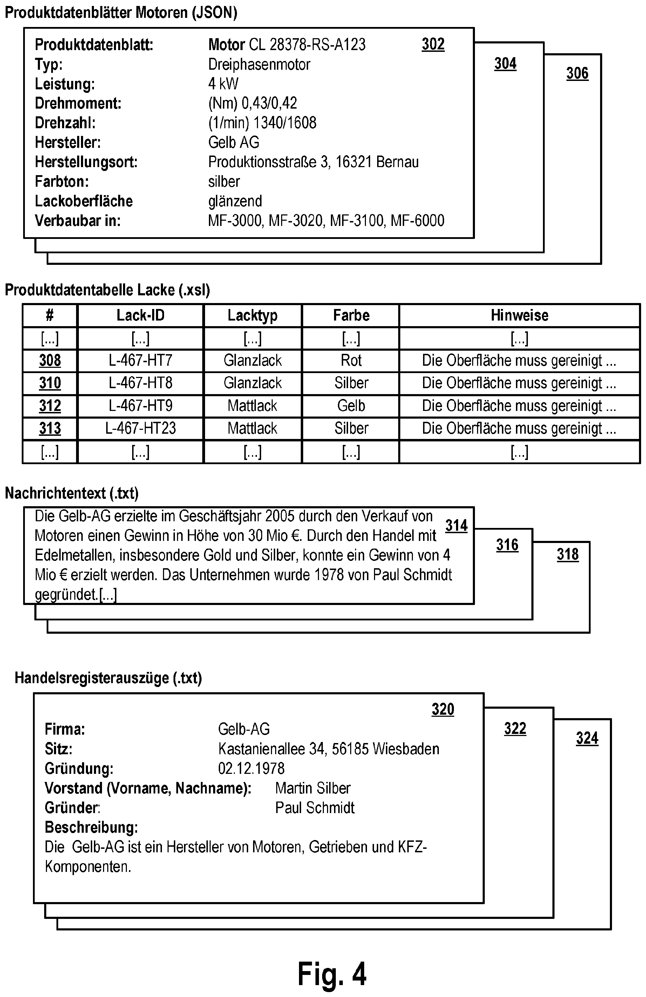

**Figur 4** zeigt Beispiele verschiedener Typen von Rohdaten, die von dem DVS-System in ursprüngliche Datenwerte, hier Strings aus Unicode-Zeichen, zerlegt und Feldern zugewiesen werden, die auf Mapping-IDs gemappt werden und die Mapping-IDs als Datenwerte logischer Datensätze verwendet werden. Diese logischen Datensätze werden in Form von feldspezifischen Datenwertlisten, die eigentlich feldspezifische Mapping-ID-Listen sind, gespeichert. Im Folgenden werden zu Illustrationszwecken die ursprünglich erhaltenen Datenwerte als die Datenwerte der logischen Datensätze beschrieben, vorzugsweise handelt es sich bei den Datenwerten der logischen Datensätze und der feldspezifischen Datenwertlisten jedoch um die numerischen Mapping-IDs dieser ursprünglichen Datenwerte.

Beispielsweise sind die Datenstrukturen 302, 304 und 306 Produktdatenblätter von Motoren eines Herstellers im JSON Format (aus Platzgründen hier dargestellt als Tabulator-getrennte Textdatei). Beispielsweise kann der Import der aus den Rohdaten gewonnenen logischen Datensätze in die Datenbank so erfolgen, dass jede einzelne der drei JSON Dateien 302,304 und 306 als eigenes Datenobjekt bzw. als eigener logischer Datensatz mit je einer Datensatz-ID interpretiert wird. Jedes Datenobjekt enthält mehrere Feld-Datenwert-Paare wie zum Beispiel einen konkreten Datenwert für das Feld "Leistung", einen konkreten Datenwert für das Feld "Drehmoment" usw.

Bei der darunter dargestellten Datenstruktur handelt es sich um eine Exceltabelle mit einer Spezifizierung verschiedener Eigenschaften von Lacken eines Lackhändlers. In jeder Zeile 308-313 ist genau ein Datenobjekt (Datensatz) enthalten. Beim Parsingprozess kann jedem erkannten Datenobjekt beispielsweise die Zeilennummer in Kombination mit einem Identifikator dieser Exceltabelle als Datensatz-ID zugewiesen werden.

Ein Teil der Rohdaten kann in Form von Textdaten, zum Beispiel Textdateien 314-318, bereitgestellt werden. Beispielsweise könnte ein rein syntaktischer Parser zur Zerlegung dieses Textes in einzelne Wörter (die jeweils als Datenwert fungieren) verwendet werden. Beispielsweise kann der syntaktische Parser ein Tokenisierer sein, der natürlichsprachliche Texte in Wörter zerlegt, die (abgesehen ggf. von einigen Stoppwörtern) als Datenwerte verwendet. In diesem Fall kann den Wörtern/Datenwerten beim Import z.B. automatisch ein Feld zugewiesen werden, z.B. durch automatische Erkennung deren semantischer Bedeutung durch NLP-Techniken.

Ein weiterer Teil der Rohdaten kann z.B. in Form von Handelsregisterauszügen 320-324 bereitgestellt werden. Diese können eine Mischung aus Schlüssel-Wert-Feldern und Freitext beinhalten.

Die Rohdaten stammen aus unterschiedlichen Quellen, haben aber teils inhaltliche Überschneidungen ("Gelb-AG"), teils mehrdeutige Datenwerte ("Silber"). Ausführungsformen erlauben dennoch eine effiziente Integration und Verarbeitung all dieser Daten unter Auflösung semantischer Ambiguitäten, z.B. indem beim Import der Kontext der Rohdaten berücksichtigt wird und der Datenwert "Silber" je nach Kontext als Nachname oder als Metall interpretiert wird und dessen Mapping-ID entweder in die Vornamen-Datenwertliste oder in die Metall-Datenwertliste samt zugehöriger Datensatz-ID gespeichert wird bzw. falls diese Mapping-ID dort schon vorhanden ist, die Menge der dieser Mapping-ID zugeordneten Datensatz-IDs entsprechend erweitert wird.

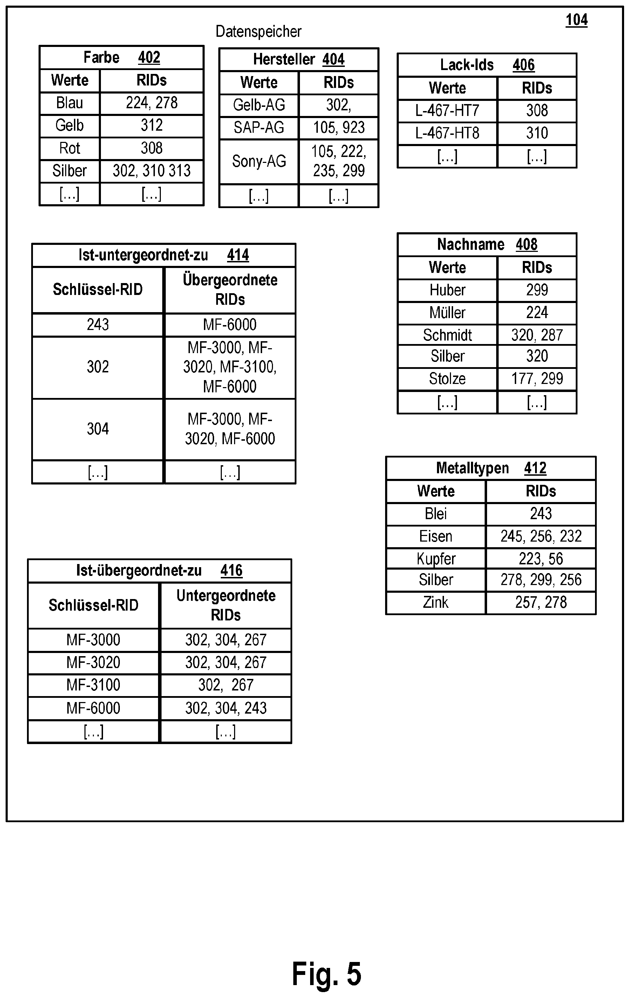

**Figur 5** zeigt Beispiele für die Transformation einiger der in Figur 4 dargestellten Rohdaten in feldspezifische Datenwertlisten. Auch hier werden gemäß bevorzugter Implementierungen des Verfahrens eigentlich numerische Mapping-IDs der ursprünglichen Datenwerte in den Listen gespeichert, zu Illustrationszwecken werden hier aber Listen mit den ursprünglichen Datenwerten gezeigt.

Die in den redundanzfreien Listen 402, 404, 406, 408, 412, 414, 416 gezeigten Datenwerte sind ebenfalls nur eine Auswahl, typischerweise sind die Listen erheblich länger.

Sämtliche vom DVS System gemäß eines hier illustrierten Beispiels erzeugten und verwalteten feldspezifischen Datenwert-Listen sind redundanzfrei, d. h., sie enthalten jeden Datenwert nur einmal. Vorzugsweise sind die Datenwerte außerdem sortiert, sodass eine sequenzielle Suche in den Listen abgebrochen werden kann, wenn auf Basis der Einsortierung des Suchbegriffs in der Ordnung und der bereits durchsuchten Datenwerte der Liste ausgeschlossen ist, dass eine weitere Suche in der Liste einen Treffer ergibt.

Beispielsweise beinhalten die logischen Datensätze z.B. folgende Felder: Farbe, Hersteller, Lack-ID (des Herstellers), Nachname, und Metalltypen. Diese Felder sind jeweils durch die feldspezifischen Datenwertlisten 402,4 404, 406, 408, und 412 repräsentiert.

Es ist möglich, dass der gleiche Datenwert "Gelb-AG" je nach Kontext verschiedenen Feldern zugewiesen ist. Beispielsweise ist der Datenwert "Silber" in manchen logischen Datensätzen eine Farbe und wird in der Liste 402 verknüpft mit den Datensatz-IDs derjenigen Datensätze gespeichert, die den Wert "Silber" als Farbbezeichner enthalten. Der Datenwert "Silber" kann in anderen logischen Datensätzen dem Feld "Metalltyp" zugewiesen sein und wird in der Liste 412 verknüpft mit den Datensatz-IDs derjenigen Datensätze gespeichert, die den Wert "Silber" als Metalltyp enthalten.

Die Speicherung der Datenwerte in den Listen erfolgt abhängig von deren jeweiligen Feldern, denen sie zugewiesen sind, jedoch unabhängig von der Zugehörigkeit zu logischen Datensätzen. Somit wurde die ursprüngliche Struktur der Datenobjekte in den Rohdaten bei der Erzeugung der Listen in struktureller Hinsicht völlig aufgelöst, denn die Zuweisung von Datenwerten zu den Datensätzen ist ausschließlich noch in Form der Datensatz-IDs vorhanden und rekonstruierbar.

Vorzugsweise umfassen die Datenstrukturen auch eine redundanzfreie Datenwertliste 414, die einen Relationstyp "ist-untergeordnet-zu" zwischen verschiedenen Datensätzen repräsentiert und/oder eine redundanzfreie Datenwertliste 416, die einen Relationstyp "ist-übergeordnet-zu" zwischen verschiedenen Datensätzen repräsentiert.

Beispielsweise enthält die Liste 414 eine nicht-redundante, sortierte Liste einzelner Datensatz-IDs, die aufgrund der Sortierung schnell durchsucht werden kann. Diese Datensatz-IDs sind in der "Schlüssel-ID" Spalte gespeichert. Jede dieser Schlüssel-IDs" ist mit ein oder mehreren Datensatz-IDs von Datensätzen verknüpft gespeichert, welche dieser "Schlüssel-ID" übergeordnet sind. Beispielsweise können die IDs in der Schlüssel-ID-Spalte der Liste 414 bestimmte Bauteile repräsentieren, welche in ein oder mehrere größere Bauteile, zum Beispiel Motoren, eingebaut werden können. Beispielsweise kann das Bauteil mit der Datensatz-ID (RID) 304 in die Motortypen MF-3000, MF-3020 und MF-6000 verbaut werden. Diese Motorentypen sind also diesen Bauteilen in gewisser Weise übergeordnet.

Beispielsweise kann das DVS-System eine Suchanfrage nach Motoren-Komponenten empfangen und in einem Schritt i) zunächst nur die Datensatz-ID dieser Komponenten ermitteln. Falls in der Anfrage spezifiziert ist, dass außerdem auch übergeordnete Komponenten ausgegeben werden sollen, wird die Liste 414 mit den Datensatz-IDs dieser Komponenten durchsucht, um ein oder mehrere Datensatz-IDs von Motortypen (oder anderen übergeordneten Bauteilen) zu ermitteln und auch die Datensatz-IDs dieser übergeordneten Motoren bzw. Komponenten mit Attributen (Datenwerten) zu vervollständigen und auszugeben.

In analoger Weise kann in der Anfrage oder zum Beispiel in einer Konfigurationsdatei des DVS-Systems spezifiziert sein, dass ergänzend zu den Treffern auf die Suchwerte der Anfrage auch Datensätze zurückgegeben werden sollen, die diesen Treffern untergeordnet sind. Somit ist es zum Beispiel auch möglich, zunächst eine Datenbank Anfrage zu bearbeiten, welche ein oder mehrere Motortypen ermittelt, wobei automatisch durch Analyse der Datenwertliste 416 auch die IDs derjenigen Datensätze ermittelt, die diesen Motortypen untergeordnet sind, zum Beispiel weil sie Komponenten dieser Motortypen darstellen.

Durch Bereitstellen von nicht-redundanten Datenwertlisten 414, 416, die Beziehungen bezüglich der Übergeordnetheit oder Untergeordnetheit von Datensätzen repräsentieren ist es möglich, auf effiziente Art und Weise für jede denkbare Suchanfrage sehr viel Kontext Information der Ergebnisse auszugeben, ohne dass hierfür eine Spezifikation komplexer und daher in der Regel sehr langsamer Datenbankabfragen erforderlich ist. Durch iterative Wiederholung der Suche in den letzten 414,416 ist es möglich, auch übergeordnete und/oder untergeordnete Datensätze der 2. März oder weitere Ebenen auszugeben. Somit kann zum Beispiel bei sehr komplexen Maschinen auf sehr effiziente Weise für jede Komponente die Gesamtheit ihrer Unterkomponenten bis hin zur einzelnen Schraube ermittelt und ausgegeben werden.

Somit wird eine höchst effiziente Such- und Aggregationsmöglichkeit für Datensätze bereitgestellt, die über hierarchische Beziehungen miteinander verknüpft sind, die auch von Datenverarbeitungsgeräten mit wenig Arbeitsspeicher und/oder Rechenkapazität verwendet werden kann.

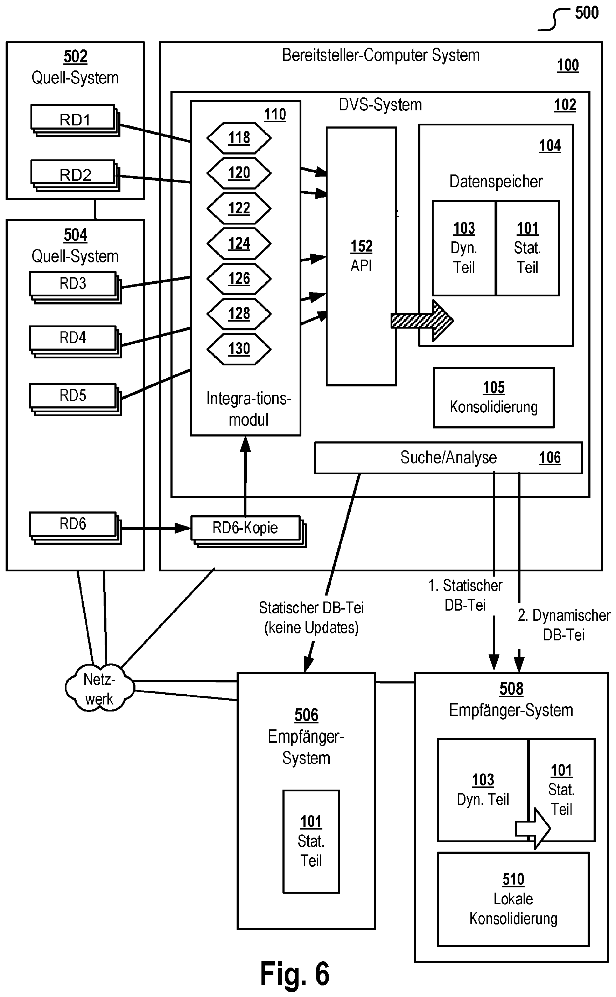

**Figur 6** zeigt ein Blockdiagramm eines verteilten Systems 500 zur Nutzung konsolidierter und nicht-konsolidierter Versionen einer Datenbank.

Das System 500 kann zum Beispiel ein Bereitsteller-Computersystem 100 sowie ein oder mehrere Empfänger-Computersysteme 506, 508 umfassen. Das Empfänger-Computersystem dient dazu, logische Datensätze in Form von nicht-redundanten feldspezifischen Datenwertlisten in einer Datenbank 104 zu speichern und aktuell zu halten. Beispielsweise kann gemäß mancher Implementierungsvarianten das Bereitsteller-Computersystem 100 das DVS-System 102 beinhalten, welches über eine API Suchanfragen erhalten und verarbeiten kann und/oder über die API an verschiedene Quellsysteme 502, 504 gekoppelt sein, von welchen Rohdaten empfangen, verarbeitet und als logische Datensätze in Listenform gespeichert werden. Wie bereits beschrieben kann die Datenbank z.B. zu einem bestimmten Zeitpunkt (Konsolidierungszeitpunkt) einen statischen Datenbankteil 101 beinhalten. Dieser umfasst insbesondere eine Vielzahl von logischen Datensätzen, deren feldspezifische Datenwerte in Form von feldspezifischen nicht-redundanten Datenwertlisten verteilt gespeichert sind. Änderungen an den bestehenden und bereits konsolidierten Datenwerten und/oder Datensätzen werden zunächst nicht in diesen feldspezifischen Datenwertlisten gespeichert, sondern in Form von AOD-Einträgen innerhalb einer Append-Only-Datenstruktur sowie vorzugsweise in Form von negativ und/oder Positivlisten. Der noch nicht konsolidierte Teil der Append-Only-Datenstruktur sowie die Negativlisten Positivlisten repräsentieren den dynamischen Teil 103 der Datenbank 104. Vorzugsweise beinhaltet nur das Bereitsteller-Computersystem 500 über geeignete Programme zum Import neuer Datensätze, zum Beispiel über Parser 118-130 oder sonstige Programmmodule 110, die in der Lage sind, logische Datensätze aus Rohdaten zu gewinnen. Dies stellt sicher, dass es nur eine einzige Datenbankinstanz gibt, die laufend geändert und aktualisiert wird und nicht verschiedene Instanzen der gleichen Datenbank unabhängig voneinander geändert werden und damit inkonsistent werden können.

Es kann aber nötig sein, den Datenbankinhalt physisch auf lokale Speicher von ein oder mehreren Empfänger-Systemen zu replizieren, zum Beispiel um sicherzustellen, dass auch die Empfängersysteme unabhängig von der Verfügbarkeit eine Netzwerkverbindung auf den Inhalt der Datenbank zugreifen können. Oftmals ist es hierfür ausreichend, nur den statischen Teil 101 der Datenbank an das Empfänger-Computersystem 506 zu übertragen, zum Beispiel dann, wenn das Empfänger Computersystem nicht notwendigerweise immer den aktuellsten Stand der Datenbank 104 besitzen muss und es ausreicht, wenn die lokale Kopie auf dem Empfänger Computersystem 506 in sich konsistent ist.

Gemäß einigen Beispielen des Systems 500 wird nicht nur der statische Teil automatisch von dem Bereitsteller-Computersystem 100 an das Empfänger-Computersystem repliziert, sondern auch der dynamische Teil. Dies ist in Figur 6 zum Beispiel im Hinblick auf das Empfänger-Computersystem 508 dargestellt. In diesem Fall enthält auch das Empfänger-Computersystem 508 ein Modul 510 zur Konsolidierung des statischen Teils mit den im dynamischen Teil spezifizierten Änderungen und zur Analyse auch der dynamischen Datenstrukturen (Positivlisten, Negativlisten, nicht-konsolidierter Teil der Append-Only-Datenstruktur) im Zuge der Bearbeitung einer Datenbank-Suchanfrage.

Typischerweise sind die einzelnen Computersysteme 500, 506, 508, 502, 504 über ein Netzwerk, z.B. das Internet, verbunden.

Die in Figur 6 gezeigte Systemarchitektur 500 ist jedoch nur eine von vielen möglichen. Viele alternative Architekturen sind möglich. Z.B. kann die Verarbeitung von Rohdaten auf einem anderen Datenverarbeitungssystem erfolgen wie die Speicherung der Datenbank 104 und die Durchführung der Datenbankabfragen und Datenkonsolidierungen.

**Figur 7** zeigt ein Flussdiagramm eines Verfahrens zur Durchführung einer Datenbankabfrage. Die Schritte des Verfahrens wurden bereits im Zusammenhang mit Figur 1 erläutert.

**Figur 8** zeigt ein Flussdiagramm eines Verfahrens zur Berücksichtigung noch-nicht-konsolidierter Datenwertänderungen in einer Datenbankabfrage.

In Schritt 702 empfängt das DVS-System eine Suchanfrage, die zum Beispiel den Suchwert Stefan bezüglich des Feldes Vorname enthält.

Im nächsten Schritt 710 durchsucht das DVS-System die Mapping-Tabelle 210, um diejenige der Mapping-IDs zu identifizieren, welche dem Datenwert bzw. Suchwert "Stefan" zugewiesen ist. Beispielsweise könnte dies der numerische Wert "150" sein. Diese Mapping-ID "150" wird im Folgenden als der eigentliche Suchwert verwendet.

Mit dem Suchwert "150" wird eine Datenbanksuche auf dem statischen Teil 101 der Datenbank, also auf den feldspezifischen Datenwertlisten, durchgeführt. In dem hier geschilderten Beispiel würde also mit dem Suchwert 150 die Vornamens-Datenwertliste durchsucht und es würde in Schritt i) des in Figur 7 dargestellten Suchverfahrens auf den statischen Daten eine Menge an Datensatz-IDs ermittelt, die als Ergebnis der Durchsuchung des statischen Teils zurückgegeben werden sollen. Dieses Ergebnis repräsentiert den Inhalt der Datenbank 104 zum Zeitpunkt des jüngsten Konsolidierungszeitpunkts und beinhaltet somit nicht die Auswirkungen, welche die seit diesem jüngsten Konsolidierungszeitpunkt erhaltenen Änderungsanforderungen auf das Ergebnis möglicherweise haben. Um auch die noch nicht konsolidierten Änderungen zu berücksichtigen, werden die in Figur 8 beschriebenen Schritte ergänzend zu den zum Beispiel in Figur 7 beschriebenen Schritten durchgeführt.

In Schritt 706 werden Datenstrukturen 216 des dynamischen Teils 103 der Datenbank 104 durchsucht, um Datensätze zu ermitteln, die ein Vornamen-Feld enthalten, dass nach einer noch nicht konsolidierten Änderungsanweisungen nun den Datenwert "Stefan" enthält oder nicht mehr enthält. Bei diesen Datenstrukturen 216 kann es sich insbesondere um Datenstrukturen handeln, die eine sortierte und durchsuchbare Anordnung von Datenwerten, insbesondere von Mapping IDs, enthalten. Bei der durchsuchbaren Anordnung kann es sich zum Beispiel um eine sortierte Liste oder um einen Suchbaum, insbesondere einen B-Baum, handeln. Ein Beispiel für eine solche Datenstruktur ist in Figur 9 abgebildet. Das DVS-System ist dazu konfiguriert, Änderungsanweisungen bezüglich einzelner Datenwerte und/oder ganzer Datensätze zunächst in der Append-Only-Datenstruktur und in einer Datenstruktur mit Positivlisten und Negativlisten, wie z.B. in Fig. 9 gezeigt, zu speichern. In der Datenstruktur 216 sind die Datenwerte, die einem bestimmten Feld zugewiesen sind und gemäß einer der noch nicht konsolidierten Änderungsanweisungen ein oder mehreren Datensätzen hinzugefügt oder aus diesen gelöscht werden sollen, als Elemente der Anordnung repräsentiert. Jedem dieser Datenwerte bzw. Elemente ist dabei eine als Positivliste bezeichnete Liste an Datensatz-IDs und/oder eine als Negativliste bezeichnete Liste an Datensatz-IDs zugewiesen. Die Positivliste enthält selektiv die IDs derjenigen Datensätze, welchen der Datenwert, der von dem Element der Anordnung repräsentiert wird, in das besagte Feld neu hinzugefügt werden soll. Die Negativliste enthält selektiv die IDs derjenigen Datensätze, welche den Datenwert, der von dem Element der Anordnung repräsentiert wird, in diesem Feld nicht länger enthalten soll.

In dem Schritt 706 wird die Datenstruktur 216 mit dem Suchwert "150" durchsucht, bis ein Element (zum Beispiel ein Knoten eines B-Baumes) gefunden wird, der diesen Suchwert "150" und damit den Vornamen "Stefan" repräsentiert, ermittelt. Außerdem würde eine Positivliste und eine Negativliste ermittelt, die diesen Knoten zugewiesen sind. Die Positivliste enthält die Liste aller Datensatz-IDs, die gemäß einer Änderungsanweisung, die das DVS-System nach dem jüngsten Konsolidierungszeitpunkt empfangen hat, den Datenwert "Stefan" bzw. "150" im Feld "Vorname" enthalten sollen, zum Beispiel weil neue Personen Datensätze mit diesem Vornamen der Datenbank hinzugefügt werden sollen und/oder weil sich Vornamen bestehender Personen Datensätze, zum Beispiel nach einer Tippfehlerkorrektur, geändert haben. Die Negativliste enthält die Liste aller Datensatz-IDs, die gemäß einer Änderungsanweisungen, die das DVS System nach dem jüngsten Konsolidierungszeitpunkt empfangen hat, den bisherigen Datenwert "Stefan" nicht mehr enthalten sollen, zum Beispiel weil dieser Personendatensatzes gelöscht werden soll oder nur der Vorname sich geändert hat.

In Schritt 708 wird eine finale Ergebnisliste an Datensatz-IDs berechnet, welches sowohl den statischen Teil als auch den dynamischen Teil der Datenbank 104 berücksichtigt: die Menge an Datensatz-IDs, die auf dem statischen Teil, nämlich der Vornamens-Datenwertliste für den Suchwert 150 ermittelt wurde wird mit der Menge an Datensatz-IDs, die in der Positivliste des Suchwerts 150 enthalten ist, vereinigt. Diese Vereinigungsmenge enthält also jetzt auch die Datensatz-IDs, welche gemäß der jüngsten und noch nicht konsolidierten Änderungsanweisungen ebenfalls den Datenwert 150 bzw. Stefan im Feld Vorname enthalten sollen. Es wird außerdem die Differenzmenge dieser Vereinigungsmenge mit der Menge an Datensatz-IDs, die in der Negativliste des Suchwerts 150 enthalten sind, gebildet. Die so erhaltene Differenzmenge enthält die IDs derjenigen Datensätze nicht mehr, die nach dem jüngsten Konsolidierungszeitpunkt komplett gelöscht wurden oder den Vornamen 150 bzw. Stefan nicht mehr enthalten.

Die Differenzmenge, die in Schritt 710 berechnet wird, kann als neues Ergebnis des Suchschrittes i) verwendet werden, welches im Gegensatz zu Schritt 612 in Figur sieben auch die dynamischen, noch nicht konsolidierten Änderungen berücksichtigen. Vorzugsweise umfasst die Suche nun auch die Durchführung der Schritte 614,616 und 618 analog zu den im Hinblick auf Figur sieben geschilderten Schritten, um nicht nur Datensatz-IDs, sondern komplette Datensätze mit Datenwerten und optional auch übergeordnete und/oder untergeordnete Datensätze oder vorige Datensatzversionen auszugeben.

**Figur 9** zeigt ein Beispiel einer Datenstruktur 216 mit mehreren Positivlisten und Negativlisten. Beispielsweise kann die Datenstruktur eine feldspezifische Datenstruktur sein und zum Beispiel nur die Datenwerte (vorzugsweise in Form vom Mapping-IDs) enthalten, die einem bestimmten Feld (zum Beispiel Vorname) zugewiesen sind. Es ist aber auch möglich, die Datenstruktur an das zu implementieren, also zum Beispiel die Gesamtheit aller Datenwerte der Datenbank in eine einzige durchsuchbare Anordnung zu speichern, wobei in diesem Fall jedem Element der Anordnung ein oder mehrere Felder zugewiesen sind (der Datenwert Silber kann er zum Beispiel ein Metall oder einen Nachnamen oder eine Farbe darstellen). In dem hier beschriebenen Implementierungsbeispiel repräsentiert die Datenstruktur 216 ausschließlich die Datenwerte bzw. Mapping-IDs des Feldes Vorname.

Die in Figur neun dargestellte durchsuchbare Anordnung ist ein B-Baum, in welchem die Mapping-IDs gemäß ihrem numerischen Wert sortiert gespeichert sind. Die Suche nach dem Suchwert 150 in diesem Baum endet an dem Knoten, der die Mapping ID (MID) 150 beinhaltet. Diesem Knoten ist die Negativliste 220 und die Positivliste 218 zugewiesen.

Die Positivliste 218 enthält die IDs aller Datensätze, welche gemäß einer nach dem jüngsten Konsolidierungszeitpunkt empfangenen Änderungsanweisungen neu in die Datenbank geschrieben werden sollen und den Vornamen Stefan bzw. Mapping ID 150 im Vornamen-Feld beinhalten. Die Positivliste 218 enthält außerdem die Datensatz-IDs aller Datensätze, die bereits vor dem jüngsten Konsolidierungszeitpunkt Bestandteil der Datenbank waren, deren Vornahme aber erst gemäß einer nach dem jüngsten Konsolidierungszeitpunkt empfangenen Änderungsanweisungen zu Stefan geändert werden sollen.

Die Negativliste 220 enthält die IDs aller Datensätze, welche gemäß einer nach dem jüngsten Konsolidierungszeitpunkt empfangenen Änderungsanweisungen aus der Datenbank gelöscht werden sollen und die den Vornamen Stefan bzw. die Mapping ID 150 im Vornamens-Feld enthielten. Außerdem enthält die Negativliste die Datensatz IDs aller Datensätze, die bereits vor dem jüngsten Konsolidierungszeitpunkt Bestandteil der Datenbank waren und den Vornamen Stefan bzw. die Mapping-ID 150 im Vornamensfeld enthielten, deren Vornahme aber gemäß einer nach dem jüngsten Konsolidierungszeitpunkt empfangenen Änderungsanweisungen auf einen anderen Wert als Stefan bzw. 150 geändert werden soll.

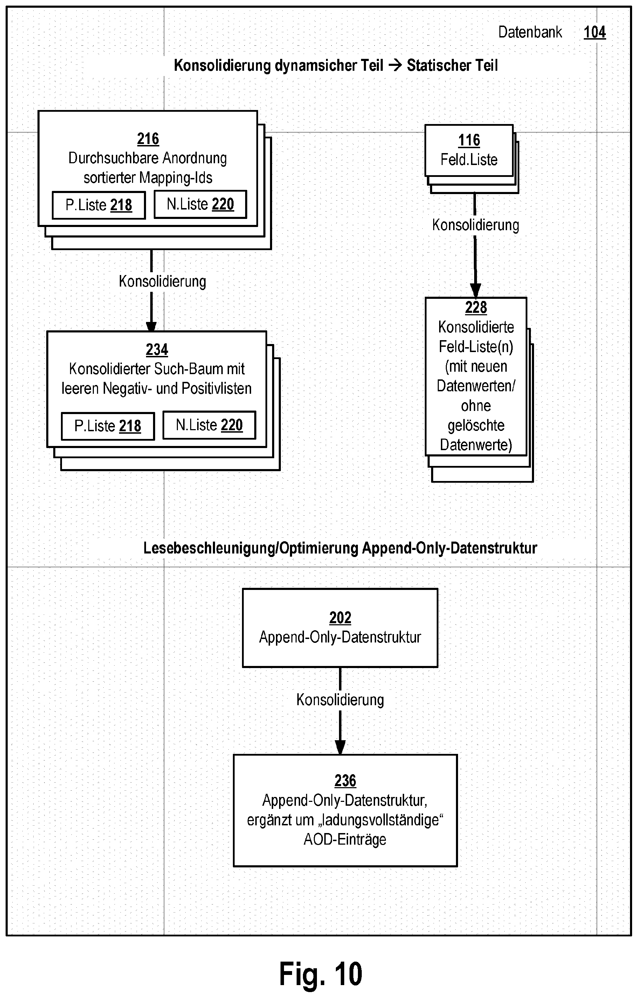

**Figur 10** zeigt ein Blockdiagramm von Datenstrukturen vor und nach einer Konsolidierung sowie den Effekt einer (konsolidierungsunabhängigen) Optimierung der Lesebeschleunigung der Append-Only-Dateistruktur.

Beispielsweise kann im Zuge einer Konsolidierung einer Datenbank der Inhalt sämtlicher Positivlisten und Negativlisten in Form von Änderungen der feldspezifischen Datenwertlisten gespeichert werden. Da die Positivlisten und Negativlisten verknüpft mit einem Feldbezeichner und einem Datenwert (zum Beispiel eine Mapping ID) gespeichert sind, beinhaltet jede Datensatz-ID, die in einer Negativliste oder Positivliste gespeichert ist, eine Information darüber, auf welche Weise der bereits konsolidierte, statische Teil der Datenbank geändert werden muss, um auch die in den Positivlisten und Negativlisten und/oder in dem noch nicht konsolidierten Teil der Append-Only-Datenstruktur enthaltenen Informationen abzubilden. Eine Konsolidierung eines neuen Datensatzes, der ausschließlich Datenwerte beinhaltet, die bereits als Datenwert in den entsprechenden feldbezogenen Datenwertlisten enthalten sind, wird die Zahl der Datenwerte bzw. Mapping-IDs in den feldspezifischen Datenwertlisten nicht verändern (es sei denn, zusätzliche Mapping-IDs werden für bestehende Datenwerte zum Zwecke der Verschleierung der Vorkommenshäufigkeiten erzeugt). Allerdings werden die bestehenden Datenwerte bzw. Mapping-IDs zusätzlich nun auch mit der ID des neuen Datensatzes verknüpft. Falls ein Datensatz gelöscht wird, führt dies zu einer Entfernung der Datensatz-ID aus allen feldspezifischen Datenwertlisten, die einen in diesem Datensatz enthaltenen Datenwert bzw. Mapping-ID enthalten. Auch bei Änderungen, zum Beispiel dem Überschreiben von Datenwerten, wird sich in vielen Fällen nur die Zuweisung von Datensatz-IDs an die entsprechenden Datenwerte bzw. Mapping IDs ändern. Nur dann, wenn ein bestimmter Datenwert zum ersten Mal einem bestimmten Feld zugewiesen wird oder wenn ein Datenwert eines Datensatzes überschrieben oder gelöscht wird, der der einzige Datensatz ist, der diesen Datenwert enthielt, impliziert eine Konsolidierung auch eine Änderung der Anzahl der in einer feldspezifischen Datenwertliste enthaltenen Datenwerte bzw. Mapping-IDs.

Im Zuge einer Konsolidierung werden also die feldspezifischen Datenwertlisten 116 in konsolidierte feldspezifische Datenwertlisten 228 überführt. Die konsolidierten Listen 228 enthalten eine Zuweisung von Datenwerten (bzw. Mapping-IDs) und Datensatz-IDs, welche sämtliche Änderungen reflektiert, die zwischen dem jüngsten vergangenen Konsolidierungszeitpunkt und dem Zeitpunkt der aktuellen Konsolidierung in Form von Änderungsanweisungen von dem DVS System empfangen wurden. Bei den Änderungsanweisungen kann es sich zum Beispiel um klassische SQL-basierte DELETE, UPDATE oder INSERT Anweisungen handeln oder um andere Formen von schreibenden Anweisungen in einer anderen Syntax.

Außerdem werden die Datenstrukturen mit den durchsuchbaren Anordnungen (zum Beispiel Listen, Suchbäumen) von Datenwerten in konsolidierte Versionen 234 dieser Datenstrukturen überführt. Die konsolidierten Versionen der Datenstrukturen können zusätzliche Elemente (Listenelemente sortierter Listen, Knoten von Suchbäumen, etc.) enthalten, welche neu ergänzte Datenwerte bzw. Mapping-IDs reflektieren, die bisher nicht in der Datenbank enthalten waren. Die konsolidierten Versionen 234 der Datenstrukturen 216 können auch eine geringere Anzahl an Elementen enthalten, falls einige Datenwerte bzw. Mapping-IDs komplett aus dem Datenbestand gelöscht wurden. Insbesondere sind die Positivlisten und die Negativlisten der konsolidierten Datenstruktur 234 geleert. Das stellt sicher, dass die Positivlisten und Negativlisten ausschließlich Datensatz-IDs bezüglich solcher Datensätze enthalten, die gemäß Änderungsanweisungen, die nach dem aktuellen Konsolidierungszeitpunkt empfangen wurden, zu ändern sind.

Die Append-Only-Datenstruktur 202 wird kontinuierlich fortgeschrieben. Sie wird also im Zuge einer Konsolidierung typischerweise nicht geleert.

Vorzugsweise ist das DVS-System jedoch dazu konfiguriert, im Zuge einer Konsolidierung oder unabhängig von einer Konsolidierung Änderungen an der Append-Only-Datenstruktur 202 vorzunehmen, welche die Auswertung dieser Datenstruktur im Zuge der Ausführung der Schritte 216 und 218 enorm beschleunigen. Hierdurch wird die Append-Only-Datenstruktur 202 in eine optimierte Form 236 der Append-Only-Datenstruktur überführt. Die Optimierung besteht darin, dass das DVS-System AOD-Einträge erzeugt und in der Append-Only-Datenstruktur 202 speichert, die als "vollständige" bzw. "ladungsvollständige" AOD-Einträge bezeichnet werden und die jedem der Felder eines Datensatzes den aktuellen Datenwert (insb. eine aktuelle Mapping-ID) zuweisen. Diese "vollständigen" AOD-Einträge werden nicht in Antwort auf den Erhalt einer Änderungsanfrage geschrieben, sondern unabhängig davon. Beispielsweise können vollständige AOD-Einträge erzeugt und gespeichert werden nach vordefinierten Zeitabständen, im Zuge einer Konsolidierung, in Antwort auf einen Befehl eines Nutzers oder in Reaktion auf eine Feststellung durch das DVS System, dass die Verarbeitung der Append-Only-Datenstruktur 202 im Zuge der Durchführung einer Suchanfrage zu lange dauert, also zum Beispiel einen vordefinierten Maximalwert an benötigter Zeit überschreitet.

Typischerweise enthalten AOD-Einträge nur die aktuellen Datenwerte von ein oder wenigen Feldern, die gemäß der entsprechenden Änderungsanforderungen geändert werden sollen. Sie enthalten nicht sämtliche Datenwerte des geänderten Datensatzes. Um sämtliche Datenwerte zu ermitteln, muss das DVS-System den Adressen folgen, die in den jeweiligen AOD-Einträgen enthalten sind und die jeweils auf den zuletzt geschriebenen AOD-Eintrag verweisen, der sich auf den gleichen Datensatz bezieht.

Die Erzeugung von AOD-Einträgen erfolgt insbesondere so, dass das DVS-System bereits während des Schreibens eines neuen AOD-Eintrags für einen bestimmten, zu ändernden Datensatz, die Adresse des bereits bestehenden AOD-Eintrags mit der aktuellsten/jüngsten Änderungsanweisungen ermittelt. Diese Ermittlung kann sehr schnell und performant durchgeführt werden anhand der Adresszuweisungstabelle, wo die Datensatz-ID noch mit der Adresse des bestehenden AOD-Eintrags verknüpft gespeichert ist. Dann wird ein neuer AOD-Eintrag mit den jüngsten Änderungen dieses Datensatzes in die Append-Only-Datenstruktur 202 geschrieben, wobei dieser neue AOD-Eintrag die ermittelte Adresse des bestehenden, jüngsten AOD-Eintrags enthält. Außerdem muss die AOD-Eintrags-Adresse, die der Datensatz ID in der Adresszuweisungstabelle zugewiesen ist, aktualisiert werden, sodass die Datensatz-ID nun auf die Adresse des neuen AOD-Eintrags verweist.

Somit kann durch Nachverfolgen der in den AOD-Einträgen enthaltenen Adressen innerhalb der Append-Only-Datenstruktur 202 die gesamte Sequenz aller AOD-Einträge schnell durchsucht werden, die einen bestimmten Datensatz betreffen, bis hin zum aller ersten AOD-Element in der Append-Only-Datenstruktur 202, das diesen Datensatz betrifft. Obwohl dieses adressenbasierte Springen innerhalb der Append-Only-Datenstruktur 202 sehr effizient ist, kann die Effizienz dadurch weiter gesteigert werden, dass im Zuge gelegentlicher Optimierungen, die synchron oder asynchron zu den sonstigen Datenbankkonsolidierungen ablaufen können, auch vollständige AOD-Einträge geschrieben werden, sodass die Rückverfolgung nach wenigen Rückverfolgungsschritten beendet werden kann, da mit dem Erreichen eines vollständigen AOD-Eintrags sämtliche aktuell gültigen Datenwerte eines Datensatzes bekannt sind.

Gemäß einer Implementierungsvariante wird die AOD-Datenstruktur im Zuge einer Konsolidierung oder unabhängig von einer Konsolidierung optimiert um die Ausführung der Schritte 216 und 218 zu beschleunigen. Dies kann z.B. dadurch erfolgen, dass eine Kopie des Inhalts der AOD-Datei erzeugt wird, wobei in der Kopie der Inhalt mehrerer AOD-Einträge, die sich auf den gleichen Datensatz beziehen, zusammengefasst werden, sodass eine AOD-Datenstruktur entsteht, deren AOD-Einträge alle vollständige AOD Einträge sind oder die zumindest einen höheren Gehalt an vollständigen AOD-Einträgen hat als die ursprüngliche AOD-Datenstruktur. Die modifizierte Kopie wird sodann für die Komplettierung der auszugebenden Datensätze verwendet. Bei der Verarbeitung von AOD-Einträgen zur Komplettierung der Ergebnis-Datensätze müssen weniger Zugriffe auf AOD-Eintrags-Adressen erfolgen, weil ein höherer Anteil der AOD-Einträge vollständige AOD Einträge sind, sodass nicht auf weitere, in der Vergangenheit liegende Einträge zurückgegriffen werden muss.

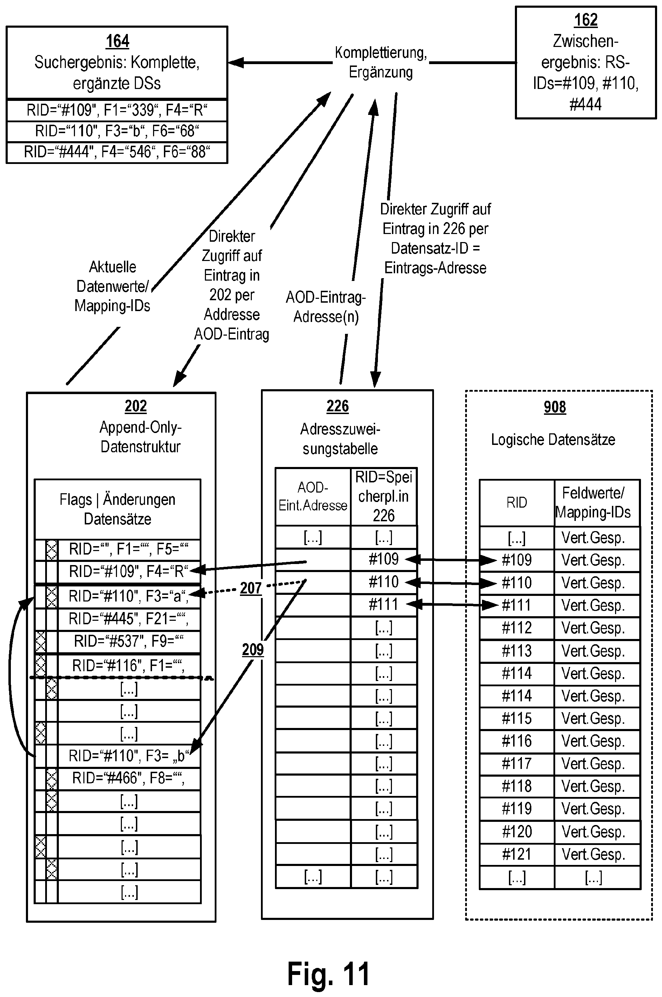

**Figur 11** zeigt Datenstrukturen zur effizienten Ausgabe kompletter logischer Ergebnisdatensätze gemäß eines weiteren Implementierungsbeispiels. Die Datenstrukturen umfassen eine Adresszuweisungstabelle 226 und eine Append-Only Datenstruktur 202, wie sie bereits für andere Implementierungsvarianten, z.B. der in Figur 3 gezeigten Variante, beschrieben wurden. Die logischen Datensätze 908 sind hier als Block mit gestrichelter Linie dargestellt, um klarzustellen, dass die logischen Datensätze vorzugsweise nicht in Tabellenform, sondern in Form nichtredundanter Datenwertlisten bzw. Mapping-ID Listen gespeichert werden. Der Bezeichner "VertGesp" gibt an, dass eine verteilte Speicherung der Feldwerte bzw. Mapping-IDs dieser Datensätze in mehreren nichtredundanten Datenwertlisten erfolgt.

Bei der in Figur 11 dargestellten Implementierungsvariante ist das DVS-System dazu ausgebildet, bei der Erstellung und/oder dem Import neuer logischer Datensätze auch einen diesem Datensatz eineindeutig zugeordneten neuen Eintrag in der Adresszuweisungstabelle 226 zu erzeugen, und dem neuen logischen Datensatz eine ID zuzuweisen, die explizit oder implizit die Speicheradresse des diesem Datensatz zugewiesenen Eintrags in der Adresszuweisungstabelle spezifiziert. So spezifiziert die Datensatz-ID "#109" die Speicheradresse einer diesem Datensatz eineindeutig zugewiesenen Zeile innerhalb der Adresszuweisungstabelle 226, und die Datensatz-ID "#110" eines anderen Datensatzes die Speicheradresse einer diesem anderen Datensatz eineindeutig zugewiesenen Zeile innerhalb er Adresszuweisungstabelle 226. Dies ist durch die Doppelpfeile angedeutet. Der Eintrag/die Zeile in der Adresszuweisungstabelle 226 für den Datensatz #110 beinhaltet die Speicheradresse eines bestimmten AOD-Eintrags, nämlich dem mit den jüngsten Änderungen, im Zuge welcher der Wert des Feldes F3 auf "b" gesetzt wurde. Dieser AOD-Eintrag wiederum referenziert auf/beinhaltet die Adresse des nächst-älteren AOD-Eintrags, der sich auf den gleichen Datensatz #110 bezieht, und der in diesem Fall den früheren Wert des Feldes F3 spezifiziert, nämlich "a".

Vorzugsweise wird eine Datenbankabfrage zweistufig ausgeführt: in einem ersten Schritt werden zunächst nur die IDs der logischen Datensätze, die zurückgegeben werden sollen, ermittelt, nicht jedoch die Feldwerte dieser Datensätze. In der hier beschriebenen Variante kann dieser Schritt durch Auswertung der Datenwertlisten durchgeführt werden.

Erst im zweiten Schritt werden ausgehend von den IDs der Datensätze unter Verwendung der Adresszuweisungstabelle und der AOD-Datenstruktur die Datenwerte (z.B. Mapping-IDs) ermittelt, die den Ergebnisdatensätzen aktuell zugewiesen sind, und komplette Datensätze einschließlich der Datenwerte zurückgegeben. In diesem zweiten Schritt erfolgt der Zugriff auf die jeweiligen Einträge in den Datenstrukturen 226 und 202 vorzugsweise direkt, also ohne einen Suchschritt in den jeweiligen Datenstrukturen, wobei der zweite Schritt umfasst: a) Zugriff auf die Adressen der Einträge in der Adresszuweisungstabelle, die in den im ersten Schritt ermittelten Datensatz-IDs explizit oder implizit spezifiziert sind; dieser Schritt dient zur Ermittlung der AOD-Adressen, die in diesen Adresszuweisungstabellen-Einträgen enthalten sind; b) Zugriff auf die in a) ermittelten AOD-Eintrags-Adressen um die jüngsten Änderungen von Feldwerten der Datensätze die zurückgegeben werden sollen zu ermitteln; und c) falls die in b) betroffenen AOD-Einträge nicht vollständig sind, auswerten der in jedem AOD-Eintrag enthaltenen Referenz auf die Adresse eines nächst- älteren AOD-Eintrags, um direkt auf den nächst- älteren AOD-Eintrag zuzugreifen und diesen auszuwerten und dabei Schritt c) zu wiederholen bis für sämtliche Felder der zurückzugebenden Datensätze ein aktueller Feldwert ermittelt wurde. Falls es sich bei den Feldwerten um Mapping-IDs handelt kann in einem weiteren Schritt ein Zugriff auf die Mapping-Tabelle erfolgen um die Mapping-IDs durch die ursprünglichen Datenwerte zu ersetzen und Datensätze zurückzugeben, die die ursprünglichen Datenwerte anstatt der Mapping-IDs enthalten.

## Patentansprüche

1. Computerimplementiertes Verfahren zur Durchführung einer Datenbankabfrage in einer Datenbank (104), wobei die Datenbank zu einem ersten Zeitpunkt, der als "jüngster Konsolidierungszeitpunkt" bezeichnet wird, mehrere logische Datensätze beinhaltet, wobei jeder Datensatz eine Datensatz-ID sowie ein oder mehrere Feldbezeichner-Datenwert-Paare beinhaltet, wobei die Datensätze physisch in Form von nicht-redundanten feldspezifischen Datenwertlisten (116) gespeichert sind derart, dass zu jedem Feld eine der Datenwertlisten korrespondiert, in welcher jeder Datenwert dieses Feldes nur einmal vorkommt, wobei das Verfahren nach dem jüngsten Konsolidierungszeitpunkt umfasst:
- Empfang (602) von Anweisungen zur Änderung von Datenwerten von Feldern mehrerer der Datensätze;
- Speichern (604) der Anweisungen in einer Append-Only-Datenstruktur (202) ohne die Änderungen an den feldspezifischen Datenwertlisten (116) durchzuführen, wobei jeder Eintrag in der Append-Only-Datenstruktur - hier als AOD-Eintrag bezeichnet - zumindest diejenigen der Feldbezeichner-Datenwertpaare eines der Datensätze beinhaltet, die gemäß einer der Änderungsanweisungen geändert werden sollen, wobei die Append-Only-Datenstruktur eine Datenstruktur ist, die eine Ermittlung des aktuellen Datenwerts für sämtliche Felder der Datensätze über ein Nachverfolgen von Sprungadressen innerhalb von AOD-Einträgen ermöglicht, und wobei die Append-Only-Datenstruktur kontinuierlich fortgeschrieben und im Zuge einer Konsolidierung nicht geleert wird, wobei die Append-Only-Datenstruktur aus einem statischen Teil besteht, der die Änderungsanweisungen und AOD-Einträge umfasst, die bereits konsolidiert, also in den feldspezifischen Listen persistiert, wurden, und aus einem dynamischen Teil, wobei der dynamische Teil die zu dem jüngsten Konsolidierungszeitpunkt noch nicht konsolidierten, also noch nicht in den Datenwertlisten persistierten, Änderungen umfasst;
- für jeden der Datensätze, für welchen die Datenbank nach dem jüngsten Konsolidierungszeitpunkt ein oder mehrere Anweisungen zur Änderung von Datenwerten empfängt, Speichern (606) der Adresse (206, 208) des jüngsten der gespeicherten AOD Einträge, die eine Änderung dieses Datensatzes spezifizieren, verknüpft mit der Datensatz-ID dieses Datensatzes, in einer Adresszuweisungstabelle (226), wobei die Verknüpfungen in der Adresszuweisungstabelle automatisch aktualisiert werden; und
- Durchführung (610) einer Datenbankabfrage, wobei die Datenbankabfrage umfasst:
i. Durchsuchen (612) der feldspezifischen Datenwertlisten, um IDs von Datensätzen (214), deren Inhalt ganz oder teilweise aufgrund einer Passung mit ein oder mehreren feldspezifischen Suchwerten zurückgegeben werden soll, zu identifizieren;
ii. Zugriff auf (614) die Adresszuweisungstabelle, um Adressen von AOD Einträgen zu identifizieren, die einer der in i) identifizierten Datensatz-IDs zugewiesen sind,
iii. Zugriff (616) auf die identifizierten Adressen der AOD Einträge; und
iv. Verwendung (618) der in diesen identifizierten AOD Einträgen enthaltenen Änderungsangaben, um die in Schritt i) ermittelten Datensatz-IDs um Feldbezeichner-Datenwertpaare zu ergänzen und auszugeben, wobei die Verwendung umfasst ein Nachverfolgen von Sprungadressen innerhalb von AOD-Einträgen, die auf den nächst-älteren AOD Eintrag des gleichen Datensatzes verweisen, um dadurch sämtliche Änderungen zu rekonstruieren, die diesen bestimmten Datensatz betreffen, wobei dies solange durchgeführt wird, bis die gesamte Sequenz aller AOD-Einträge, die diesen Datensatz betreffen, durchsucht wurden bis hin zum aller ersten AOD-Element in der Append-Only-Datenstruktur, das diesen Datensatz betrifft, oder bis ein vollständiger AOD-Eintrag für diesen Datensatz erreicht wurde;
wobei zumindest eine der Änderungsanweisungen eine Anweisung zum Ändern oder Löschen eines veralteten Datenwertes eines Feldes in zumindest einem der logischen Datensätze ist, wobei das Verfahren ferner umfasst eine Speicherung der Datensatz-ID des zumindest einen Datensatzes in einer als Negativliste (220) bezeichneten Liste von Datensatz-IDs, wobei die Negativliste verknüpft ist mit dem Feldbezeichner des einen Feldes und verknüpft mit dem gemäß der Änderungsanfrage zu ändernden oder löschenden Datenwerts in einer Datenstruktur (216) gespeichert ist; und wobei die Durchführung der Datenbankabfrage für jeden der feldspezifischen Suchwerte umfasst:
Prüfen, ob die Datenstruktur eine Negativliste enthält, die mit einem Datenwert und einem Feldbezeichner verknüpft gespeichert ist, die identisch zu dem feldspezifischen Suchwert und dem Feldbezeichner des Suchwerts sind; Falls dies der Fall ist, Berechnen einer Differenzmenge aller in Schritt i) für diesen feldspezifischen Suchwert ermittelten Datensatz-IDs und den Datensatz-IDs in der Negativliste; und Verwenden der Differenzmenge an Datensatz-IDs für die Schritte ii-iv;
wobei zumindest eine der Änderungsanweisungen eine Anweisung zum Zuweisen eines neuen Datenwertes an ein Feld in zumindest einem der Datensätze ist, wobei das Verfahren ferner umfassend:
- Speicherung der Datensatz-ID des zumindest einen Datensatzes in einer als Positivliste bezeichneten Liste von Datensatz-IDs, wobei die Positivliste verknüpft mit dem Feldbezeichner des einen Feldes und verknüpft mit dem neuen Datenwert in einer Datenstruktur (216) gespeichert ist;
- falls der neue Datenwert einen veralteten Datenwert ersetzt, Speicherung der Datensatz-ID des zumindest einen Datensatzes in einer als Negativliste (220) bezeichneten Liste von Datensatz-IDs, wobei die Negativliste verknüpft mit dem Feldbezeichner des einen Feldes und verknüpft mit dem veralteten Datenwert gespeichert ist;
- wobei die Durchführung der Datenbankabfrage für jeden der feldspezifischen Suchwerte umfasst:
• Prüfen, ob die Datenstruktur eine Positivliste enthält, die mit einem Datenwert und einem Feldbezeichner verknüpft gespeichert ist, die identisch zu dem feldspezifischen Suchwert und dem Feldbezeichner des Suchwerts sind; falls dies der Fall ist, Berechnen einer Vereinigungsmenge aller in Schritt i) für diesen feldspezifischen Suchwert ermittelten Datensatz-IDs und den Datensatz-IDs in der Positivliste, wobei falls der neue Datenwert einen veralteten Datenwert ersetzt, die Datensatz-IDs der Vereinigungsmenge um die Datensatz-IDs in der diesem Suchwert und dessen Feld zugewiesenen Negativliste reduziert werden, und Verwenden der Vereinigungsmenge an Datensatz-IDs für die Schritte ii-iv;
wobei das Verfahren ferner umfasst:
- an einem zweiten Zeitpunkt, der als "neuer Konsolidierungszeitpunkt" bezeichnet wird, Konsolidierung der seit dem jüngsten Konsolidierungszeitpunkt angewiesenen Änderungen durch Konsolidierung der feldspezifischen Datenwertlisten unabhängig von und/oder parallel zu der Durchführung von Datenbankabfragen auf den feldspezifischen Datenwertlisten; oder
- an einem zweiten Zeitpunkt, der als "neuer Konsolidierungszeitpunkt" bezeichnet wird, Konsolidierung der seit dem jüngsten Konsolidierungszeitpunkt angewiesenen Änderungen durch Erzeugung konsolidierter Kopien (228) der feldspezifischen Datenwertlisten unabhängig von und/oder parallel zu der Durchführung von Datenbankabfragen auf den feldspezifischen Datenwertlisten.

2. Computerimplementiertes Verfahren nach Anspruch 1,
- wobei jedem der logischen Datensätze genau ein Eintrag in der Adresszuweisungstabelle entspricht; und/oder
- wobei das Verfahren ferner umfasst eine konzertierte Verwaltung der logischen Datensätze und der Einträge in der Adresszuweisungstabelle durch das DVS-System derart, dass die logischen Datensätze immer so erzeugt und mit der Adresszuweisungstabelle synchronisiert werden, dass die ID jedes logischen Datensatzes explizit oder implizit die Speicheradresse desjenigen Eintrags in der Adresszuweisungstabelle spezifiziert, in welchem der **ID** dieses logischen Datensatzes der Adresse des AOD-Eintrags mit den jüngsten Änderungen dieses Datensatzes zugewiesen ist; und wobei insbesondere in Schritt ii) die in der Datensatz-ID spezifizierte Speicheradresse verwendet wird, um direkt auf diejenigen Einträge der Adresszuweisungstabelle zuzugreifen, die den in i) ermittelten Datensätzen eindeutig zugewiesen sind.

3. Computerimplementiertes Verfahren nach einem der Ansprüche 1-2,
- wobei die Datenstruktur eine durchsuchbare, sortierte Anordnung von Elementen enthält, wobei die Anordnung eine Liste von Listenelementen oder ein Suchbaum, insbesondere ein B-Baum, aus Knoten ist,
- wobei die Anordnung jeweils eines der Felder repräsentiert,
- wobei die Elemente der Anordnung jeweils einem Datenwert aus einer nicht-redundanten Liste (116) von Datenwerten repräsentieren, die in den Datensätzen (214) enthalten sind und dem von der Anordnung repräsentierten Feld zugewiesen sind; und
- wobei jedes der Elemente der Anordnung verknüpft mit einer leeren oder nicht-leeren Positivliste und/oder einer leeren oder nicht-leeren Negativliste gespeichert ist.

4. Computerimplementiertes Verfahren nach einem der vorigen Ansprüche,
- wobei die feldspezifischen Datenwertlisten (116) jeweils nichtredundante Datenwertlisten selektiv derjenigen Datenwerte sind, die dem Feld, das diese feldspezifische Datenwertliste repräsentiert, in den logischen Datensätzen zugewiesen sind,
- wobei jeder Datenwert in der jeweiligen feldspezifischen Datenwertliste einzigartig ist und verknüpft mit den Datensatz-IDs aller logischen Datensätze gespeichert ist, die diesen Datenwert in dem von der feldspezifischen Datenwertliste repräsentierten Feld enthalten,
- wobei die Datenwerte vorzugsweise in sortierter Form in den feldspezifischen Datenwertlisten gespeichert sind.

5. Computerimplementiertes Verfahren nach einem der vorigen Ansprüche, wobei die Konsolidierung umfasst:
- an dem zweiten Zeitpunkt, Empfang eines Kommandos zur Konsolidierung der seit dem jüngsten Konsolidierungszeitpunkt angewiesenen Änderungen;
- in Antwort auf den Empfang des Kommandos:
• Umsetzung der in den zwischen dem jüngsten Konsolidierungszeitpunkt und dem zweiten Zeitpunkt angewiesenen Änderungen in den feldspezifischen Datenwertlisten oder deren Kopien, um die konsolidierten feldspezifischen Datenwertlisten (228) zu erzeugen, sodass jedem Datenwert in jeder der konsolidierten feldspezifischen Datenwertlisten nur die IDs derjenigen logischen Datensätze zugewiesen sind, die diesen Datenwert auch nach Berücksichtigung der zwischen dem ersten und dem zweiten Zeitpunkt angewiesenen Änderungen in diesem Feld enthalten;
• Verwenden der konsolidierten feldspezifischen Datenwertlisten anstelle der bisher verwendeten feldspezifischen Datenwertlisten (216) zur Durchführung von Datenbanksuchen nach dem zweiten Zeitpunkt;
• Verwenden des zweiten Zeitpunkts als den neuen jüngsten Konsolidierungszeitpunkt.

6. Computerimplementiertes Verfahren nach Anspruch 5, ferner umfassend, in Antwort auf den Empfang des Kommandos und nach der Erzeugung der konsolidierten feldspezifischen Datenwertlisten:
- erneute Erzeugung der zumindest einen Datenstruktur (216) auf Basis der konsolidierten feldspezifischen Datenwertlisten, wobei die Neuerzeugung der Datenstruktur umfasst eine Leerung der Positivlisten und/oder Negativlisten;
wobei vorzugsweise die Umsetzung der in den zwischen dem jüngsten Konsolidierungszeitpunkt und dem zweiten Zeitpunkt angewiesenen Änderungen im Zuge der Konsolidierung umfasst eine Ermittlung der zwischen dem jüngsten Konsolidierungszeitpunkt und dem zweiten Zeitpunkt angewiesenen Änderungen durch Analyse der Positivlisten und Negativlisten aller Datenwerte in allen von Änderungen betroffenen feldspezifischen Datenwertlisten.

7. Computerimplementiertes Verfahren nach einem der vorigen Ansprüche,
- wobei die AOD-Einträge als Elemente einer Blockchain in der Append-Only-Datenstruktur gespeichert sind, die über einen kryptographischen Hashwert miteinander verkettet sind, und
- wobei die Durchführung der Datenbanksuche umfasst eine Validitätsprüfung der Hashwerte derjenigen AOD-Einträge, die im Zuge der Datenbankabfrage verarbeitet werden.

8. Flüchtiges oder nicht-flüchtiges Speichermedium, auf welchem computerlesbare Instruktionen gespeichert sind, wobei die Instruktionen dazu ausgebildet sind, einen Prozessor dazu zu veranlassen, ein Verfahren zur Durchführung einer Datenbankabfrage in einer Datenbank gemäß einem der vorigen Ansprüche auszuführen.

9. Datenstrukturen, umfassend:
- mehrere nicht-redundante feldspezifische Datenwertlisten (116), in welchen logische Datensätze verteilt gespeichert sind, wobei jeder Datensatz eine Datensatz-ID sowie ein oder mehrere Feldbezeichner-Datenwert-Paare beinhaltet, wobei zu jedem Feld eine der Datenwertlisten korrespondiert, in welcher jeder Datenwert dieses Feldes nur einmal vorkommt, wobei vorzugsweise jede feldspezifische Datenwertliste eine sortierte redundanzfreie Liste ausschließlich derjenigen Datenwerte ist, die einem der Felder, das von der Liste repräsentiert wird, in den logischen Datensätzen zugewiesen sind, wobei jeder Datenwert in den feldspezifischen Listen verknüpft mit der ID aller Datensätze, die diesen Datenwert in diesem Feld beinhalten, gespeichert ist;
- eine Append-Only-Datenstruktur (202), die Anweisungen zur Änderung von Datenwerten der Felder der Datensätze beinhaltet, wobei jeder Eintrag in der Append-Only-Datenstruktur - hier als AOD-Eintrag bezeichnet, zumindest diejenigen der Feldbezeichner-Datenwertpaare eines der Datensätze beinhaltet, die gemäß einer der Änderungsanweisungen geändert werden sollen,
wobei die Append-Only-Datenstruktur eine Datenstruktur ist, die eine Ermittlung des aktuellen Datenwerts für sämtliche Felder der Datensätze über ein Nachverfolgen von Sprungadressen innerhalb von AOD-Einträgen ermöglicht, wobei es sich bei der Append-Only-Datenstruktur um eine kontinuierlich über mehrere Konsolidierungen fortgeschriebene und nicht geleerte Datenstruktur handelt,
wobei die AOD-Einträge Sprungadressen beinhalten, die auf den nächst-älteren AOD Eintrag des gleichen Datensatzes verweisen, um über die jeweils in den AOD Einträgen spezifizierten Adressen ein "Springen" von AOD-Eintrag zu AOD Eintrag zur Rekonstruktion sämtlicher Änderungen, die einen bestimmten Datensatz betreffen, zu ermöglichen, indem die gesamte Sequenz aller AOD-Einträge, die diesen Datensatz betreffen, durchsucht wird bis hin zum aller ersten AOD-Element in der Append-Only-Datenstruktur, das diesen Datensatz betrifft, oder bis ein vollständiger AOD-Eintrag für diesen Datensatz erreicht wurde;
wobei die Append-Only-Datenstruktur aus einem statischen Teil besteht, der die Änderungsanweisungen und AOD-Einträge umfasst, die bereits konsolidiert, also in den feldspezifischen Listen persistiert, wurden, und aus einem dynamischen Teil, wobei der dynamische Teil die zu dem jüngsten Konsolidierungszeitpunkt noch nicht konsolidierten, also noch nicht in den Datenwertlisten persistierten, Änderungen umfasst;
- eine Adresszuweisungstabelle (226), wobei die Adresszuweisungstabelle für jeden der logischen Datensätze genau einen Eintrag mit der **ID** dieses Datensatzes enthält, und wobei die ID eines jeden der logischen Datensätze in der Adresszuweisungstabelle mit genau einer Adresse eines AOD-Eintrags verknüpft gespeichert ist, und wobei die Adresszuweisungstabelle der ID eines jeden der Datensätze, für welchen in der Append-Only-Datenstruktur ein AOD Eintrag mit Änderungsanweisungen gespeichert ist, die Adresse (206, 208) des jüngsten AOD Eintrags zuweist, der eine Änderung dieses Datensatzes spezifiziert;
wobei die Datenstrukturen insbesondere ferner umfassen:
- zumindest eine Datenstruktur (216),
• wobei die Datenstruktur (216) eine durchsuchbare, sortierte Anordnung von Elementen enthält, wobei die Anordnung eine Liste von Listenelementen oder ein Suchbaum, insbesondere ein B-Baum, aus Knoten ist,
• wobei die Anordnung jeweils eines der Felder repräsentiert,
• wobei die Elemente der Anordnung jeweils einem Datenwert aus einer nicht-redundanten Liste (116) von Datenwerten repräsentieren, die in den Datensätzen (214) enthalten sind und dem von der Anordnung repräsentierten Feld zugewiesen sind; und
• wobei jedes der Elemente der Anordnung verknüpft mit einer leeren oder nicht-leeren Positivliste und/oder einer leeren oder nicht-leeren Negativliste gespeichert ist; und/oder
- redundanzfreie Listen von ursprünglichen Datenwerten, welche aus Rohdaten gewonnen werden, in welchen die logischen Datensätze gespeichert wurden; und/oder
- eine Mapping-Tabelle (210),
• wobei die Mapping-Tabelle jedem der ursprünglichen Datenwerten mindestens eine Mapping-ID zuweist, die keinem anderen der ursprünglichen Datenwerte zugewiesen ist;
• wobei die Datenwerte der Datensätze die Mapping-IDs sind;
• zumindest eine als Negativliste (220) bezeichnete Liste von Datensatz-IDs, wobei die Negativliste Datensatz-IDs von Datensätzen enthält, für die eine Anweisung zum Ändern oder Löschen eines veralteten Datenwertes eines Feldes in zumindest einem der logischen Datensätze empfangen wurde, wobei die Negativliste verknüpft ist mit dem Feldbezeichner des einen Feldes und verknüpft mit dem gemäß der Änderungsanfrage zu ändernden oder löschenden Datenwerts in einer Datenstruktur (216) gespeichert ist;
• zumindest eine als Positivliste bezeichneten Liste von Datensatz-IDs, wobei die Positivliste Datensatz-IDs von Datensätzen enthält, für die eine Anweisung zum Zuweisen eines neuen Datenwertes an ein Feld dieser Datensätze empfangen wurde, wobei die Positivliste verknüpft mit dem Feldbezeichner des einen Feldes und verknüpft mit dem neuen Datenwert in einer Datenstruktur (216) gespeichert ist.

10. Computersystem (100, 500) umfassend:
- zumindest ein Prozessor (108);
- einen Datenspeicher mit einer Datenbank (104), wobei die Datenbank zu einem ersten Zeitpunkt, der als "jüngster Konsolidierungszeitpunkt" bezeichnet wird, mehrere logische Datensätze beinhaltet, wobei jeder Datensatz eine Datensatz-ID sowie ein oder mehrere Feldbezeichner-Datenwert-Paare beinhaltet, wobei die Datensätze physisch in Form von nicht-redundanten, feldspezifischen Datenwertlisten (116) gespeichert sind derart, dass zu jedem Feld eine der Datenwertlisten korrespondiert, in welcher jeder Datenwert dieses Feldes nur einmal vorkommt;
- ein Datenverarbeitungs- und Suchsystem - DVS-System (102), wobei das DVS-System dazu ausgebildet ist, die Datenbank (104) zu verwalten, wobei die Verwaltung nach dem jüngsten Konsolidierungszeitpunkt umfasst:
- Empfang von Anweisungen zur Änderung von Datenwerten von Feldern mehrerer der Datensätze;
- Speichern (604) der Anweisungen in einer Append-Only-Datenstruktur (202) ohne die Änderungen an den feldspezifischen Datenwertlisten (116) durchzuführen, wobei jeder Eintrag in der Append-Only-Datenstruktur - hier als AOD-Eintrag bezeichnet, zumindest diejenigen der Feldbezeichner-Datenwertpaare eines der Datensätze beinhaltet, die gemäß einer der Änderungsanweisungen geändert werden sollen, wobei die Append-Only-Datenstruktur eine Datenstruktur ist, die eine Ermittlung des aktuellen Datenwerts für sämtliche Felder der Datensätze über ein Nachverfolgen von Sprungadressen innerhalb von AOD-Einträgen ermöglicht, wobei die Append-Only-Datenstruktur kontinuierlich fortgeschrieben und im Zuge einer Konsolidierung nicht geleert wird, wobei die Append-Only-Datenstruktur aus einem statischen Teil besteht, der die Änderungsanweisungen und AOD-Einträge umfasst, die bereits konsolidiert, also in den feldspezifischen Listen persistiert, wurden, und aus einem dynamischen Teil, wobei der dynamische Teil die zu dem jüngsten Konsolidierungszeitpunkt noch nicht konsolidierten, also noch nicht in den Datenwertlisten persistierten, Änderungen umfasst;
- Für jeden der Datensätze, für welchen die Datenbank nach dem jüngsten Konsolidierungszeitpunkt ein oder mehrere Anweisungen zur Änderung von Datenwerten empfängt, Speichern (606) der Adresse (206, 208) des jüngsten der gespeicherten AOD Einträge, die eine Änderung dieses Datensatzes spezifizieren, verknüpft mit der Datensatz-ID dieses Datensatzes, in einer Adresszuweisungstabelle (226), wobei die Verknüpfungen in der Adresszuweisungstabelle automatisch aktualisiert werden; und
- Durchführung (610) einer Datenbankabfrage, wobei die Datenbankabfrage umfasst:
i. Durchsuchen (612) der feldspezifischen Datenwertlisten, um IDs von Datensätzen (214), deren Inhalt ganz oder teilweise aufgrund einer Passung mit ein oder mehreren feldspezifischen Suchwerten zurückgegeben werden soll, zu identifizieren;
ii. Auswertung (614) der Adresszuweisungstabelle, um Adressen von AOD Einträgen zu identifizieren, die einer der in i) identifizierten Datensatz-IDs zugewiesen sind,
iii. Zugriff (616) auf die identifizierten Adressen der AOD Einträge; und
iv. Verwendung (618) der in diesen identifizierten AOD Einträgen enthaltenen Änderungsangaben, um die in Schritt i) ermittelten Datensatz-IDs um Feldbezeichner-Datenwertpaare zu ergänzen und auszugeben, wobei die Verwendung umfasst ein Nachverfolgen von Sprungadressen innerhalb von AOD-Einträgen, die auf den nächst-älteren AOD Eintrag des gleichen Datensatzes verweisen, um dadurch sämtliche Änderungen zu rekonstruieren, die diesen bestimmten Datensatz betreffen, wobei dies solange durchgeführt wird, bis die gesamte Sequenz aller AOD-Einträge, die diesen Datensatz betreffen, durchsucht wurden bis hin zum aller ersten AOD-Element in der Append-Only-Datenstruktur, das diesen Datensatz betrifft, oder bis ein vollständiger AOD-Eintrag für diesen Datensatz erreicht wurde,
wobei zumindest eine der Änderungsanweisungen eine Anweisung zum Ändern oder Löschen eines veralteten Datenwertes eines Feldes in zumindest einem der logischen Datensätze ist, wobei das DVS-System ausgebildet ist zur Speicherung der Datensatz-ID des zumindest einen Datensatzes in einer als Negativliste (220) bezeichneten Liste von Datensatz-IDs, wobei die Negativliste verknüpft ist mit dem Feldbezeichner des einen Feldes und verknüpft mit dem gemäß der Änderungsanfrage zu ändernden oder löschenden Datenwerts in einer Datenstruktur (216) gespeichert ist; und wobei die Durchführung der Datenbankabfrage für jeden der feldspezifischen Suchwerte umfasst:
Prüfen, ob die Datenstruktur eine Negativliste enthält, die mit einem Datenwert und einem Feldbezeichner verknüpft gespeichert ist, die identisch zu dem feldspezifischen Suchwert und dem Feldbezeichner des Suchwerts sind; Falls dies der Fall ist, Berechnen einer Differenzmenge aller in Schritt i) für diesen feldspezifischen Suchwert ermittelten Datensatz-IDs und den Datensatz-IDs in der Negativliste; und Verwenden der Differenzmenge an Datensatz-IDs für die Schritte ii-iv;
wobei zumindest eine der Änderungsanweisungen eine Anweisung zum Zuweisen eines neuen Datenwertes an ein Feld in zumindest einem der Datensätze ist, wobei das DVS-System ferner ausgebildet ist zur:
- Speicherung der Datensatz-ID des zumindest einen Datensatzes in einer als Positivliste bezeichneten Liste von Datensatz-IDs, wobei die Positivliste verknüpft mit dem Feldbezeichner des einen Feldes und verknüpft mit dem neuen Datenwert in einer Datenstruktur (216) gespeichert ist;
- falls der neue Datenwert einen veralteten Datenwert ersetzt, Speicherung der Datensatz-ID des zumindest einen Datensatzes in einer als Negativliste (220) bezeichneten Liste von Datensatz-IDs, wobei die Negativliste verknüpft mit dem Feldbezeichner des einen Feldes und verknüpft dem veralteten Datenwert gespeichert ist;
- wobei die Durchführung der Datenbankabfrage für jeden der feldspezifischen Suchwerte umfasst:
• Prüfen, ob die Datenstruktur eine Positivliste enthält, die mit einem Datenwert und einem Feldbezeichner verknüpft gespeichert ist, die identisch zu dem feldspezifischen Suchwert und dem Feldbezeichner des Suchwerts sind; falls dies der Fall ist, Berechnen einer Vereinigungsmenge aller in Schritt i) für diesen feldspezifischen Suchwert ermittelten Datensatz-IDs und den Datensatz-IDs in der Positivliste, wobei falls der neue Datenwert einen veralteten Datenwert ersetzt, die Datensatz-IDs der Vereinigungsmenge um die Datensatz-IDs in der diesem Suchwert und dessen Feld zugewiesenen Negativliste reduziert werden, und Verwenden der Vereinigungsmenge an Datensatz-IDs für die Schritte ii-iv;
wobei das DVS-System ferner ausgebildet ist zur:
- an einem zweiten Zeitpunkt, der als "neuer Konsolidierungszeitpunkt" bezeichnet wird, Konsolidierung der seit dem jüngsten Konsolidierungszeitpunkt angewiesenen Änderungen durch Konsolidierung der feldspezifischen Datenwertlisten unabhängig von und/oder parallel zu der Durchführung von Datenbankabfragen auf den feldspezifischen Datenwertlisten; oder
- an einem zweiten Zeitpunkt, der als "neuer Konsolidierungszeitpunkt" bezeichnet wird, Konsolidierung der seit dem jüngsten Konsolidierungszeitpunkt angewiesenen Änderungen durch Erzeugung konsolidierter Kopien (228) der feldspezifischen Datenwertlisten unabhängig von und/oder parallel zu der Durchführung von Datenbankabfragen auf den feldspezifischen Datenwertlisten.

## Claims

1. A computer-implemented method for performing a database query in a database (104), wherein the database contains, at a first point in time referred to as the "most recent consolidation time," a plurality of logical records, wherein each record contains a record ID and one or more field identifier-data value pairs, wherein the records are physically stored in the form of non-redundant field-specific data value lists (116) such that each field corresponds to one of the data value lists, in which each data value of that field occurs only once, wherein the method comprises, after the latest consolidation time:
- receiving (602) instructions to modify data values of fields in multiple records;
- storing (604) the instructions in an append-only data structure (202) without performing the changes on the field-specific data value lists (116), wherein each entry in the append-only data structure -hereinafter referred to as an AOD entry-contains at least those field identifier-data value pairs of one of the data records that are to be modified according to one of the modification instructions, wherein the append-only data structure is a data structure that enables determination of the current data value for all fields of the data records by tracing jump addresses within AOD entries, and wherein the append-only data structure is continuously updated and is not emptied during a consolidation, wherein the append-only data structure consists of a static part comprising the change instructions and AOD entries that have already been consolidated i.e., persisted in the field-specific lists, and a dynamic part, wherein the dynamic part comprises the changes that have not yet been consolidated as of the most recent consolidation time, i.e., have not yet been persisted in the data value lists;
- for each of the data records for which the database receives one or more instructions to change data values after the most recent consolidation time, storing (606) the address (206, 208) of the most recent of the stored AOD entries specifying a change to that record, linked to the record ID of that record, in an address mapping table (226), wherein the links in the address mapping table are automatically updated; and
- executing (610) a database query, wherein the database query comprises:
i. searching (612) the field-specific data value lists to identify IDs of records (214) whose contents are to be returned in whole or in part based on a match with one or more field-specific search values;
ii. accessing (614) the address mapping table to identify addresses of AOD entries assigned to one of the record IDs identified in i);
iii. accessing (616) the identified addresses of the AOD entries; and
iv. using (618) the change details contained in these identified AOD entries to supplement the record IDs determined in step i) with field identifier-data value pairs and to output them, wherein the use comprises tracing jump addresses within AOD entries that refer to the nextolder AOD entry for the same record, thereby reconstructing all changes pertaining to that specific record, wherein this is performed until the entire sequence of all AOD entries pertaining to that record has been traversed, all the way back to the very first AOD element in the append-only data structure pertaining to that record, or until a complete AOD entry for this data record has been reached;
wherein at least one of the modification instructions is an instruction to modify or delete an outdated data value of a field in at least one of the logical records, wherein the method further comprises storing the record ID of the at least one record in a list of record IDs designated as a blacklist (220), wherein the blacklist is associated with the field identifier of said one field and is stored in a data structure (216) associated with the data value to be modified or deleted according to the modification request; and wherein performing the database query for each of the field-specific search values comprises:
checking whether the data structure contains a blacklist that is stored linked to a data value and a field identifier that are identical to the field-specific search value and the field identifier of the search value; If so, calculating a set of differences between all record IDs determined in step i) for that field-specific search value and the record IDs in the blacklist; and using the set of differences in record IDs for steps ii-iv;
wherein at least one of the modification instructions is an instruction to assign a new data value to a field in at least one of the records, the method further comprising:
- storing the record ID of the at least one record in a list of record IDs referred to as a whitelist, wherein the whitelist is stored in a data structure (216) linked to the field identifier of the one field and linked to the new data value;
- if the new data value replaces an outdated data value, storing the record ID of the at least one record in a list of record IDs referred to as a blacklist (220), wherein the blacklist is stored linked to the field identifier of the one field and linked to the outdated data value;
- wherein performing the database query for each of the field-specific search values comprises:
• checking whether the data structure contains a whitelist that is stored linked to a data value and a field identifier that are identical to the field-specific search value and the field identifier of the search value; if this is the case, calculating a union of all record IDs determined in step i) for this field-specific search value and the record IDs in the whitelist, wherein if the new data value replaces an obsolete data value, the record IDs of the union are reduced by the record IDs in the blacklist assigned to this search value and its field, and using the union of record IDs for steps ii-iv;
wherein the method further comprises:
- at a second point in time, referred to as a "new consolidation time," consolidating the changes ordered since the most recent consolidation time by consolidating the field-specific data value lists independently of and/or in parallel with the execution of database queries on the field-specific data value lists; or
- at a second point in time, referred to as a "new consolidation point in time," consolidating the changes indicated since the most recent consolidation point in time by generating consolidated copies (228) of the field-specific data value lists independently of and/or in parallel with the execution of database queries on the field-specific data value lists.

2. A computer-implemented method according to claim 1,
- wherein each of the logical data records corresponds to exactly one entry in the address mapping table; and/or
- wherein the method further comprises coordinated management of the logical data records and the entries in the address mapping table by the DVS system such that the logical data records are always created and synchronized with the address mapping table in such a way that the ID of each logical data record explicitly or implicitly specifies the memory address of that entry in the address mapping table, in which the **ID** of this logical data record is assigned to the address of the AOD entry containing the most recent changes to this data record; and wherein, in particular, in step ii), the memory address specified in the data record **ID** is used to directly access those entries in the address mapping table that are uniquely assigned to the data records identified in i).

3. A computer-implemented method according to any of claims 1-2,
- wherein the data structure comprises a searchable, sorted array of elements, wherein the array is a list of list elements or a search tree, in particular a B-tree, of nodes,
- wherein the array represents one of the fields,
- wherein the elements of the array each represent a data value from a non-redundant list (116) of data values contained in the data records (214) and assigned to the field represented by the array; and
- wherein each of the elements of the array is stored in association with an empty or non-empty whitelist and/or an empty or non-empty blacklist.

4. A computer-implemented method according to any of the preceding claims,
- wherein the field-specific data value lists (116) are respectively non-redundant data value lists of data values selectively assigned to the field represented by that field-specific data value list in the logical data records,
- wherein each data value in the respective field-specific data value list is unique and is stored linked to the record IDs of all logical records that contain this data value in the field represented by the field-specific data value list,
- wherein the data values are preferably stored in sorted form in the field-specific data value lists.

5. A computer-implemented method according to any of the preceding claims, wherein the consolidation comprises:
- at the second time point, receiving a command to consolidate the changes made since the most recent consolidation time point;
- in response to receiving the command:
• implementing the changes instructed between the most recent consolidation time and the second time in the field-specific data value lists or copies thereof to generate the consolidated field-specific data value lists (228) such that each data value in each of the consolidated field-specific data value lists is assigned only the IDs of those logical records that contain that data value even after accounting for the changes instructed in that field between the first and second time points;
• using the consolidated field-specific data value lists in place of the previously used field-specific data value lists (216) to perform database searches after the second time point;
• Using the second point in time as the new most recent consolidation point in time.

6. A computer-implemented method according to claim 5, further comprising, in response to receiving the command and after generating the consolidated field-specific data value lists:
- regenerating the at least one data structure (216) based on the consolidated field-specific data value lists, wherein the regeneration of the data structure comprises clearing the whitelists and/or blacklists;
wherein the implementation preferably comprises the changes reported between the most recent consolidation date and the second date; the consolidation process includes determining the changes introduced between the most recent consolidation date and the second date by analyzing the whitelists and blacklists of all data values in all field-specific data value lists affected by changes.

7. A computer-implemented method according to any of the preceding claims,
- wherein the AOD entries are stored as elements of a blockchain in the append-only data structure, which are linked together via a cryptographic hash value, and
- wherein the execution of the database search comprises a validity check of the hash values of those AOD entries that are processed in the course of the database query.

8. A volatile or non-volatile storage medium on which computer-readable instructions are stored, wherein the instructions are configured to cause a processor to execute a method for performing a database query in a database according to one of the preceding claims.

9. Data structures comprising:
- a plurality of non-redundant field-specific data value lists (116) in which logical data records are distributed, wherein each data record contains a data record ID as well as one or more field identifier-data value pairs, wherein each field corresponds to one of the data value lists, in which each data value of that field occurs only once, wherein, preferably, each field-specific data value list is a sorted, redundancy-free list consisting exclusively of those data values assigned to one of the fields represented by the list in the logical data records, wherein each data value in the field-specific lists is stored linked to the ID of all data records containing that data value in that field;
- an append-only data structure (202) containing instructions for modifying data values of the fields in the data records, wherein each entry in the append-only data structure-hereinafter referred to as an AOD entry-contains at least those field identifier-data value pairs of one of the data records that are to be modified according to one of the modification instructions,
wherein the append-only data structure is a data structure that enables determination of the current data value for all fields of the data records by tracing jump addresses within AOD entries, wherein the append-only data structure is a data structure that is continuously updated over multiple consolidations and is not emptied,
wherein the AOD entries contain jump addresses that refer to the next older AOD entry of the same data record, in order to enable "jumping" from AOD entry to AOD entry to reconstruct all changes affecting a specific data record, by searching the entire sequence of all AOD entries affecting this data record all the way back to the very first AOD element in the append-only data structure that affects this data record, or until a complete AOD entry for this data record has been reached;
wherein the append-only data structure consists of a static part comprising the change instructions and AOD entries that have already been consolidated, i.e., persisted in the field-specific lists, and a dynamic part, wherein the dynamic part comprises the changes that had not yet been consolidated at the time of the most recent consolidation, i.e., had not yet been persisted in the data value lists;
- an address mapping table (226), wherein the address mapping table contains exactly one entry for each of the logical records, with the ID of that record, and wherein the ID of each of the logical records is stored in the address mapping table linked to exactly one address of an AOD entry, and wherein the address mapping table assigns to the ID of each of the records, for which an AOD entry containing modification instructions is stored in the append-only data structure, the address (206, 208) of the most recent AOD entry specifying a modification to that record;
wherein the data structures further comprise, in particular:
- at least one data structure (216),
• wherein the data structure (216) contains a searchable, sorted array of elements, wherein the array is a list of list elements or a search tree, in particular a B-tree, of nodes,
• wherein the array represents one of the fields,
• wherein the elements of the array each represent a data value from a non-redundant list (116) of data values contained in the data records (214) and assigned to the field represented by the array; and
• wherein each of the elements of the array is stored in association with an empty or non-empty whitelist and/or an empty or non-empty blacklist; and/or
- redundancy-free lists of original data values derived from raw data in which the logical data records were stored; and/or
- a mapping table (210),
• wherein the mapping table assigns at least one mapping ID to each of the original data values, which mapping **ID** is not assigned to any other of the original data values;
• wherein the data values of the data records are the mapping IDs;
• at least one list designated as a blacklist (220) of record IDs, wherein the blacklist contains record IDs of records for which an instruction to modify or delete an obsolete data value of a field in at least one of the logical records has been received, wherein the blacklist is linked to the field identifier of said one field and is stored in a data structure (216) linked to the data value to be modified or deleted according to the modification request;
• at least one list, referred to as a whitelist, of record IDs, wherein the whitelist contains record IDs of records for which an instruction to assign a new data value to a field of these records has been received, wherein the whitelist is linked to the field identifier of said one field and linked to the new data value and is stored in a data structure (216).

10. A computer system (100, 500) comprising:
- at least one processor (108);
- a data storage device with a database (104), wherein the database, at a first point in time referred to as the "most recent consolidation time," contains multiple logical records, wherein each record contains a record **ID** as well as one or more field identifier-data value pairs, wherein the records are physically stored in the form of non-redundant, field-specific data value lists (116) such that each field corresponds to one of the data value lists, in which each data value of that field appears only once;
- a data processing and retrieval system - DVS system (102), wherein the DVS system is configured to manage the database (104), wherein the management following the most recent consolidation point comprises:
- receiving instructions to modify data values of fields in multiple ones of the data records;
- Storing (604) the instructions in an append-only data structure (202) without applying the changes to the field-specific data value lists (116), wherein each entry in the append-only data structure-hereinafter referred to as an AOD entry- contains at least those field identifier-data value pairs of one of the data records that are to be modified in accordance with one of the modification instructions, wherein the append-only data structure is a data structure that enables the current data value for all fields of the data records to be determined by tracing jump addresses within AOD entries, wherein the append-only data structure is continuously updated and is not cleared during a consolidation, wherein the append-only data structure consists of a static part comprising the modification instructions and AOD entries that have already been consolidated i.e., persisted in the field-specific lists, and a dynamic part, wherein the dynamic part comprises the changes that have not yet been consolidated as of the most recent consolidation time, i.e., have not yet been persisted in the data value lists;
- For each of the data records for which the database receives one or more instructions to change data values after the most recent consolidation time, storing (606) the address (206, 208) of the most recent of the stored AOD entries specifying a change to that data record, linked to the data record ID of that data record, in an address mapping table (226), wherein the links in the address mapping table are automatically updated; and
- executing (610) a database query, wherein the database query comprises:
i. searching (612) the field-specific data value lists to identify IDs of records (214) whose contents are to be returned in whole or in part based on a match with one or more field-specific search values;
ii. evaluating (614) the address mapping table to identify addresses of AOD entries assigned to one of the record IDs identified in i);
iii. Accessing (616) the identified addresses of the AOD entries; and
iv. using (618) the change details contained in these identified AOD entries to supplement the record IDs determined in step i) with field identifier-data value pairs and to output them, wherein the use comprises tracing jump addresses within AOD entries that refer to the nextolder AOD entry of the same record, thereby reconstructing all changes affecting this particular record, wherein this is performed until the entire sequence of all AOD entries affecting this record has been traversed, all the way back to the very first AOD element in the append-only data structure that pertains to this record, or until a complete AOD entry for this data record has been reached,
wherein at least one of the modification instructions is an instruction to modify or delete an outdated data value of a field in at least one of the logical records, wherein the DVS system is configured to store the record ID of the at least one record in a list of record IDs designated as a blacklist (220), wherein the blacklist is linked to the field identifier of said one field and is stored in a data structure (216) linked to the data value to be modified or deleted according to the modification request; and wherein the execution of the database query for each of the field-specific search values comprises:
checking whether the data structure contains a blacklist that is stored linked to a data value and a field identifier that are identical to the field-specific search value and the field identifier of the search value;
If so, calculating a set of differences between all record IDs determined in step i) for that field-specific search value and the record IDs in the blacklist; and using the set of differences in record IDs for steps ii-iv;
wherein at least one of the modification instructions is an instruction to assign a new data value to a field in at least one of the records, wherein the DVS system is further configured to:
- storing the record ID of the at least one record in a list of record IDs referred to as a whitelist, wherein the whitelist is stored linked to the field identifier of the one field and linked to the new data value in a data structure (216);
- if the new data value replaces an outdated data value, storing the record ID of the at least one record in a list of record IDs referred to as a blacklist (220), wherein the blacklist is stored linked to the field identifier of the one field and linked to the outdated data value;
- wherein the execution of the database query comprises, for each of the field-specific search values:
• Check whether the data structure contains a whitelist that is stored linked to a data value and a field identifier that are identical to the field-specific search value and the field identifier of the search value; if this is the case, calculating a union of all record IDs determined in step i) for this field-specific search value and the record IDs in the whitelist, wherein if the new data value replaces an outdated data value, the record IDs of the union are reduced by the record IDs in the blacklist assigned to this search value and its field, and using the union of record IDs for steps ii-iv;
wherein the DVS system is further configured to:
- at a second point in time, referred to as the "new consolidation time," consolidating the changes ordered since the most recent consolidation time by consolidating the field-specific data value lists independently of and/or in parallel with the execution of database queries on the field-specific data value lists; or
- at a second point in time, referred to as a "new consolidation point in time," consolidating the changes instructed since the most recent consolidation point in time by generating consolidated copies (228) of the field-specific data value lists, independent of and/or in parallel with the execution of database queries on the field-specific data value lists.

## Revendications

1. Procédé mis en oeuvre par ordinateur pour effectuer une interrogation de base de données dans une base de données (104), dans lequel la base de données comprend, à un premier moment, appelé « moment de consolidation le plus récent », une pluralité d'ensembles de données logiques, chaque ensemble de données comprenant un identifiant d'ensemble de données ainsi qu'une ou plusieurs paires d'identifiants de champ et de valeurs de données, dans lequel les ensembles de données sont stockés physiquement sous la forme de listes de valeurs de données non redondantes spécifiques à un champ (116) de telle sorte qu'à chaque champ correspond l'une des listes de valeurs de données dans laquelle chaque valeur de données de ce champ n'apparaît qu'une fois, le procédé comprenant, après le moment de consolidation le plus récent :
- la réception (602) d'instructions pour modifier les valeurs de données de champs d'une pluralité des ensembles de données ;
- le stockage (604) des instructions dans une structure de données en ajout seul (202) sans effectuer les modifications sur les listes de valeurs de données spécifiques à un champ (116), dans lequel chaque entrée dans la structure de données en ajout seul, appelée ici entrée AOD, comprend au moins celles des paires d'identifiants de champ et de valeurs de données de l'un des ensembles de données qui doivent être modifiées selon l'une des instructions de modification, dans lequel la structure de données en ajout seul est une structure de données qui permet une détermination de la valeur de données actuelle pour tous les champs des ensembles de données par le biais d'un suivi d'adresses de saut dans des entrées AOD, et dans lequel la structure de données en ajout seul est étendue en continu et n'est pas vidée au cours d'une consolidation, dans lequel la structure de données en ajout seul est constituée d'une partie statique qui comprend les instructions de modification et des entrées AOD qui ont déjà été consolidées, c'est-à-dire qui ont été persistées dans les listes spécifiques à un champ, et d'une partie dynamique, dans lequel la partie dynamique comprend les modifications qui n'ont pas encore été consolidées au moment de consolidation le plus récent, c'est-à-dire qui n'ont pas encore été persistées dans les listes de valeurs de données ;
- pour chacun des ensembles de données pour lesquels la base de données reçoit, après le moment de consolidation le plus récent, une ou plusieurs instructions pour modifier les valeurs de données, le stockage (606) de l'adresse (206, 208) de la plus récente des entrées AOD stockées qui spécifie une modification de cet ensemble de données, en association avec l'identifiant d'ensemble de données de cet ensemble de données, dans une table d'attribution d'adresse (226), dans lequel les associations dans la table d'attribution d'adresse sont automatiquement mises à jour ; et
- l'exécution (610) d'une interrogation de base de données, dans lequel l'interrogation de base de données comprend :
i. la recherche (612) dans les listes de valeurs de données spécifiques à un champ pour identifier des identifiants des ensembles de données (214) dont le contenu doit être renvoyé en totalité ou en partie en raison d'une correspondance avec une ou plusieurs valeurs de recherche spécifiques à un champ ;
ii. l'accès (614) à la table d'attribution d'adresse pour identifier des adresses d'entrées AOD attribuées à l'un des identifiants d'ensemble de données identifiés en i),
iii. l'accès (616) aux adresses identifiées des entrées AOD; et
iv. l'utilisation (618) des indications de modification contenues dans ces entrées AOD identifiées pour compléter et délivrer en sortie les identifiants d'ensemble de données déterminés à l'étape i) par les paires d'identifiants de champ et de valeurs de données, dans lequel l'utilisation comprend le suivi d'adresses de saut à l'intérieur des entrées AOD qui font référence à l'entrée AOD immédiatement précédente du même ensemble de données pour reconstruire ainsi toutes les modifications concernant cet ensemble de données particulier dans lequel cela est effectué jusqu'à ce que la séquence de toutes les entrées AOD concernant cet ensemble de données ait été recherchée jusqu'au tout premier élément AOD dans la structure de données en ajout seul concernant cet ensemble de données ou jusqu'à ce qu'une entrée AOD complète pour cet ensemble de données ait été atteinte;
dans lequel au moins l'une des instructions de modification est une instruction pour modifier ou supprimer une valeur de données périmée d'un champ dans au moins l'un des ensembles de données logiques, dans lequel le procédé comprend en outre le stockage de l'identifiant d'ensemble de données de l'au moins un ensemble de données dans une liste d'identifiants d'ensemble de données appelée liste négative (220), dans lequel la liste négative est associée à l'identifiant de champ du champ et est stockée dans une structure de données (216) associée à la valeur de données à modifier ou supprimer conformément à la demande de modification ; et dans lequel l'exécution de l'interrogation de base de données comprend, pour chacune des valeurs de recherche spécifiques à un champ :
la vérification de savoir si la structure de données contient une liste négative stockée associée à une valeur de données et à un identifiant de champ qui sont identiques à la valeur de recherche spécifique à un champ et à l'identifiant de champ de la valeur de recherche ; si c'est le cas, le calcul d'un ensemble de différences entre tous les identifiants d'ensemble de données déterminés à l'étape i) pour cette valeur de recherche spécifique à un champ et les identifiants d'ensemble de données dans la liste négative ; et l'utilisation de l'ensemble de différences d'identifiants d'ensemble de données pour les étapes ii à iv ;
dans lequel au moins l'une des instructions de modification est une instruction pour attribuer une nouvelle valeur de données à un champ dans au moins l'un des ensembles de données, dans lequel le procédé comprend en outre :
- le stockage de l'identifiant d'ensemble de données de l'au moins un ensemble de données dans une liste d'identifiants d'ensemble de données appelée liste positive, dans lequel la liste positive est stockée dans une structure de données (216) associée à l'identifiant de champ du champ et associée à la nouvelle valeur de données ;
- si la nouvelle valeur de données remplace une valeur de données périmée, le stockage de l'identifiant d'ensemble de données de l'au moins un ensemble de données dans une liste d'identifiants d'ensemble de données appelée liste négative (220), dans lequel la liste négative est stockée associée à l'identifiant de champ du champ et associée à la valeur de données périmée;
- dans lequel l'exécution de l'interrogation de base de données comprend, pour chacune des valeurs de recherche spécifiques à un champ :
• la vérification de savoir si la structure de données contient une liste positive stockée associée à une valeur de données et à un identifiant de champ qui sont identiques à la valeur de recherche spécifique à un champ et à l'identifiant de champ de la valeur de recherche ; si c'est le cas, le calcul d'une union de tous les identifiants d'ensemble de données déterminés à l'étape i) pour cette valeur de recherche spécifique à un champ et les identifiants d'ensemble de données dans la liste positive, dans lequel si la nouvelle valeur de données remplace une valeur de données périmée, les identifiants d'ensemble de données de l'union sont réduits par les identifiants d'ensemble de données dans la liste négative attribuée à cette valeur de recherche et à son champ, et l'utilisation de l'union d'identifiants d'ensemble de données pour les étapes ii à iv ;
dans lequel le procédé comprend en outre :
- à un second moment, appelé « nouveau moment de consolidation », la consolidation des changements ordonnés depuis le moment de consolidation le plus récent en consolidant les listes de valeurs de données spécifiques à un champ indépendamment de et/ou parallèlement à l'exécution d'interrogations de base de données sur les listes de valeurs de données spécifiques à un champ; ou
- à un second moment, appelé « nouveau moment de consolidation », la consolidation des changements ordonnés depuis le moment de consolidation le plus récent en générant les copies consolidées (228) des listes de valeurs de données spécifiques à un champ indépendamment de et/ou parallèlement à l'exécution d'interrogations de base de données sur les listes de valeurs de données spécifiques à un champ.

2. Procédé mis en oeuvre par ordinateur selon la revendication 1,
- dans lequel exactement une entrée dans la table d'attribution d'adresse correspond à chacun des ensembles de données logiques ; et/ou
- dans lequel le procédé comprend en outre une gestion coordonnée des ensembles de données logiques et des entrées dans la table d'attribution d'adresse par le système DVS de sorte que les ensembles de données logiques soient toujours générés et synchronisés avec la table d'attribution d'adresse de sorte que l'identifiant de chaque ensemble de données logique spécifie explicitement ou implicitement l'adresse de stockage de l'entrée dans la table d'attribution d'adresse dans laquelle l'identifiant de cet ensemble de données logique est attribué à l'adresse de l'entrée AOD avec les changements les plus récents de cet ensemble de données ; et en particulier dans lequel, à l'étape ii), l'adresse de stockage spécifiée dans l'identifiant d'ensemble de données est utilisée pour accéder directement aux entrées de la table d'attribution d'adresse qui sont attribuées de manière unique aux ensembles de données déterminés en i).

3. Procédé mis en oeuvre par ordinateur selon l'une quelconque des revendications 1 à 2,
- dans lequel la structure de données contient un agencement trié d'éléments pouvant être recherchés, dans lequel l'agencement est une liste d'éléments de liste ou un arbre de recherche, en particulier un arbre B, de noeuds,
- dans lequel l'agencement représente respectivement l'un des champs,
- dans lequel les éléments de l'agencement représentent respectivement une valeur de données d'une liste non redondante (116) de valeurs de données contenues dans les ensembles de données (214) et attribuées au champ représenté par l'agencement ; et
- dans lequel chacun des éléments de l'agencement est stocké de manière associée à une liste positive vide ou non vide et/ou à une liste négative vide ou non vide.

4. Procédé mis en oeuvre par ordinateur selon l'une quelconque des revendications précédentes,
- dans lequel les listes de valeurs de données spécifiques à un champ (116) sont respectivement les listes de valeurs de données non redondantes sélectives attribuées au champ représentant cette liste de valeurs de données spécifiques au champ dans les ensembles de données logiques,
- dans lequel chaque valeur de données est unique dans la liste de valeurs de données spécifiques au champ respective et est stockée de manière associée aux identifiants d'ensemble de données de tous les ensembles de données logiques contenant cette valeur de données dans le champ représenté par la liste de valeurs de données spécifiques au champ,
- dans lequel les valeurs de données sont stockées de préférence sous forme triée dans les listes de valeurs de données spécifiques à un champ.

5. Procédé mis en oeuvre par ordinateur selon l'une quelconque des revendications précédentes, dans lequel la consolidation comprend :
- au second moment, la réception d'une commande pour consolider les changements ordonnés depuis le moment de consolidation le plus récent ;
- en réponse à la réception de la commande :
• la mise en oeuvre des changements ordonnés entre le moment de consolidation le plus récent et le second moment dans les listes de valeurs de données spécifiques à un champ ou leurs copies pour générer les listes de valeurs de données spécifiques au champ consolidées (228) de telle sorte que chaque valeur de données dans chacune des listes de valeurs de données spécifiques au champ consolidées ne soit attribuée qu'aux identifiants de l'ensemble de données logiques contenant cette valeur de données même après prise en compte des changements ordonnés entre le premier et le second moment dans ce champ ;
• l'utilisation des listes de valeurs de données spécifiques au champ consolidées à la place des listes de valeurs de données spécifiques au champ précédemment utilisées (216) pour effectuer les recherches de base de données après le second moment ;
• l'utilisation du second moment comme nouveau moment de consolidation le plus récent.

6. Procédé mis en oeuvre par ordinateur selon la revendication 5, comprenant en outre, en réponse à la réception de la commande et après la génération des listes de valeurs de données spécifiques au champ consolidées :
- la nouvelle génération de l'au moins une structure de données (216) sur la base des listes de valeurs de données spécifiques au champ consolidées, dans lequel la nouvelle génération de la structure de données comprend un vidage des listes positives et/ou des listes négatives;
dans lequel de préférence la mise en oeuvre des changements ordonnés entre le moment de consolidation le plus récent et le second moment au cours de la consolidation comprend une détermination des changements ordonnés entre le moment de consolidation le plus récent et le second moment par analyse des listes positives et des listes négatives de toutes les valeurs de données dans toutes les listes de valeurs de données spécifiques au champ concernées par les changements.

7. Procédé mis en oeuvre par ordinateur selon l'une quelconque des revendications précédentes,
- dans lequel les entrées AOD sont stockées sous forme d'éléments d'une chaîne de blocs dans la structure de données en ajout seul, qui sont liés les uns aux autres par le biais d'une valeur de hachage cryptographique, et
- dans lequel l'exécution de la recherche de base de données comprend un contrôle de validité des valeurs de hachage des entrées AOD qui sont traitées au cours de l'interrogation de base de données.

8. Support de stockage volatil ou non volatil sur lequel sont stockées des instructions lisibles par ordinateur, dans lequel les instructions sont configurées pour amener un processeur à exécuter un procédé pour effectuer une interrogation de base de données dans une base de données selon l'une quelconque des revendications précédentes.

9. Structures de données comprenant :
- une pluralité de listes de valeurs de données non redondantes spécifiques à un champ (116) dans lesquelles les ensembles de données logiques sont stockés de manière répartie, dans lequel chaque ensemble de données comprend un identifiant d'ensemble de données ainsi qu'une ou plusieurs paires d'identifiants de champ et de valeurs de données, dans lequel à chaque champ correspond l'une des listes de valeurs de données dans laquelle chaque valeur de données de ce champ n'apparaît qu'une fois, dans lequel de préférence chaque liste de valeurs de données spécifiques à un champ est une liste triée sans redondance exclusivement des valeurs de données attribuées à l'un des champs représentés par la liste dans les ensembles de données logiques, dans lequel chaque valeur de données est stockée dans les listes spécifiques au champ de manière associée à l'identifiant de tous les ensembles de données contenant cette valeur de données dans ce champ ;
- une structure de données en ajout seul (202) qui comprend des instructions pour modifier les valeurs de données des champs des ensembles de données, dans lequel chaque entrée dans la structure de données en ajout seul, appelée ici entrée AOD, comprend au moins celles des paires d'identifiants de champ et de valeurs de données de l'un des ensembles de données qui doivent être modifiées selon l'une des instructions de modification,
dans lequel la structure de données en ajout seul est une structure de données qui permet une détermination de la valeur de données actuelle pour tous les champs des ensembles de données par le biais d'un suivi d'adresses de saut à l'intérieur d' entrées AOD, dans lequel la structure de données en ajout seul est une structure de données étendue en continu et non vidée par le biais de plusieurs consolidations,
dans lequel les entrées AOD comprennent des adresses de saut qui font référence à l'entrée AOD immédiatement précédente du même ensemble de données pour permettre, par le biais des adresses respectives spécifiées dans les entrées AOD, un « saut » d'une entrée AOD à une entrée AOD pour reconstruire toutes les modifications concernant un ensemble de données particulier en recherchant la séquence de toutes les entrées AOD concernant cet ensemble de données jusqu'au tout premier élément AOD dans la structure de données en ajout seul concernant cet ensemble de données ou jusqu'à ce qu'une entrée AOD complète pour cet ensemble de données ait été atteinte ;
dans lequel la structure de données en ajout seul est constituée d'une partie statique qui comprend les instructions de modification et des entrées AOD qui ont déjà été consolidées, c'est-à-dire qui ont été persistées dans les listes spécifiques à un champ, et d'une partie dynamique, dans lequel la partie dynamique comprend les modifications qui n'ont pas encore été consolidées au moment de consolidation le plus récent, c'est-à-dire qui n'ont pas encore été persistées dans les listes de valeurs de données ;
- une table d'attribution d'adresse (226), dans lequel la table d'attribution d'adresse contient, pour chacun des ensembles de données logiques, exactement une entrée avec l'identifiant de cet ensemble de données, et dans lequel l'identifiant de chacun des ensembles de données logiques est stocké de manière associée dans la table d'attribution d'adresse à exactement une adresse d'une entrée AOD, et dans lequel la table d'attribution d'adresse attribue à l'identifiant de chacun des ensembles de données pour lesquels une entrée AOD avec les instructions de modification est stockée dans la structure de données en ajout seul, l'adresse (206, 208) de la plus récente des entrées AOD stockées qui spécifie une modification de cet ensemble de données ;
dans lequel les structures de données comprennent en outre en particulier :
- au moins une structure de données (216),
• dans lequel la structure de données (216) contient un agencement trié d'éléments pouvant être recherchés, dans lequel l'agencement est une liste d'éléments de liste ou un arbre de recherche, en particulier un arbre B, de noeuds,
• dans lequel l'agencement représente respectivement l'un des champs,
• dans lequel les éléments de l'agencement représentent respectivement une valeur de données d'une liste non redondante (116) de valeurs de données contenues dans les ensembles de données (214) et attribuées au champ représenté par l'agencement ; et
• dans lequel chacun des éléments de l'agencement est stocké de manière associée à une liste positive vide ou non vide et/ou à une liste négative vide ou non vide ; et/ou
- des listes non redondantes de valeurs de données d'origine obtenues à partir de données brutes dans lesquelles les ensembles de données logiques ont été stockés ; et/ou
- une table de mappage (210),
• dans lequel la table de mappage attribue à chacune des valeurs de données d'origine au moins un identifiant de mappage qui n'est pas attribué à une autre des valeurs de données d'origine ;
• dans lequel les valeurs de données des ensembles de données sont les identifiants de mappage ;
• au moins une liste d'identifiants d'ensemble de données appelée liste négative (220), dans lequel la liste négative contient des identifiants d'ensemble de données d'ensembles de données pour lesquels une instruction pour modifier ou supprimer une valeur de données périmée d'un champ dans au moins l'un des ensembles de données logiques a été reçue, dans lequel la liste négative est associée à l'identifiant de champ du champ et est stockée dans une structure de données (216) associée à la valeur de données à modifier ou supprimer conformément à la demande de modification ;
• au moins une liste d'identifiants d'ensemble de données appelée liste positive, dans lequel la liste positive contient des identifiants d'ensemble de données d'ensembles de données pour lesquels une instruction pour attribuer une nouvelle valeur de données à un champ de ces ensembles de données a été reçue, dans lequel la liste positive est stockée dans une structure de données (216) associée à l'identifiant de champ du champ et associée à la nouvelle valeur de données.

10. Système informatique (100, 500) comprenant:
- au moins un processeur (108) ;
- une mémoire de données comprenant une base de données (104), dans lequel la base de données comprend, à un premier moment, appelé « moment de consolidation le plus récent », une pluralité d'ensembles de données logiques, chaque ensemble de données comprenant un identifiant d'ensemble de données ainsi qu'une ou plusieurs paires d'identifiants de champ et de valeurs de données, dans lequel les ensembles de données sont stockés physiquement sous la forme de listes de valeurs de données non redondantes spécifiques à un champ (116) de telle sorte qu'à chaque champ correspond l'une des listes de valeurs de données dans laquelle chaque valeur de données de ce champ n'apparaît qu'une fois ;
- un système de traitement de données et de recherche, DVS, (102), dans lequel le système DVS est configuré pour gérer la base de données (104), dans lequel la gestion comprend, après le moment de consolidation le plus récent :
- la réception d'instructions pour modifier les valeurs de données de champs d'une pluralité des ensembles de données ;
- le stockage (604) des instructions dans une structure de données en ajout seul (202) sans effectuer les modifications sur les listes de valeurs de données spécifiques à un champ (116), dans lequel chaque entrée dans la structure de données en ajout seul, appelée ici entrée AOD, comprend au moins celles des paires d'identifiants de champ et de valeurs de données de l'un des ensembles de données qui doivent être modifiées selon l'une des instructions de modification, dans lequel la structure de données en ajout seul est une structure de données qui permet une détermination de la valeur de données actuelle pour tous les champs des ensembles de données par le biais d'un suivi d'adresses de saut dans des entrées AOD, dans lequel la structure de données en ajout seul est étendue en continu et n'est pas vidée au cours d'une consolidation, dans lequel la structure de données en ajout seul est constituée d'une partie statique qui comprend les instructions de modification et des entrées AOD qui ont déjà été consolidées, c'est-à-dire qui ont été persistées dans les listes spécifiques à un champ, et d'une partie dynamique, dans lequel la partie dynamique comprend les modifications qui n'ont pas encore été consolidées au moment de consolidation le plus récent, c'est-à-dire qui n'ont pas encore été persistées dans les listes de valeurs de données ;
- pour chacun des ensembles de données pour lesquels la base de données reçoit, après le moment de consolidation le plus récent, une ou plusieurs instructions pour modifier les valeurs de données, le stockage (606) de l'adresse (206, 208) de la plus récente des entrées AOD stockées qui spécifie une modification de cet ensemble de données, en association avec l'identifiant d'ensemble de données de cet ensemble de données, dans une table d'attribution d'adresse (226), dans lequel les associations dans la table d'attribution d'adresse sont automatiquement mises à jour ; et
- l'exécution (610) d'une interrogation de base de données, dans lequel l'interrogation de base de données comprend :
i. la recherche (612) dans les listes de valeurs de données spécifiques à un champ pour identifier des identifiants des ensembles de données (214) dont le contenu doit être renvoyé en totalité ou en partie en raison d'une correspondance avec une ou plusieurs valeurs de recherche spécifiques à un champ ;
ii. l'évaluation (614) de la table d'attribution d'adresse pour identifier les adresses d'entrées AOD attribuées à l'un des identifiants d'ensemble de données identifiés en i),
iii. l'accès (616) aux adresses identifiées des entrées AOD; et
iv. l'utilisation (618) des indications de modification contenues dans ces entrées AOD identifiées pour compléter et délivrer en sortie les identifiants d'ensemble de données déterminés à l'étape i) par les paires d'identifiants de champ et de valeurs de données, dans lequel l'utilisation comprend le suivi d'adresses de saut à l'intérieur des entrées AOD qui font référence à l'entrée AOD immédiatement précédente du même ensemble de données pour reconstruire ainsi toutes les modifications concernant cet ensemble de données particulier dans lequel cela est effectué jusqu'à ce que la séquence de toutes les entrées AOD concernant cet ensemble de données ait été recherchée jusqu'au tout premier élément AOD dans la structure de données en ajout seul concernant cet ensemble de données ou jusqu'à ce qu'une entrée AOD complète pour cet ensemble de données ait été atteinte,
dans lequel au moins l'une des instructions de modification est une instruction pour modifier ou supprimer une valeur de données périmée d'un champ dans au moins l'un des ensembles de données logiques, dans lequel le système DVS est configuré pour stocker l'identifiant d'ensemble de données de l'au moins un ensemble de données dans une liste d'identifiants d'ensemble de données appelée liste négative (220), dans lequel la liste négative est associée à l'identifiant de champ du champ et est stockée dans une structure de données (216) associée à la valeur de données à modifier ou supprimer conformément à la demande de modification ; et dans lequel l'exécution de l'interrogation de base de données comprend, pour chacune des valeurs de recherche spécifiques à un champ :
la vérification si la structure de données contient une liste négative stockée associée à une valeur de données et à un identifiant de champ qui sont identiques à la valeur de recherche spécifique à un champ et à l'identifiant de champ de la valeur de recherche ; si c'est le cas, le calcul d'un ensemble de différences entre tous les identifiants d'ensemble de données déterminés à l'étape i) pour cette valeur de recherche spécifique à un champ et les identifiants d'ensemble de données dans la liste négative; et l'utilisation de l'ensemble de différences d'identifiants d'ensemble de données pour les étapes ii à iv ;
dans lequel au moins l'une des instructions de modification est une instruction pour attribuer une nouvelle valeur de données à un champ dans au moins l'un des ensembles de données, dans lequel le système DVS est en outre configuré pour :
- le stockage de l'identifiant d'ensemble de données de l'au moins un ensemble de données dans une liste d'identifiants d'ensemble de données appelée liste positive, dans lequel la liste positive est stockée dans une structure de données (216) associée à l'identifiant de champ du champ et associée à la nouvelle valeur de données ;
- si la nouvelle valeur de données remplace une valeur de données périmée, le stockage de l'identifiant d'ensemble de données de l'au moins un ensemble de données dans une liste d'identifiants d'ensemble de données appelée liste négative (220), dans lequel la liste négative est stockée associée à l'identifiant de champ du champ et associée à la valeur de données périmée;
- dans lequel l'exécution de l'interrogation de base de données comprend, pour chacune des valeurs de recherche spécifiques à un champ :
• la vérification si la structure de données contient une liste positive stockée associée à une valeur de données et à un identifiant de champ qui sont identiques à la valeur de recherche spécifique à un champ et à l'identifiant de champ de la valeur de recherche ; si c'est le cas, le calcul d'une union de tous les identifiants d'ensemble de données déterminés à l'étape i) pour cette valeur de recherche spécifique à un champ et les identifiants d'ensemble de données dans la liste positive, dans lequel si la nouvelle valeur de données remplace une valeur de données périmée, les identifiants d'ensemble de données de l'union sont réduits par les identifiants d'ensemble de données dans la liste négative attribuée à cette valeur de recherche et à son champ, et l'utilisation de l'union d'identifiants d'ensemble de données pour les étapes ii à iv ;
dans lequel le système DVS est en outre configuré pour :
- à un second moment, appelé « nouveau moment de consolidation», la consolidation des changements ordonnés depuis le moment de consolidation le plus récent en consolidant les listes de valeurs de données spécifiques à un champ indépendamment de et/ou parallèlement à l'exécution d'interrogations de base de données sur les listes de valeurs de données spécifiques à un champ; ou
- à un second moment, appelé « nouveau moment de consolidation», la consolidation des changements ordonnés depuis le moment de consolidation le plus récent en générant les copies consolidées (228) des listes de valeurs de données spécifiques à un champ indépendamment de et/ou parallèlement à l'exécution d'interrogations de base de données sur les listes de valeurs de données spécifiques à un champ.
